(19) **Europäisches Patentamt**
**European Patent Office**
**Office européen des brevets**

(11) **EP 4 729 493 A1**

(12) **EUROPEAN PATENT APPLICATION**
published in accordance with Art. 153(4) EPC

(43) Date of publication:
**22.04.2026 Bulletin 2026/17**

(21) Application number: **24823200.1**

(22) Date of filing: **23.05.2024**

(51) International Patent Classification (IPC):
$C03C\ 3/097$ (2006.01)    $C03C\ 3/083$ (2006.01)
$C03C\ 3/091$ (2006.01)    $F24C\ 15/10$ (2006.01)
$H05B\ 6/12$ (2006.01)

(52) Cooperative Patent Classification (CPC):
**C03C 3/083; C03C 3/091; C03C 3/097;**
**F24C 15/10; H05B 6/12**

(86) International application number:
**PCT/JP2024/019059**

(87) International publication number:
**WO 2024/257578 (19.12.2024 Gazette 2024/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **16.06.2023 JP 2023098853**
**06.11.2023 JP 2023189539**

(71) Applicant: **Nippon Electric Glass Co., Ltd.**
**Otsu-shi, Shiga 520-8639 (JP)**

(72) Inventors:
• **WAKAI Yutaro**
**Otsu-shi Shiga 520-8639 (JP)**
• **YOKOTA Yuki**
**Otsu-shi Shiga 520-8639 (JP)**
• **TAKAHASHI Takahiro**
**Otsu-shi Shiga 520-8639 (JP)**

(74) Representative: **Tetzner, Michael**
**Tetzner & Partner mbB**
**Patent- und Rechtsanwälte**
**Van-Gogh-Strasse 3**
**81479 München (DE)**

(54) **GLASS AND METHOD FOR PRODUCING SAME**

(57)    Provided is a glass having a low coefficient of linear thermal expansion and excellent transmittancy as an alternative to a $Li_2O$-$Al_2O_3$-$SiO_2$-based crystallized glass. The glass contains, in terms of % by mass, 45 to 80% $SiO_2$, 10 to 30% $Al_2O_3$, 0 to 12% $B_2O_3$, and 0 to 5% $Li_2O$.

**EP 4 729 493 A1**

**Description**

[Technical Field]

The present invention relates to glasses having low linear thermal expansion characteristics.

[Background Art]

Conventionally, a crystallized glass is used as a material for front windows of oil stoves, wood stoves and the like, setters for firing electronic components, furnace core tubes for producing semiconductors, dimension measurement members, communication members, construction members, chemical reaction containers, electromagnetic cooker top plates, heat-resistant plates and utensils, heat-resistant covers, fireproof door windows, members for astrometric telescopes, linear thermal expansion coefficient adjusting members, and so on. For example, Patent Literatures 1 to 3 disclose crystallized glasses in which $Li_2O$-$Al_2O_3$-$SiO_2$-based crystals, such as a β-quartz solid solution ($Li_2O \cdot Al_2O_3 \cdot n$-$SiO_2$ [where $2 \leq n \leq 4$]) or a β-spodumene solid solution ($Li_2O \cdot Al_2O_3 \cdot nSiO_2$ [where $n \geq 4$]) precipitate as a major crystalline phase.

These crystallized glasses have a low coefficient of linear thermal expansion and high mechanical strength and therefore have excellent thermal characteristics. In addition, the type of crystals to be precipitated therein can be controlled by appropriately adjusting heat treatment conditions in a crystallization process and, thus, a crystallized glass having high transmittancy can be easily produced.

[Citation List]

[Patent Literature]

[PTL 1]
JP-B-S39-21049
[PTL 2]
JP-B-S40-20182
[PTL 3]
JP-A-H01-308845

[Summary of Invention]

[Technical Problem]

Recently, with increasing demand for electric vehicles and electronic devices, such as smartphones and tablets, the markets for lithium-ion batteries have expanded. Therefore, various industries are short of lithium raw materials, which has invited a global rise in the prices of the lithium raw materials. Thus, it is becoming difficult to stably produce a $Li_2O$-$Al_2O_3$-$SiO_2$-based crystallized glass and stably supply it to the markets.

Against this background, a material having a low coefficient of linear thermal expansion and excellent transmittancy is being demanded as an alternative to a $Li_2O$-$Al_2O_3$-$SiO_2$-based crystallized glass.

An object of the present invention is to provide a glass having a low coefficient of linear thermal expansion and excellent transmittancy as an alternative to a $Li_2O$-$Al_2O_3$-$SiO_2$-based crystallized glass.

[Solution to Problem]

The inventors conducted intensive studies and, as a result, found that a glass having a low coefficient of linear thermal expansion and excellent transmittancy can be obtained by appropriately designing glass composition. The term "transmittancy" means that the glass has a transmittance (total light transmittance) of more than 0% at a thickness of 4 mm and a wavelength of any one of 1200 nm, 800 nm, 555 nm, 380 nm, and 300 nm.

A glass according to the present invention contains, in terms of % by mass, 45 to 80% $SiO_2$, 10 to 30% $Al_2O_3$, 0 to 12% $B_2O_3$, and 0 to 5% $Li_2O$.

The glass according to the present invention preferably contains, in terms of % by mass, more than 0% $P_2O_5$.

The glass according to the present invention preferably contains, in terms of % by mass, more than 0% $TiO_2$.

The glass according to the present invention preferably contains, in terms of % by mass, over 0 to 8% $B_2O_3$, 0 to

3% $Li_2O$, and 6.5 to 20% $P_2O_5$.

The glass according to the present invention preferably contains, in terms of % by mass, more than 0% $Fe_2O_3$.

The glass according to the present invention preferably contains, in terms of % by mass, not more than 10% $HfO_2$.

The glass according to the present invention preferably contains, in terms of % by mass, not more than 0.05% Pt and not more than 0.05% Rh.

The glass according to the present invention preferably contains, in terms of % by mass, more than 0% $SnO_2$.

The glass according to the present invention preferably contains, in terms of % by mass, not more than 12.5% ZnO.

The glass according to the present invention preferably contains, in terms of % by mass, not more than 15% $Li_2O+Na_2O+K_2O$.

The glass according to the present invention preferably contains, in terms of % by mass, more than 0% $ZrO_2$.

In the glass according to the present invention, $(P_2O_5 \times TiO_2)/(Al_2O_3+P_2O_5)$ is, in terms of % by mass, preferably not less than 0.01.

In the glass according to the present invention, $P_2O_5 \times TiO_2$ is, in terms of % by mass, preferably not less than 0.22.

In the glass according to the present invention, in terms of % by mass, $MgO+CaO+SrO+BaO$ is preferably not more than 5.9%, $Li_2O+Na_2O+K_2O$ is preferably not more than 2.6%, and $P_2O_5 \times TiO_2$ is preferably not less than 0.01.

The glass according to the present invention preferably has a coefficient of linear thermal expansion of not more than $60 \times 10^{-7}/°C$ at 30 to 750°C.

The glass according to the present invention preferably has a transmittance of not less than 0.1% at a thickness of 4mm and a wavelength of 555 nm.

The glass according to the present invention is preferably used for a cooker top plate, a fireproof window, a heat-resistant plate or utensil or a construction member.

A glass according to the present invention contains, in terms of % by mass, 45 to 80% $SiO_2$, 10 to 30% $Al_2O_3$, 0 to 12% $B_2O_3$, over 0 to 20% $P_2O_5$, 0 to 5% $MgO+CaO+SrO+BaO$, and 0 to 5% $Li_2O+Na_2O+K_2O$, has a ratio $(P_2O_3 \times TiO_2)/(Al_2O_3+P_2O_5)$ of not less than 1.4, and has a coefficient of linear thermal expansion of not more than $40 \times 10^{-7}/°C$ at 30 to 750°C.

A glass according to the present invention contains, in terms of % by mass, 45 to 80% $SiO_2$, 10 to 30% $Al_2O_3$, 0 to 12% $B_2O_3$, over 0 to 20% $P_2O_5$, not more than 5% $Li_2O$, over 0 to 20% $ZrO_2$, 0 to 8% $MgO+CaO+SrO+BaO$, and 0 to 2.9% $Li_2O+Na_2O+K_2O$, has a ratio $(MgO+CaO+SrO+BaO)/P_2O_5$ of not more than 3.8, and has a coefficient of linear thermal expansion of not more than $40 \times 10^{-7}/°C$ at 30 to 750°C.

A glass according to the present invention has a coefficient of linear thermal expansion of $5 \times 10^{-7}$ to $40 \times 10^{-7}/°C$ at 30 to 380°C and 30 to 750°C and a transmittance of not less than 0.1% at a thickness of 4mm and a wavelength of 555 nm.

A method for producing a glass according to the present invention is a method for producing any one of the above glasses and includes the steps of: melting a glass raw material to obtain a molten glass; and forming the molten glass into shape, wherein a method for forming the molten glass into shape is at least one selected from among an overflow process, a float process, a down-draw process, a slot down process, a redraw process, a containerless process, a blow process, a press forming process, a roll process, a bushing process, and a tube draw process.

[Advantageous Effects of Invention]

The present invention enables provision of a glass having excellent transmittancy and thermal characteristics as an alternative to a $Li_2O$-$Al_2O_3$-$SiO_2$-based crystallized glass.

[Description of Embodiments]

A glass according to the present invention (hereinafter, also referred to simply as a "glass") contains, in terms of % by mass, 45 to 80% $SiO_2$, 10 to 30% $Al_2O_3$, 0 to 12% $B_2O_3$, and 0 to 5% $Li_2O$. Reasons why the contents and characteristics of the components are limited as described will be described below. In the following description of the respective contents of components, "%" refers to "% by mass" unless otherwise stated.

$SiO_2$ is a component that forms part of a glass network. Furthermore, $SiO_2$ is also a component that can be particularly involved in the likelihood of phase separation. The content of $SiO_2$ is 45 to 80%, the lower limit thereof is preferably not less than 46%, more preferably not less than 47%, even more preferably not less than 48%, and particularly preferably not less than 49%, and the upper limit thereof is preferably not more than 79%, more preferably not more than 78%, even more preferably not more than 77%, and particularly preferably not more than 76%. If the content of $SiO_2$ is too small, the coefficient of linear thermal expansion tends to be high and, therefore, a glass having excellent thermal resistance and thermal shock resistance is difficult to obtain. In addition, the chemical durability tends to decrease. On the other hand, if the content of $SiO_2$ is too large, the homogeneity of glass melt is likely to decrease. In addition, scum having a large content of $SiO_2$ is likely to be produced on the surface of the glass melt, devitrified matter, such as cristobalite, is likely to precipitate from the scum, and, therefore, the production burden is likely to increase. Herein, scum refers to an unreacted substance or a floating substance on the surface of the glass melt in the melting furnace and a substance consisting primarily of cristobalite.

$Al_2O_3$ is a component that forms part of a glass network. Furthermore, $Al_2O_3$ is also a component that can be involved in the likelihood of phase separation or the like. The content of $Al_2O_3$ is 10 to 30%, the lower limit thereof is preferably not less than 11%, more preferably not less than 12%, even more preferably not less than 13%, still even more preferably not less than 14%, and particularly preferably not less than 15%, and the upper limit thereof is preferably not more than 29%, more preferably not more than 28%, even more preferably not more than 27%, and particularly preferably not more than 26%. If the content of $Al_2O_3$ is too small, the coefficient of linear thermal expansion tends to be high and, therefore, a glass having excellent thermal resistance and thermal shock resistance is difficult to obtain. In addition, the chemical durability is likely to decrease to alter the glass surface. As a result, the asperity condition of the surface deteriorates, which makes it difficult to obtain a glass having a desired transmittance. On the other hand, if the content of $Al_2O_3$ is too large, the homogeneity of glass melt is likely to decrease. In addition, mullite crystals or other crystals tend to precipitate to devitrify the glass and the glass becomes susceptible to breakage.

$B_2O_3$ is a component that decreases the viscosity of the glass to increase the meltability and formability of the glass. Furthermore, $B_2O_3$ is also a component that can be particularly involved in the likelihood of phase separation. In addition, $B_2O_3$ has the effect of decreasing the coefficient of linear thermal expansion to increase the thermal resistance and the thermal shock resistance. The content of $B_2O_3$ is 0 to 12%, the lower limit thereof is preferably more than 0%, more preferably not less than 0.5%, even more preferably not less than 1%, and particularly preferably not less than 1.5%, and the upper limit thereof is preferably not more than 11.5%, not more than 11%, not more than 10.5%, not more than 10%, not more than 9.5%, not more than 9%, not more than 8.5%, not more than 8%, not more than 7.85%, not more than 7.8%, not more than 7.7%, not more than 7.5%, not more than 7%, not more than 6.5%, not more than 6.4%, not more than 6.3%, not more than 6.2%, not more than 6.1%, not more than 6%, not more than 5.9%, not more than 5.8%, not more than 5.7%, not more than 5.6%, not more than 5.5%, not more than 5.4%, not more than 5.3%, not more than 5.2%, or not more than 5.1%, and particularly preferably not more than 5%. If the content of $B_2O_3$ is too large, the amount of $B_2O_3$ evaporated during melting becomes large and, thus, scum having a small content of $B_2O_3$ and a relatively large content of $SiO_2$ is likely to be produced on the surface of the glass melt. As a result, devitrified matter, such as cristobalite, is likely to precipitate from the scum, and, therefore, the production burden increases. Furthermore, the chemical durability of the glass is likely to decrease to alter the glass surface and, as a result, the asperity condition of the surface deteriorates, which makes it difficult to obtain a glass having a desired high transmittance. On the other hand, $B_2O_3$ is likely to be mixed as impurities into glass. Therefore, if complete removal of $B_2O_3$ is pursued, the raw material batch tends to be expensive to increase the production cost. In reducing the increase in production cost, $B_2O_3$ may be contained in the glass at a content of not less than 0.0001%, not less than 0.0003%, or particularly not less than 0.0005%.

$Li_2O$ is a component that decreases the viscosity of the glass to increase the meltability and formability of the glass. Furthermore, $Li_2O$ is also a component that can be involved in phase separation of the glass. The content of $Li_2O$ is 0 to 5% and the upper limit thereof is preferably not more than 4.5%, not more than 4%, not more than 3.5%, not more than 3%, not more than 2.5%, not more than 2%, not more than 1.9%, not more than 1.8%, not more than 1.5%, not more than 1%, not more than 0.9%, not more than 0.8%, not more than 0.7%, not more than 0.6%, not more than 0.5%, or not more than 0.4%, and particularly preferably not more than 0.3%. If the content of $Li_2O$ is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, $Li_2O$ is likely to be mixed as impurities into the glass. Therefore, if complete removal of $Li_2O$ is pursued, the raw material batch tends to be expensive to increase the production cost. Therefore, in reducing the increase in production cost, the lower limit of the content of $Li_2O$ is preferably more than 0%, not less than 0.0001%, not less than 0.0002%, not less than 0.0003%, not less than 0.0004%, or not less than 0.0005%, and particularly preferably not less than 0.001%.

The glass according to the present invention may contain, other than the above components, the following components.

$P_2O_5$ is a component that, in the glass according to the present invention, decreases the coefficient of linear thermal expansion of the glass. In addition, $P_2O_5$ is a component for controlling the refractive index. Furthermore, $P_2O_5$ is also a component that can be involved in phase separation of the glass. The content of $P_2O_5$ is preferably 0 to 30%. The lower limit of the content is preferably more than 0%, not less than 0.1%, not less than 1%, not less than 2%, not less than 3%, not less than 4%, or not less than 4.5%, and particularly preferably not less than 6.5%, and the upper limit thereof is preferably not more than 25%, not more than 20%, not more than 18%, or not more than 17%, and particularly preferably not more than 16%. If the content of $P_2O_5$ is too large, the glass viscosity becomes excessively high and, thus, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired transmittance. In addition, the devitrification resistance is likely to decrease.

Although $P_2O_5$ is a component that, in the glass according to the present invention, decreases the coefficient of linear thermal expansion of the glass, if the content of $P_2O_5$ is too large, the viscosity of the glass becomes high and the meltability of the glass is likely to decrease. On the other hand, $B_2O_3$ is a component that can decrease the viscosity of the glass. If the viscosity of the glass is too high, higher temperature is required, for example, during melting or forming of the glass, which is more likely to decrease the productivity, such as more likely to burden the production facilities or more likely to increase the energy cost. Therefore, in order to decrease the viscosity of the glass while decreasing the coefficient of linear thermal expansion of the glass to obtain a glass having a good productivity, $B_2O_3/P_2O_5$ (the quotient of the content of $B_2O_3$ by the content of $P_2O_5$) is preferably strictly controlled. $B_2O_3/P_2O_5$ is preferably not less than 0, not less than 0.01, not less than 0.1, or not less than 0.2, particularly preferably not less than 0.3, preferably not more than 550, not more than 300, not more than 100, not more than 50, or not more than 10, and particularly preferably not more than 1.

$TiO_2$ is a component that, when contained in an appropriate amount into the composition, decreases the viscosity of the glass to increase the meltability and formability of the glass. In addition, $TiO_2$ is a component that decreases the coefficient of linear thermal expansion of the glass. Furthermore, $TiO_2$ is also a coloring component of the glass that absorbs light of various wavelengths. Particularly, it is known that in the case where titanium and iron coexist, coloration like ilmenite ($FeTiO_3$) may develop and that in the case where titanium and tin coexist, the yellowish color is intensified. Furthermore, $TiO_2$ is also a component that can be particularly involved in the likelihood of phase separation. The content of $TiO_2$ is preferably not less than 0%, more than 0%, not less than 0.001%, not less than 0.01%, not less than 0.1%, not less than 1%, not less than 2%, not less than 3%, not less than 4%, or not less than 5%, particularly preferably not less than 6%, preferably not more than 20%, not more than 18%, not more than 16%, or not more than 14%, and particularly preferably not more than 12%. When the content of $TiO_2$ exceeds 0%, the coefficient of linear thermal expansion is likely to decrease. If the content of $TiO_2$ is too large, the meltability of the glass is likely to decrease. In addition, the glass is likely to be colored, which makes it difficult to obtain a glass having a desired high transmittance. Therefore, for example, in obtaining a glass having an appearance with a high degree of clear and colorless, the content of $TiO_2$ may be not more than 3%, not more than 2% or not more than 1%.

In the glass according to the present invention, $P_2O_5$ is a component that can decrease the coefficient of linear thermal expansion of the glass and its effect tends to be higher than $TiO_2$. However, in terms of the viscosity of the glass, $P_2O_5$ is a component likely to contribute to increasing it and $TiO_2$ is a component likely to contribute to decreasing it. Therefore, in order to appropriately reduce the increase in the viscosity of the glass while decreasing the coefficient of linear thermal expansion of the glass to obtain a glass having a good productivity, $P_2O_5 \times TiO_2$ (the product of the content of $P_2O_5$ by the content of $TiO_2$) is preferably strictly controlled. $P_2O_5 \times TiO_2$ is preferably not less than 0, more than 0, not less than 0.00002, not less than 0.0001, not less than 0.001, not less than 0.01, not less than 0.1, not less than 0.22, not less than 0.23, not less than 0.25, not less than 1, not less than 3, not less than 5, not less than 7, not less than 10, particularly preferably not less than 15, preferably not more than 900, not more than 500, not more than 300, not more than 150, not more than 100, or not more than 80, and particularly preferably not more than 60. If $P_2O_5 \times TiO_2$ is too large, the viscosity of the glass is likely to be high and, therefore, the productivity deteriorates. In order to obtain a glass having a low coefficient of linear thermal expansion, $P_2O_5 \times TiO_2$ is preferably more than 0%.

$P_2O_5$ and $TiO_2$ are components that each decrease the coefficient of linear thermal expansion, $P_2O_5$ contributes to increasing the viscosity of the glass, and $TiO_2$ contributes to decreasing the viscosity of the glass. $Al_2O_3$ is a component that forms part of the glass network and contributes to decreasing the linear expansion coefficient of the glass. However, if the content $Al_2O_3$ is too large relative to the contents of $P_2O_5$ and $TiO_2$, this decreases the viscosity of the glass, increases the liquidus temperature, and therefore deteriorates productivity. Hence, in order to obtain a glass having a low linear expansion coefficient and high productivity, $(P_2O_5 \times TiO_2)/(Al_2O_3 + P_2O_5)$ (i.e., the ratio of the product of the content of $P_2O_5$ by the content of $TiO_2$ to the sum of the content of $Al_2O_3$ and the content of $P_2O_5$) is preferably not less than 0, more than 0, not less than 0.000001, not less than 0.000002, not less than 0.0000016, not less than 0.00001, not less than 0.0001, not less than 0.001, not less than 0.01, not less than 0.1, not less than 1.0, not less than 1.2, not less than 1.4, not less than 1.5, or not less than 1.7, particularly not less than 1.9, preferably not more than 10, more preferably not more than 5, and particularly preferably not more than 4.

$Fe_2O_3$ is a component that, when contained in an appropriate amount into the composition, decreases the viscosity of the glass to increase the meltability and formability of the glass. Furthermore, $Fe_2O_3$ is a component that releases an oxygen-based gas by redox reaction and also a component that can be involved in the clarity of the glass. In addition, $Fe_2O_3$ is a coloring component of the glass that absorbs light of various wavelengths and is also a component that can be involved in phase separation of the glass. The content of $Fe_2O_3$ is preferably not less than 0%, more than 0%, not less than 0.0001%, not less than 0.001%, or not less than 0.005%, and particularly preferably not less than 0.01%. On the other hand, if the content of $Fe_2O_3$ is too large, the glass is likely to be colored, which makes it difficult to obtain a glass having a desired high transmittance. Furthermore, devitrified matter containing Fe is likely to precipitate and, thus, the production burden is likely to increase. Therefore, the content of $Fe_2O_3$ is preferably not more than 20%, not more than 15%, not more than 10%, not more than 5%, not more than 1%, or not more than 0.5%, and particularly preferably not more than 0.1%. In accordance with the application of the glass according to the present invention, the content of $Fe_2O_3$ may be controlled to adjust the transmittance. For example, in the case where a colored (for example, black) appearance is required for a cooker top plate or the like, the content of $Fe_2O_3$ may be not less than 0.05%, not less than 0.08%, not less than 0.1%, not less than 0.2%, or particularly not less than 0.3%.

$Na_2O$ is a component that decreases the viscosity of the glass to increase the meltability and formability of the glass. Furthermore, $Na_2O$ is a component for controlling the coefficient of linear thermal expansion and refractive index of the glass and is also a component that can be involved in phase separation of the glass. The content of $Na_2O$ is preferably not more than 15%, not more than 10%, not more than 7%, not more than 5%, not more than 4.5%, not more than 4%, not more than 3.5%, not more than 3%, not more than 2.5%, not more than 2%, not more than 1%, not more than 0.7%, not more than 0.4%, or not more than 0.1%, and particularly preferably not more than 0.05%. If the content of $Na_2O$ is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, $Na_2O$ is likely to be mixed as impurities into the glass. Therefore, if complete removal of $Na_2O$ is pursued, the raw material batch tends to be expensive to increase the production cost. In reducing the increase in production cost, the lower limit of the content of $Na_2O$ is preferably more than 0%, not less than 0.0001%, not less than 0.0003%, not less than 0.0005%, not less than 0.001%, not less than 0.002%, not less than 0.004%, not less than 0.006%, or not less than 0.008%, and particularly preferably not less than 0.01%.

$K_2O$ is a component that decreases the viscosity of the glass to increase the meltability and formability of the glass. Furthermore, $K_2O$ is a component for controlling the coefficient of linear thermal expansion and refractive index of the glass and is also a component that can be involved in phase separation of the glass. The content of $K_2O$ is preferably not more than 15%, not more than 10%, not more than 7%, not more than 5%, not more than 4.5%, not more than 4%, not more than 3.5%, not more than 3%, not more than 2.5%, not more than 2%, not more than 1%, not more than 0.7%, not more than 0.4%, or not more than 0.1%, and particularly preferably not more than 0.05%. If the content of $K_2O$ is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, $K_2O$ is likely to be mixed as impurities into the glass. Therefore, if complete removal of $K_2O$ is pursued, the raw material batch tends to be expensive to increase the production cost. In reducing the increase in production cost, the lower limit of the content of $K_2O$ is preferably more than 0%, more preferably not less than 0.0001%, even more preferably not less than 0.0003%, still even more preferably not less than 0.0005%, and particularly preferably not less than 0.001%.

Each of $Li_2O$, $Na_2O$, and $K_2O$ is a component that decreases the viscosity of the glass to increase the meltability and formability of the glass. Furthermore, these components are also components that can be involved in phase separation of the glass. $Li_2O+Na_2O+K_2O$ (the total content of $Li_2O$, $Na_2O$, and $K_2O$) is preferably not more than 15%, not more than 10%, not more than 7%, not more than 5%, not more than 4.5%, not more than 4%, not more than 3.5%, not more than 3%, not more than 2.9%, not more than 2.8%, not more than 2.7%, not more than 2.6%, not more than 2.5%, not more than 2.4%, not more than 2.3%, not more than 2.2%, not more than 2.1%, not more than 2%, not more than 1.9%, not more than 1.8%, not more than 1.7%, not more than 1.6%, not more than 1.5%, not more than 1.4%, not more than 1.3%, not more than 1.2%, not more than 1.1%, not more than 1%, not more than 0.9%, not more than 0.8%, not more than 0.7%, not more than 0.6%, not more than 0.5%, not more than 0.4%, not more than 0.3%, not more than 0.2%, or not more than 0.1%, and particularly preferably not more than 0.05%. If $Li_2O+Na_2O+K_2O$ is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, $Li_2O$, $Na_2O$, and $K_2O$ are likely to be mixed as impurities into the glass. Therefore, if complete removal of these components is pursued, the raw material batch tends to be expensive to increase the production cost. In reducing the increase in production cost, the lower limit of the content of $Li_2O+Na_2O+K_2O$ is preferably more than 0%, more preferably not less than 0.0001%, even more preferably not less than 0.001%, and particularly preferably not less than 0.01%.

MgO is a component that decreases the viscosity of the glass to increase the meltability and formability of the glass. In addition, MgO is also a component for decreasing the coefficient of linear thermal expansion of the glass to control the refractive index. Furthermore, MgO is also a component that can be involved in phase separation of the glass. The content of MgO is preferably not less than 0%, not less than 1%, not less than 2%, or not less than 3%, particularly preferably not less than 4%, preferably not more than 40%, not more than 30%, not more than 20%, not more than 18%, not more than 16%, not more than 14%, or not more than 12%, and particularly preferably not more than 6%. If the content of MgO is too large, the coefficient of linear thermal expansion conversely becomes excessively high and, therefore, a glass having excellent thermal resistance and thermal shock resistance is difficult to obtain. Furthermore, the chemical durability of the glass is likely to decrease to alter the glass surface. As a result, the asperity condition of the surface deteriorates, which makes it difficult to obtain a glass having a desired high transmittance. Meanwhile, MgO is likely to be mixed as impurities into the glass. Therefore, if complete removal of MgO is pursued, the raw material batch tends to be expensive to increase the production cost. In reducing the increase in production cost, the lower limit of the content of MgO is preferably not less than 0.0001%, more preferably not less than 0.001%, and particularly preferably not less than 0.01%.

CaO is a component that decreases the viscosity of the glass to increase the meltability and formability of the glass. Furthermore, CaO is also a component for controlling the coefficient of linear thermal expansion and refractive index of the glass. In addition, CaO is also a component that can be involved in phase separation of the glass. The content of CaO is preferably not less than 0%, not less than 1%, not less than 2%, or not less than 3%, particularly preferably not less than 4%, preferably not more than 30%, not more than 20%, not more than 18%, not more than 16%, not more than 14%, or not more than 12%, and particularly preferably not more than 6%. If the content of CaO is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, CaO is likely to be mixed as impurities into the glass. Therefore, if complete removal of CaO is pursued, the raw material batch tends to be expensive to increase the production cost. In reducing the increase in production cost, the lower limit of the content of CaO is preferably not less than 0.0001%, more preferably not less than 0.001%, and particularly preferably not less than 0.01%.

SrO is a component that decreases the viscosity of the glass to increase the meltability and formability of the glass. Furthermore, SrO is also a component for controlling the coefficient of linear thermal expansion and refractive index of the glass. In addition, SrO is also a component that can be involved in phase separation of the glass. The content of SrO is preferably not less than 0%, not less than 1%, not less than 2%, or not less than 3%, particularly preferably not less than 4%, preferably not more than 30%, not more than 20%, not more than 18%, not more than 16%, not more than 14%, or not more than 12%, and particularly preferably not more than 6%. If the content of SrO is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, SrO is likely to be mixed as impurities into the glass. Therefore, if complete removal of SrO is pursued, the raw material batch tends to be expensive to increase the production cost. In reducing the increase in production cost, the lower limit of the content of SrO is preferably not less than 0.0001%, more preferably not less than 0.001%, and particularly preferably not less than 0.01%.

BaO is a component that decreases the viscosity of the glass to increase the meltability and formability of the glass. Furthermore, BaO is also a component for controlling the coefficient of linear thermal expansion and refractive index of the glass. In addition, BaO is also a component that can be involved in phase separation of the glass. The content of BaO is preferably not less than 0%, not less than 1%, not less than 2%, or not less than 3%, particularly preferably not less than 4%, preferably not more than 30%, not more than 20%, not more than 18%, not more than 16%, not more than 14%, or not more than 12%, and particularly preferably not more than 6%. If the content of BaO is too large, the coefficient of linear thermal expansion becomes excessively high and, therefore, a glass having excellent thermal resistance and thermal shock resistance is difficult to obtain. In addition, the meltability of the glass is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, BaO is likely to be mixed as impurities into the glass. Therefore, if complete removal of BaO is pursued, the raw material batch tends to be expensive to increase the production cost. In reducing the increase in production cost, the lower limit of the content of BaO is preferably not less than 0.0001%, more preferably not less than 0.001%, and particularly preferably not less than 0.01%.

MgO, CaO, SrO, and BaO are components that each decrease the viscosity of the glass to increase the meltability and formability of the glass. Meanwhile, MgO, CaO, SrO, and BaO are components that increase the linear expansion coefficient of the glass and an excessively high content of them is likely to make it difficult to obtain a glass having excellent thermal resistance and thermal shock resistance. Furthermore, the chemical durability of the glass tends to decrease to alter the glass surface and, as a result, the asperity condition of the surface deteriorates, which makes it difficult to obtain a glass having a desired high transmittance. Therefore, MgO+CaO+SrO+BaO (the total content of MgO, CaO, SrO, and BaO) is preferably not more than 40%, not more than 30%, not more than 20%, not more than 18%, not more than 16%, not more than 14%, not more than 12%, not more than 11%, not more than 10%, not more than 9%, not more than 8%, not more than 7%, not more than 6%, not more than 5%, not more than 4%, not more than 3%, not more than 2%, not more than 1%, not more than 0.9%, not more than 0.8%, not more than 0.7%, not more than 0.6%, not more than 0.5%, not more than 0.4%, not more than 0.3%, or not more than 0.2%, and particularly preferably not more than 0.1%. In increasing the meltability and formability of the glass, the above content is preferably not less than 0.1%, more preferably not less than 1%, even more preferably not less than 2%, still even more preferably not less than 3%, and particularly preferably not less than 4%. Meanwhile, MgO, CaO, SrO, and BaO are likely to be mixed as impurities into the glass. Therefore, if complete removal of them is pursued, the raw material batch tends to be expensive to increase the production cost. In reducing the increase in production cost, the lower limit of the content of MgO+CaO+SrO+BaO is preferably more than 0%, more preferably not less than 0.0001%, even more preferably not less than 0.0003%, still even more preferably not less than 0.0005%, and particularly preferably not less than 0.001%.

MgO, CaO, SrO, and BaO are components that each decrease the viscosity of the glass to increase the meltability and formability of the glass. $P_2O_5$ is a component that largely contributes to decreasing the expansion of the glass and is also a component that increases the viscosity of the glass and increases the phase separability. The ratio (MgO+CaO+SrO+BaO)/$P_2O_5$ (the total content of MgO, CaO, SrO, and BaO divided by the content of $P_2O_5$) is preferably not more than 20%, not more than 15%, not more than 10%, not more than 8%, not more than 7%, not more than 6%, not more than 5%, not more than 4.5%, not more than 4.4%, not more than 4.3%, not more than 4.2%, not more than 4.1%, not more than 4.0%, or not more than 3.9%, and particularly preferably not more than 3.8%. If (MgO+CaO+SrO+BaO)/$P_2O_5$ is too large, the coefficient of linear thermal expansion becomes excessively high and, therefore, a glass having excellent thermal resistance and thermal shock resistance is difficult to obtain. In addition, the homogeneity of glass melt is likely to decrease. On the other hand, if (MgO+CaO+SrO+BaO)/$P_2O_5$ is too small, the viscosity of the glass becomes high to deteriorate the productivity and, therefore, the production cost is likely to increase.

ZnO is a component that decreases the viscosity of the glass to increase the meltability and formability of the glass. Furthermore, ZnO is also a component for controlling the coefficient of linear thermal expansion and refractive index of the glass. In addition, ZnO is also a component that can be involved in phase separation of the glass. The content of ZnO is preferably not less than 0%, more than 0%, not less than 0.5%, or not less than 1%, particularly preferably not less than 5%, preferably not more than 20%, not more than 18%, not more than 17%, not more than 15%, not more than 14%, not more than 13%, or not more than 12.5%, and particularly preferably not more than 11%. If the content of ZnO is too large, the glass is likely to cause phase separation. Therefore, the homogeneity of glass melt is likely to decrease and the glass tends to become cloudy unintentionally. Hence, particularly in reducing the phase separation of the glass to reduce the risk of clouding of the glass, the content of ZnO is preferably not more than 3%, not more than 2%, not more than 1%, or not more than 0.5%, and the glass is particularly preferably free of ZnO.

$SnO_2$ is a component acting as a fining agent. Furthermore, $SnO_2$ is also a component for controlling the coefficient of linear thermal expansion and refractive index of the glass. In addition, $SnO_2$ is also a component that can be involved in phase separation of the glass. The content of $SnO_2$ is preferably not less than 0%, more than 0%, not less than 0.0001%, not less than 0.001%, not less than 0.005%, not less than 0.01%, not less than 0.03%, not less than 0.05%, or not less than 0.1%, particularly preferably not less than 0.15%. The upper limit of the content of $SnO_2$ is not particularly limited, but is actually 20%. If the glass contains more than 20% $SnO_2$, devitrified matter containing Sn is likely to precipitate and, thus, the production burden is likely to increase. Furthermore, if the content of $SnO_2$ is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance.

$ZrO_2$ is a component that increases the Young's modulus, modulus of rigidity, and so on of the glass. Furthermore, $ZrO_2$ is also a component for controlling the coefficient of thermal expansion and the refractive index. In addition, $ZrO_2$ is also a component that can be involved in phase separation of the glass. The content of $ZrO_2$ is preferably not less than 0%, more than 0%, not less than 0.001%, not less than 0.002%, not less than 0.003%, not less than 0.004%, not less than 0.005%, not less than 0.006%, not less than 0.007%, not less than 0.008%, not less than 0.009%, not less than 0.01%, not less than 0.02%, not less than 0.03%, not less than 0.04%, not less than 0.05%, not less than 0.06%, not less than 0.07&, not less than 0.08%, not less than 0.09%, not less than 0.1%, not less than 1%, or not less than 2%, particularly preferably not less than 3%, preferably not more than 20%, not more than 18%, not more than 16%, not more than 14%, or not more than 12%, and particularly preferably not more than 6%. If the content of $ZrO_2$ is too large, the susceptibility to devitrification increases and a glass having excellent thermal resistance and thermal shock resistance is difficult to obtain. Furthermore, the homogeneity of glass melt decreases to make the glass difficult to melt, the viscosity thereof increases to make the glass difficult to be fined, and the glass is difficult to form into shape, which makes it likely that the productivity decreases. Meanwhile, $ZrO_2$ is likely to be mixed as impurities into the glass. Therefore, if complete removal of $ZrO_2$ is pursued, the raw material batch tends to be expensive to increase the production cost. In reducing the increase in production cost, the lower limit of the content of $ZrO_2$ is preferably not less than 0.0001%, more preferably not less than 0.001%, and particularly preferably not less than 0.01%.

$HfO_2$ is a component that increases the Young's modulus, modulus of rigidity, and so on of the glass and also a component that decreases the viscosity of the glass to increase the meltability and formability of the glass. Furthermore, $HfO_2$ is also a component that can be involved in phase separation of the glass. In accordance with the application of the glass according to the present invention, the composition is preferably designed to control the content of $HfO_2$ to give the glass a desired mechanical strength. If the content of $HfO_2$ is too large, the mechanical strength of the glass becomes excessively high, which makes it difficult to subject the glass to processing or the like and thus makes it difficult to obtain a glass having a desired surface condition and, eventually, a desired high transmittance. Furthermore, the raw material for $HfO_2$ is expensive, leading to an increased production cost. In view of the above, the content of $HfO_2$ is preferably not more than 10%, not more than 9%, not more than 8%, not more than 7%, not less than 6%, not more than 5%, not more than 4%, not more than 3%, not more than 2%, not more than 1%, not more than 0.5%, not more than 0.4%, or not more than 0.3%, and particularly preferably not more than 0.2%. The lower limit of the content of $HfO_2$ is not particularly limited and not less than 0%. However, $HfO_2$ is a component that can be mixed into the glass from raw materials used and the amount of $HfO_2$ mixed varies depending on the composition of the raw materials. Therefore, actually, it is acceptable for the glass to contain $HfO_2$ in an amount of not less than 0.0001%, not less than 0.0003%, or particularly not less than 0.0005%.

$Y_2O_3$ is a component that decreases the viscosity of the glass to increase the meltability and formability of the glass. $Y_2O_3$ is also a component for increasing the Young's modulus of the glass to control the coefficient of linear thermal expansion and refractive index of the glass. Furthermore, $Y_2O_3$ is also a component that can be involved in phase separation of the glass. The content of $Y_2O_3$ is preferably not less than 0%, or more than 0%, particularly not less than 0.1%, preferably not more than 30%, or not more than 20%, and particularly preferably not more than 10%. If the content of $Y_2O_3$ is too large, the coefficient of linear thermal expansion becomes excessively high and, therefore, a glass having excellent thermal resistance and thermal shock resistance is difficult to obtain. In addition, the homogeneity of glass melt is likely to decrease. Furthermore, the chemical durability of the glass is likely to decrease to alter the glass surface. As a result, the asperity condition of the surface deteriorates, which makes it difficult to obtain a glass having a desired high transmittance. Meanwhile, $Y_2O_3$ is likely to be mixed as impurities into the glass. Therefore, if complete removal of $Y_2O_3$ is pursued, the raw material batch tends to be expensive to increase the production cost. In reducing the increase in production cost, the lower limit of the content of $Y_2O_3$ is preferably not less than 0.0001%, more preferably not less than 0.001%, and particularly preferably not less than 0.01%.

Pt is a component that can be mixed in the ionic, colloidal, metallic or other states into the glass and causes the glass to develop a yellowish to dark brown color. Furthermore, Pt is also a component that can be involved in phase separation of the glass. The content of Pt is preferably not more than 0.05%, not more than 0.001%, not more than 0.0005%, not more than 0.0001%, not more than 0.00005%, or not more than 0.00001%, and particularly preferably not more than 0.000005%. If the content of Pt is too large, devitrified matter containing Pt is likely to precipitate, and, therefore, the production burden is likely to increase. The lower limit of the content of Pt is not particularly limited and may be 0%. However, there may be a case where, with the use of general melting facilities, Pt members need to be used in order to obtain a homogeneous glass. Therefore, if complete removal of Pt is pursued, the production cost tends to increase. In the absence of any adverse effect on coloring, for the purpose of reducing the increase in production cost, the lower limit of the content of Pt is preferably more than 0%, more preferably not less than 0.0000001%, and particularly preferably not less than 0.0000005%.

Rh is a component that can be mixed in the ionic, colloidal, metallic or other states into the glass and causes the glass to develop a yellowish to dark brown color. Furthermore, Rh is also a component that can be involved in phase separation of the glass. The content of Rh is preferably not more than 0.05%, not more than 0.001%, not more than 0.0005%, not more than 0.0001%, not more than 0.00005%, or not more than 0.00001%, and particularly preferably not more than 0.000005%. If the content of Rh is too large, devitrified matter containing Rh is likely to precipitate, and, therefore, the production burden is likely to increase. The lower limit of the content of Rh is not particularly limited and may be 0%. However, there may be a case where, with the use of general melting facilities, Rh members need to be used in order to obtain a homogeneous glass. Therefore, if complete removal of Rh is pursued, the production cost tends to increase. In the absence of any adverse effect on coloring, for the purpose of reducing the increase in production cost, the lower limit of the content of Rh is preferably more than 0%, more preferably not less than 0.0000001%, and particularly preferably not less than 0.0000005%.

Pt+Rh (the total content of Pt and Rh) is preferably not more than 0.01%, not more than 0.005%, not more than 0.001%, not more than 0.0005%, not more than 0.0001%, not more than 0.00005%, or not more than 0.00001%, and particularly preferably not more than 0.000005%. The lower limit of Pt+Rh is not particularly limited and may be 0%. However, there may be a case where, with the use of general melting facilities, Pt members or Rh members need to be used in order to obtain a homogeneous glass. Therefore, if complete removal of Pt and Rh is pursued, the production cost tends to increase. In the absence of any adverse effect on coloring, for the purpose of reducing the increase in production cost, the lower limit of Pt+Rh is preferably more than 0%, more preferably not less than 0.0000001%, and particularly preferably not less than 0.0000005%.

$V_2O_5$ is a component that, when contained in an appropriate amount into the composition, decreases the viscosity of the glass to increase the meltability and formability of the glass. Furthermore, $V_2O_5$ is also a coloring component of the glass that absorbs light of various wavelengths. In addition, $V_2O_5$ is also a component that can be involved in phase separation of the glass. The content of $V_2O_5$ is preferably not more than 20000 ppm, not more than 10000 ppm, less than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of $V_2O_5$ is too large, the meltability of the glass is likely to decrease. In addition, the glass is likely to be colored, which makes it difficult to obtain a glass having a desired high transmittance. Meanwhile, $V_2O_5$ is likely to be mixed as impurities into the glass. Therefore, if complete removal of $V_2O_5$ is pursued, the raw material batch tends to be expensive to increase the production cost. In reducing the increase in production cost, the lower limit of the content of $V_2O_5$ is preferably more than 0, more preferably not less than 1 ppm, even more preferably not less than 2 ppm, and particularly preferably not less than 3 ppm. In accordance with the application of the glass according to the present invention, the content of $V_2O_5$ may be controlled to adjust the transmittance. For example, in the case where a colored appearance is required for a cooker top plate or the like, the content of $V_2O_5$ may be not less than 100 ppm, not less than 500 ppm, not less than 1000 ppm, not less than 2000 ppm, not less than 2500 ppm, not less than 3000 ppm, not less than 4000 ppm, not less than 5000 ppm, not less than 6000 ppm, not less than 7000 ppm, or particularly not less than 7500 ppm.

$Cr_2O_3$ is a component that decreases the viscosity of the glass to increase the meltability and formability of the glass. $Cr_2O_3$ is also a coloring component of the glass that absorbs light of various wavelengths. Furthermore, $Cr_2O_3$ is also a component that can be involved in phase separation of the glass. The content of $Cr_2O_3$ is preferably not more than 20000 ppm, not more than 10000 ppm, less than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of $Cr_2O_3$ is too large, the glass is likely to be colored, which makes it difficult to obtain a glass having a desired high transmittance. Furthermore, devitrified matter containing Cr is likely to precipitate and, thus, the production burden is likely to increase. In accordance with the application of the glass according to the present invention, the content of $Cr_2O_3$ may be controlled to adjust the transmittance. For example, in the case where a colored appearance is required for a cooker top plate or the like, the content of $Cr_2O_3$ may be not less than 100 ppm, not less than 500 ppm, not less than 800 ppm, not less than 1000 ppm, not less than 2000 ppm, or particularly not less than 3000 ppm.

$Cr_2O_3$ and $V_2O_5$ are components that, when contained in an appropriate amount into the composition, decrease the viscosity of the glass to increase the meltability and formability of the glass. Furthermore, these components are also coloring components of the glass that absorb light of various wavelengths. In the case where a glass having a black appearance is desired for use in a cooker top plate or the like, it can be considered to allow the glass to contain a plurality of coloring components. $Cr_2O_3$ and $V_2O_5$ are components particularly contributable to black coloring of the glass and can further increase the jet blackness of the glass. Therefore, in order to increase the jet blackness of the glass, $Cr_2O_3+V_2O_5$ (the total content of $Cr_2O_3$ and $V_2O_5$) is preferably not less than 100 ppm, not less than 500 ppm, not less than 800 ppm, not less than 1000 ppm, not less than 2000 ppm, not less than 3000 ppm, or not less than 6000 ppm, and particularly preferably not less than 9000 ppm. However, if the content of $Cr_2O_3+V_2O_5$ is too large, the meltability of the glass is likely to decrease. Therefore, the content of $Cr_2O_3+V_2O_5$ is preferably not more than 200000 ppm, not more than 100000 ppm, not more than 50000 ppm, not more than 30000 ppm, or not more than 20000 ppm, and particularly preferably not more than 10000 ppm.

$MoO_3$ is a component that decreases the viscosity of the glass to increase the meltability and formability of the glass. Furthermore, $MoO_3$ is also a coloring component of the glass that absorbs light of various wavelengths. In addition, $MoO_3$ is also a component that can be involved in phase separation of the glass. The content of $MoO_3$ is preferably not more than 20000 ppm, not more than 10000 ppm, less than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of $MoO_3$ is too large, the glass is likely to be colored, which makes it difficult to obtain a glass having a desired high transmittance. Furthermore, devitrified matter containing Mo is likely to precipitate and, thus, the production burden is likely to increase. In accordance with the application of the glass according to the present invention, the content of $MoO_3$ may be controlled to adjust the transmittance. For example, in the case where a colored appearance is required for a cooker top plate or the like, the content of $MoO_3$ may be not less than 100 ppm, not less than 500 ppm, not less than 800 ppm, not less than 1000 ppm, not less than 2000 ppm, or particularly not less than 3000 ppm.

$MnO_2$ is a component that, when contained in an appropriate amount into the composition, decreases the viscosity of the glass to increase the meltability and formability of the glass. $MnO_2$ is also a coloring component of the glass that absorbs light of various wavelengths. Furthermore, $MnO_2$ is also a component that can be involved in phase separation of the glass. The content of $MnO_2$ is preferably not more than 20000 ppm, not more than 10000 ppm, not more than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of $MnO_2$ is too large, the meltability of the glass is likely to decrease. In addition, the glass is likely to be colored, which makes it difficult to obtain a glass having a desired high

transmittance. Meanwhile, $MnO_2$ is likely to be mixed as impurities into the glass. Therefore, if complete removal of $MnO_2$ is pursued, the raw material batch tends to be expensive to increase the production cost. In reducing the increase in production cost, the lower limit of the content of $MnO_2$ is preferably more than 0 ppm, more preferably not less than 1 ppm, even more preferably not less than 2 ppm, and particularly preferably not less than 3 ppm. In accordance with the application of the glass according to the present invention, the content of $MnO_2$ may be controlled to adjust the transmittance. For example, in the case where a colored appearance is required for a cooker top plate or the like, the content of $MnO_2$ may be not less than 100 ppm, not less than 500 ppm, not less than 800 ppm, not less than 1000 ppm, not less than 2000 ppm, or particularly not less than 3000 ppm.

CoO is a component that, when contained in an appropriate amount into the composition, decreases the viscosity of the glass to increase the meltability and formability of the glass. CoO is also a coloring component of the glass that absorbs light of various wavelengths. Furthermore, CoO is also a component that can be involved in phase separation of the glass. The content of CoO is preferably not more than 20000 ppm, not more than 10000 ppm, not more than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of CoO is too large, the meltability of the glass is likely to decrease. In addition, the glass is likely to be colored, which makes it difficult to obtain a glass having a desired high transmittance. Meanwhile, CoO is likely to be mixed as impurities into the glass. Therefore, if complete removal of CoO is pursued, the raw material batch tends to be expensive to increase the production cost. In reducing the increase in production cost, the lower limit of the content of CoO is preferably more than 0 ppm, more preferably not less than 1 ppm, even more preferably not less than 2 ppm, and particularly preferably not less than 3 ppm. In accordance with the application of the glass according to the present invention, the content of CoO may be controlled to adjust the transmittance. For example, in the case where a colored appearance is required for a cooker top plate or the like, the content of CoO may be not less than 100 ppm, not less than 500 ppm, not less than 800 ppm, not less than 1000 ppm, not less than 2000 ppm, or particularly not less than 3000 ppm.

CuO is a component that, when contained in an appropriate amount into the composition, decreases the viscosity of the glass to increase the meltability and formability of the glass. CuO is also a coloring component of the glass that absorbs light of various wavelengths. Furthermore, CuO is also a component that can be involved in phase separation of the glass. The content of CuO is preferably not more than 20000 ppm, not more than 10000 ppm, not more than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of CuO is too large, the meltability of the glass is likely to decrease. In addition, the glass is likely to be colored, which makes it difficult to obtain a glass having a desired high transmittance. Meanwhile, CuO is likely to be mixed as impurities into the glass. Therefore, if complete removal of CuO is pursued, the raw material batch tends to be expensive to increase the production cost. In reducing the increase in production cost, the lower limit of the content of CuO is preferably more than 0 ppm, more preferably not less than 1 ppm, even more preferably not less than 2 ppm, and particularly preferably not less than 3 ppm. In accordance with the application of the glass according to the present invention, the content of CuO may be controlled to adjust the transmittance. For example, in the case where a colored appearance is required for a cooker top plate or the like, the content of CuO may be not less than 100 ppm, not less than 500 ppm, not less than 800 ppm, not less than 1000 ppm, not less than 2000 ppm, or particularly not less than 3000 ppm.

$Nd_2O_3$ is a component that, when contained in an appropriate amount into the composition, decreases the viscosity of the glass to increase the meltability and formability of the glass. $Nd_2O_3$ is also a coloring component of the glass that absorbs light of various wavelengths. Furthermore, $Nd_2O_3$ is also a component that can be involved in phase separation of the glass. The content of $Nd_2O_3$ is preferably not more than 20000 ppm, not more than 10000 ppm, not more than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of $Nd_2O_3$ is too large, the glass is likely to be colored, which makes it difficult to obtain a glass having a desired high transmittance. In accordance with the application of the glass according to the present invention, the content of $Nd_2O_3$ may be controlled to adjust the transmittance. For example, in the case where a colored appearance is required for a cooker top plate or the like, the content of $Nd_2O_3$ may be not less than 100 ppm, not less than 500 ppm, not less than 800 ppm, not less than 1000 ppm, not less than 2000 ppm, or particularly not less than 3000 ppm.

$WO_3$ is a component that, when contained in an appropriate amount into the composition, decreases the viscosity of the glass to increase the meltability and formability of the glass. $WO_3$ is also a coloring component of the glass that absorbs light of various wavelengths. Furthermore, $WO_3$ is also a component that can be involved in phase separation of the glass. The content of $WO_3$ is preferably not more than 20000 ppm, not more than 10000 ppm, not more than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of $WO_3$ is too large, the glass is likely to be colored, which makes it difficult to obtain a glass having a desired high transmittance. In accordance with the application of the glass according to the present invention, the content of $WO_3$ may be controlled to adjust the transmittance. For example, in the case where a colored appearance is required for a cooker top plate or the like, the content of $WO_3$ may be not less than 100 ppm, not less than 500 ppm, not less than 800 ppm, not less than 1000 ppm, not less than 2000 ppm, or particularly not less than 3000 ppm.

NiO is a component that, when contained in an appropriate amount into the composition, decreases the viscosity of the glass to increase the meltability and formability of the glass. NiO is also a coloring component of the glass that absorbs light of various wavelengths. Furthermore, NiO is also a component that can be involved in phase separation of the glass. The content of NiO is preferably not more than 20000 ppm, not more than 10000 ppm, not more than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, or not more than 100 ppm, and particularly preferably not more than 50 ppm. If the content of NiO is too large, the meltability of the glass is likely to decrease. In addition, the glass is likely to be colored, which makes it difficult to obtain a glass having a desired high transmittance. Meanwhile, NiO is likely to be mixed into the glass from SUS members or the like in the production process. Therefore, if complete removal of NiO is pursued, the raw material batch tends to be expensive to increase the production cost. In reducing the increase in production cost, the lower limit of the content of NiO is preferably more than 0 ppm, more preferably not less than 1 ppm, even more preferably not less than 2 ppm, and particularly preferably not less than 3 ppm. In accordance with the application of the glass according to the present invention, the content of NiO may be controlled to adjust the transmittance. For example, in the case where a colored appearance is required for a cooker top plate or the like, the content of NiO may be not less than 100 ppm, not less than 500 ppm, not less than 800 ppm, not less than 1000 ppm, not less than 2000 ppm, or particularly not less than 3000 ppm.

$As_2O_3$ and $Sb_2O_3$ are highly toxic and may contaminate the environment, for example, during the production process of the glass or during treatment of waste glass. Therefore, $Sb_2O_3+As_2O_3$ (the total content of $Sb_2O_3$ and $As_2O_3$) is preferably not more than 20000 ppm, not more than 10000 ppm, less than 7000 ppm, not more than 6000 ppm, not more than 5000 ppm, not more than 4000 ppm, not more than 3000 ppm, not more than 2000 ppm, not more than 1000 ppm, not more than 500 ppm, not more than 300 ppm, not more than 100 ppm, not more than 10 ppm, not more than 5 ppm, or not more than 1 ppm, and particularly preferably less than 1 ppm.

The glass according to the present invention may further contain, in addition to the above components, $SO_3$, $Cl_2$, $La_2O_3$, $Ta_2O_5$, $Nb_2O_5$, $RfO_2$, and so on up to 10% in total so far as the chemical durability, desired transmittance, desired thermal resistance, desired thermal shock resistance, and so on of the glass can be obtained. However, the raw material batch of the above components is expensive and, thus, the production cost tends to increase. Therefore, these components may not be incorporated into the glass unless the circumstances are exceptional. The total content of these components is, in terms of % by mass, preferably not more than 5%, not more than 4%, not more than 3%, not more than 2%, not more than 1%, not more than 0.5%, not more than 0.4%, not more than 0.3%, not more than 0.2%, not more than 0.1%, not more than 0.05%, less than 0.05%, not more than 0.049%, not more than 0.048%, not more than 0.047%, or not more than 0.046%, and particularly preferably not more than 0.045%.

The glass according to the present invention may further contain, in addition to the above components, minor components, such as, for example, $H_2$, $CO_2$, CO, $H_2O$, He, Ne, Ar, and $N_2$, each up to 0.1% so far as the chemical durability, desired transmittance, desired thermal resistance, desired thermal shock resistance, and so on of the glass can be obtained. Furthermore, when Ag, Au, Pd, Ir, Sc, Ce, Pr, Pm, Sm, Eu, Gd, Tb, Dy, Ho, Er, Tm, Yb, Lu, Ac, Th, Pa, U or so on is deliberately added into the glass, the raw material cost increases and, as a result, the production cost increases. However, Pd and so on have various catalytic actions. When the glass contains these components, the glass can be given specific functions. In view of the above circumstances, when being aimed at giving the function of promoting crystallization or other functions, the glass may contain each of the above components in an amount of not more than 1%, not more than 0.5%, not more than 0.3%, or not more than 0.1%. When not particularly aimed at the above goals, the content of each of the above components is preferably not more than 500 ppm, not more than 300 ppm, or not more than 100 ppm, and particularly preferably not more than 10 ppm.

The glass according to the present invention may be a crystallized glass. The respective ranges of contents of the components in this case are the same as those described above. Examples of the type of crystals in the crystallized glass include $Al_2SiO_3$, and $ZrO_2$.

The preferred composition range in implementing the present invention is, for example, in terms of % by mass, 45 to 80% $SiO_2$, 10 to 30% $Al_2O_3$, over 0 to 8% $B_2O_3$, 0 to 3% $Li_2O$, over 0 to 20% $TiO_2$, and 6.5 to 20% $P_2O_5$.

The glass according to the present invention having the above composition can easily achieve a low linear expansion coefficient and excellent transmittancy.

Also when the glass according to the present invention is a crystallized glass, it can easily achieve a low linear expansion coefficient and excellent transmittancy since it has the above composition.

In the glass according to the present invention, the density is preferably 2.20 to 3.50 $g/cm^3$, 2.30 to 3.40 $g/cm^3$,

2.40 to 3.35 g/cm$^3$, or 2.50 to 3.30 g/cm$^3$, and particularly preferably 2.55 to 3.25 g/cm$^3$. If the density is too small, the gas permeability of the glass increases and, thus, the glass may be contaminated during a long-term storage. On the other hand, if the density is too large, the weight per unit area of the glass becomes large and, therefore, the glass becomes difficult to handle.

In the glass according to the present invention, the β-OH value is preferably more than 0 to 2/mm, 0.001 to 2/mm, 0.01 to 1.5/mm, 0.02 to 1.5/mm, 0.03 to 1.2/mm, 0.04 to 1.5/mm, 0.05 to 1.4/mm, 0.06 to 1.3/mm, 0.07 to 1.2/mm, 0.08 to 1.1/mm, 0.08 to 1/mm, 0.08 to 0.9/mm, 0.08 to 0.85/mm, 0.08 to 0.8/mm, 0.08 to 0.75/mm, 0.08 to 0.74/mm, 0.08 to 0.73/mm, 0.08 to 0.72/mm, or 0.08 to 0.71/mm, and particularly preferably 0.08 to 0.7/mm. If the β-OH value is too small, the amount of water vapor produced during melting of the glass batch reduces. Therefore, the effect of stirring the glass batch due to production of water vapor is reduced, which makes it less likely that the initial reaction of the glass batch is promoted and, thus, makes it likely that the production burden increases. On the other hand, if the β-OH value is too large, bubbles are likely to be produced at the interface between a metallic member, such as Pt, or a refractory member and glass melt, which makes it likely that the quality of a glass product decreases. In addition, the glass transition point, the deformation point, the strain point, the annealing point, and the softening point may decrease or the coefficient of linear thermal expansion may increase, which deteriorates the thermal resistance and the thermal shock resistance and, therefore, makes the glass unsuitable for use under high temperature. The β-OH value changes depending on the raw material used, the melting atmosphere, the melting temperature, the melting time, and so on and, therefore, can be controlled by changing these conditions as necessary. For example, by increasing the amount of hydroxide in the raw material, melting the raw material by heating it with a burner or increasing the melting temperature, the β-OH value can be increased. Alternatively, the β-OH value can be increased by lengthening the melting time under a sealed condition or shortening the melting time under an unsealed condition.

In the glass according to the present invention, the coefficient of linear thermal expansion at 30 to 380°C is preferably not more than $60 \times 10^{-7}/$°C, not more than $56 \times 10^{-7}/$°C, not more than $52 \times 10^{-7}/$°C, not more than $48 \times 10^{-7}/$°C, not more than $44 \times 10^{-7}/$°C, not more than $40 \times 10^{-7}/$°C, not more than $36 \times 10^{-7}/$°C, not more than $34 \times 10^{-7}/$°C, not more than $32 \times 10^{-7}/$°C, not more than $29.5 \times 10^{-7}/$°C, not more than $27.5 \times 10^{-7}/$°C, not more than $25.5 \times 10^{-7}/$°C, not more than $23.5 \times 10^{-7}/$°C, not more than $21.5 \times 10^{-7}/$°C, not more than $19.5 \times 10^{-7}/$°C, not more than $18 \times 10^{-7}/$°C, not more than $17.5 \times 10^{-7}/$°C, not more than $17 \times 10^{-7}/$°C, not more than $16.5 \times 10^{-7}/$°C, not more than $15.5 \times 10^{-7}/$°C, not more than $15 \times 10^{-7}/$°C, not more than $14.5 \times 10^{-7}/$°C, or not more than $14 \times 10^{-7}/$°C, and particularly preferably not more than $13.5 \times 10^{-7}/$°C.

In the glass according to the present invention, the coefficient of linear thermal expansion at 30 to 750°C is preferably not more than $60 \times 10^{-7}/$°C, not more than $56 \times 10^{-7}/$°C, not more than $52 \times 10^{-7}/$°C, not more than $48 \times 10^{-7}/$°C, not more than $44 \times 10^{-7}/$°C, not more than $40 \times 10^{-7}/$°C, not more than $36 \times 10^{-7}/$°C, not more than $34 \times 10^{-7}/$°C, not more than $32 \times 10^{-7}/$°C, not more than $29.5 \times 10^{-7}/$°C, not more than $27.5 \times 10^{-7}/$°C, not more than $25.5 \times 10^{-7}/$°C, not more than $23.5 \times 10^{-7}/$°C, not more than $21.5 \times 10^{-7}/$°C, not more than $19.5 \times 10^{-7}/$°C, not more than $18 \times 10^{-7}/$°C, not more than $17.5 \times 10^{-7}/$°C, not more than $17 \times 10^{-7}/$°C, not more than $16.5 \times 10^{-7}/$°C, not more than $15.5 \times 10^{-7}/$°C, not more than $15 \times 10^{-7}/$°C, not more than $14.5 \times 10^{-7}/$°C, or not more than $14 \times 10^{-7}/$°C, and particularly preferably not more than $13.5 \times 10^{-7}/$°C.

If the coefficient of linear thermal expansion is too high, the thermal resistance and the thermal shock resistance are low, which makes the glass difficult to use under high temperature. Furthermore, the glass is difficult to use in applications requiring positional stability. Particularly when the glass is assumed to be used in a cooker top plate, the coefficient of linear thermal expansion is preferably as low as possible in order to avoid breakage due to heat or strain. Although he lower limit of the coefficient of linear thermal expansion is not particularly limited, actually, the coefficient of linear thermal expansion at 30 to 380°C is not less than $-70 \times 10^{-7}/$°C and the coefficient of linear thermal expansion at 30 to 750°C is not less than $-60 \times 10^{-7}/$°C.

In the glass according to the present invention, the temperature at which the slope of the thermal expansion curve of the glass changes is assumed to be the glass transition point (glass transition temperature). In the glass according to the present invention, the glass transition point is preferably not lower than 710°C, not lower than 712°C, not lower than 714°C, not lower than 716°C, not lower than 718°C, not lower than 720°C, not lower than 722°C, not lower than 724°C, not lower than 726°C, or not lower than 728°C, and particularly preferably not lower than 730°C. If the glass transition point is too low, the glass excessively flows, which makes it difficult to form the glass into a desired shape. In addition, if the glass transition point is too low, the glass is likely to be deformed when used under high temperature.

In the glass according to the present invention, the temperature at which the slope of the thermal expansion curve of the glass changes under temperature higher than the glass transition point is assumed to be the deformation point. In the glass according to the present invention, the deformation point is preferably not lower than 750°C, not lower than 752°C, not lower than 754°C, not lower than 758°C, not lower than 762°C, not lower than 764°C, not lower than 766°C, or not lower than 768°C, and particularly preferably not lower than 770°C. If the deformation point is too low, the glass excessively flows, which makes it difficult to form the glass into a desired shape. In addition, if the deformation point is too low, the glass is likely to be deformed when used under high temperature.

The liquidus temperature of the glass according to the present invention is preferably not higher than 1600°C, not higher than 1580°C, not higher than 1560°C, not higher than 1540°C, not higher than 1520°C, not higher than 1500°C, not higher than 1480°C, not higher than 1460°C, not higher than 1440°C, not higher than 1420°C, not higher than 1410°C, not higher than 1400°C, not higher than 1380°C, not higher than 1360°C, not higher than 1340°C, not higher than 1320°C, not higher than 1300°C, not higher than 1290°C, not higher than 1280°C, not higher than 1270°C, not higher than 1260°C, not higher than 1250°C, not higher than 1240°C, not higher than 1230°C, not higher than 1200°C, or not higher than 1190°C, and particularly preferably not higher than 1180°C. If the liquidus temperature is too high, devitrification is likely to occur during production. On the other hand, when the liquidus temperature is 1480°C or lower, the glass can be easily produced by a roll process or the like. When the liquidus temperature is 1410°C or lower, the glass can be easily produced by an overflow process or the like. When the liquidus temperature is 1350°C or lower, the glass can be easily produced by a bushing process or the like. When the liquidus temperature is 1300°C or lower, the glass can be easily produced by a Danner process or the like.

In the glass according to the present invention, the liquidus viscosity (the logarithmic value of the viscosity at the liquidus temperature) is not less than 1.6, not less than 1.70, not less than 1.75, not less than 1.80, not less than 1.85, not less than 1.90, not less than 1.95, not less than 2.00, not less than 2.05, not less than 2.10, not less than 2.15, not less than 2.20, not less than 2.25, not less than 2.30, not less than 2.35, not less than 2.40, not less than 2.45, not less than 2.50, not less than 2.55, not less than 2.60, not less than 2.65, not less than 2.70, not less than 2.75, not less than 2.80, not less than 2.85, not less than 2.90, not less than 2.95, not less than 3.00, not less than 3.05, not less than 3.10, not less than 3.15, not less than 3.20, not less than 3.25, not less than 3.30, not less than 3.35, not less than 3.40, not less than 3.45, not less than 3.50, not less than 3.55, not less than 3.60, or not less than 3.65, and particularly preferably not less than 3.70. If the liquidus viscosity is too low, devitrification is likely to occur during production. On the other hand, when the liquidus viscosity is not less than 3.40, the glass can be easily produced by a roll process or the like. When the liquidus viscosity is not less than 3.50, the glass can be easily produced by a casting process or the like. When the liquidus viscosity is not less than 3.70, the glass can be easily produced by an overflow process or the like.

In applications requiring a high transmittance in the infrared region, the transmittance of the glass according to the present invention at a thickness of 4 mm and a wavelength of 1200 nm is preferably not less than 0.1%, not less than 1%, not less than 5%, not less than 10%, not less than 20%, not less than 30%, not less than 40%, not less than 50%, not less than 60%, not less than 70%, not less than 80%, not less than 81%, not less than 83%, not less than 85%, not less than 86%, or not less than 87%, and particularly preferably not less than 88%. Particularly, when the glass is used in an infrared camera or applications for infrared communication, such as a remote controller, the higher the transmittance at a wavelength of 1200 nm, the more preferred it is. On the other hand, in applications requiring a low transmittance in the infrared region, the transmittance at a thickness of 4 mm and a wavelength of 1200 nm is preferably not more than 50%, not more than 40%, not more than 30%, not more than 20%, not more than 10%, not more than 8%, not more than 6%, not more than 4%, not more than 3%, or not more than 2%, and particularly preferably not more than 1%. Particularly when the glass is used for the purpose of shielding infrared light or like purpose, the lower the transmittance at a wavelength of 1200 nm, the more preferred it is. However, the preferred transmittance varies depending on application and is therefore not limited to the above-mentioned specific ranges of values.

In applications requiring a high transmittance in the near-infrared region, the transmittance of the glass according to the present invention at a thickness of 4 mm and a wavelength of 800 nm is preferably not less than 0.1%, not less than 1%, not less than 5%, not less than 10%, not less than 20%, not less than 30%, not less than 40%, not less than 50%, not less than 60%, not less than 70%, not less than 80%, not less than 82%, not less than 84%, not less than 85%, not less than 86%, or not less than 87%, and particularly preferably not less than 88%. Particularly, when the glass is used in medical applications, such as vein authentication, the higher the transmittance at a wavelength of 800 nm, the more preferred it is. On the other hand, in applications requiring a low transmittance in the near-infrared region, the transmittance at a thickness of 4 mm and a wavelength of 800 nm is preferably not more than 50%, not more than 40%, not more than 30%, not more than 20%, not more than 10%, not more than 8%, not more than 6%, not more than 4%, not more than 3%, or not more than 2%, and particularly preferably not more than 1%. Particularly when the glass is used in a chemical container or for the purpose of shielding visible light or like purpose or required to have a colored appearance in a cooker top plate or the like, the lower the transmittance at a wavelength of 800 nm, the more preferred it is. However, the preferred transmittance varies depending on application and is therefore not limited to the above-mentioned specific ranges of values.

In applications requiring a high transmittance in the visible region, the transmittance of the glass according to the present invention at a thickness of 4 mm and a wavelength of 555 nm is preferably not less than 0.1%, not less than 1%, not less than 5%, not less than 10%, not less than 20%, not less than 30%, not less than 40%, not less than 50%, not less than 60%, not less than 70%, not less than 80%, not less than 82%, not less than 84%, not less than 85%, not less than 86%, or not less than 87%, and particularly preferably not less than 88%. A region of wavelengths around 555 nm is a wavelength region where human can easily percept light as brightness. Particularly in applications requiring high brightness, such as a display, the higher the transmittance at a wavelength of 555 nm, the more preferred it is. On the other hand, in applications requiring a low transmittance in the visible region, the transmittance at a thickness of 4 mm and a wavelength of 555 nm is preferably not more than 50%, not more than 40%, not more than 30%, not more than 20%, not more than 10%, not more than 8%, not more than 6%, not more than 4%, not more than 3%, or not more than 2%, and particularly preferably not more than 1%. Particularly when the glass is used in a chemical container or for the purpose of shielding ultraviolet light to green light or like purpose or required to have a colored appearance in a cooker top plate or the like, the lower the transmittance at a wavelength of 555 nm, the more preferred it is. However, the preferred transmittance varies depending on application and is therefore not limited to the above-mentioned specific ranges of values.

In applications requiring a high transmittance in the near-ultraviolet region, the transmittance of the glass according to the present invention at a thickness of 4 mm and a wavelength of 380 nm is preferably not less than 0.1%, not less than 1%, not less than 5%, not less than 10%, not less than 20%, not less than 30%, not less than 36%, not less than 40%, not less than 50%, not less than 60%, not less than 70%, not less than 80%, not less than 82%, or not less than 83%, and particularly preferably not less than 84%. Particularly in applications requiring a certain degree of clear and colorless, such as a display, the higher the transmittance at a wavelength of 380 nm, the more preferred it is. If the transmittance at a wavelength of 380 nm is too low, the glass is colored yellow and, therefore, a desired degree of clear and colorless is difficult to obtain. On the other hand, in applications requiring a low transmittance in the near-ultraviolet region, the transmittance at a thickness of 4 mm and a wavelength of 380 nm is preferably not more than 50%, not more than 40%, not more than 30%, not more than 20%, not more than 10%, not more than 4%, not more than 3%, or not more than 2%, and particularly preferably not more than 1%. Particularly when the glass is used in a chemical container or for the purpose of shielding ultraviolet light to blue light or like purpose or required to have a colored appearance in a cooker top plate or the like, the lower the transmittance at a wavelength of 380 nm, the more preferred it is. However, the preferred transmittance varies depending on application and is therefore not limited to the above-mentioned specific ranges of values.

The transmittance of the glass according to the present invention should be controlled suitably from wavelength to wavelength according to application. Specifically, in applications requiring high transmittancy in the ultraviolet region, the transmittance at a thickness of 4 mm and a wavelength of 300 nm is preferably not less than 0.1%, not less than 1%, not less than 5%, not less than 10%, not less than 20%, not less than 24%, not less than 28%, not less than 30%, not less than 40%, not less than 43%, or not less than 44%, and particularly preferably not less than 45%. Particularly, with use in applications for UV hardening (UV curing) of resin, fluorescent detection of printed matters, insect attraction, and so on, the higher the transmittance at a wavelength of 300 nm, the more preferred it is. On the other hand, in applications requiring low transmittancy in the ultraviolet region, the transmittance at a thickness of 4 mm and a wavelength of 300 nm is preferably not more than 50%, not more than 40%, not more than 30%, not more than 20%, not more than 10%, not more than 5%, not more than 4%, not more than 3%, or not more than 2%, and particularly preferably not more than 1%. Particularly when the glass is required to have an ability to filter out UV rays in a chemical container, an optical filter or so on, the lower the transmittance at a wavelength of 300 nm, the more preferred it is. However, the preferred transmittance varies depending on application and is therefore not limited to the above-mentioned specific ranges of values.

The lightness $L^*$ of the glass according to the present invention should be controlled suitably according to application. In applications requiring a high lightness, the lightness $L^*$ at a thickness of 4 mm is preferably not less than 5, not less than 10, not less than 20, not less than 30, not less than 40, not less than 50, not less than 60, not less than 70, not less than 80, not less than 85, not less than 90, not less than 94, not less than 95, not less than 96, not less than 96.1, or not less than 96.3, and particularly preferably not less than 96.5. If the lightness $L^*$ is too small, the glass tends to become grayish and look dark in appearance regardless of the magnitude of chromaticity. Therefore, particularly in applications requiring high brightness, such as a display, the greater the lightness $L^*$, the more preferred it is. On the other hand, in applications requiring a low lightness, the lightness $L^*$ at a thickness of 4 mm is preferably not more than 45, not more than 40, not more than 35, not more than 30, not more than 25, not more than 20, or not more than 15, and particularly preferably not more than 10. Particularly when the glass is used in a chemical container or for the purpose of shielding visible light or like purpose or required to have a black appearance in a cooker top plate or the like, the lower the lightness $L^*$, the more preferred it is. However, the preferred lightness $L^*$ varies depending on application and is therefore not limited to the above-mentioned specific ranges of values.

Regarding the glass according to the present invention, in applications requiring a high degree of clear and colorless, the chromaticity $a^*$ at a thickness of 4 mm is preferably within $\pm 50$, within $\pm 40$, within $\pm 30$, within $\pm 20$, within $\pm 10$, within $\pm 5$, within $\pm 3$, within $\pm 1$, within $\pm 0.9$, within $\pm 0.8$, within $\pm 0.7$, or within $\pm 0.6$, and particularly preferably within $\pm 0.5$. If the chromaticity $a^*$ is too negatively large, the glass tends to look greenish. If the chromaticity $a^*$ is too positively large, the glass tends to look reddish. On the other hand, when the glass needs to be intensely colored green or red, the chromaticity $a^*$ at a thickness of 4 mm is preferably not less than $\pm 6$, more preferably not less than $\pm 7$, even more preferably not less than $\pm 8$, and particularly preferably not less than $\pm 9$. Alternatively, in the case where the glass is colored black, the chromaticity $a^*$ at a thickness of 4 mm is preferably not less than +10, not less than +12, not less than +14, not less than +16, not less than +17, not less than +18, or not less than +19, and particularly preferably not less than +20. However, the preferred chromaticity $a^*$ varies depending on application and is therefore not limited to the above-mentioned specific ranges of values.

Regarding the glass according to the present invention, in applications requiring a high degree of clear and colorless, the chromaticity b* at a thickness of 4 mm is preferably within ±50, within ±45, within ±40, within ±30, within ±20, within ±10, within ±5, within ±3, within ±1, within ±0.9, within ±0.8, within ±0.7, or within ±0.6, and particularly preferably within ±0.5. If the chromaticity b* is too negatively large, the glass tends to look blueish. If the chromaticity b* is too positively large, the glass tends to look yellowish. On the other hand, when the glass needs to be intensely colored blue or yellow, the chromaticity b* at a thickness of 4 mm is preferably not less than ±6, more preferably not less than ± 7, even more preferably not less than ±8, and particularly preferably not less than ±9. Alternatively, in the case where the glass is colored black, the chromaticity b* at a thickness of 4 mm is preferably not less than +10, not less than +12, not less than +16, not less than +20, not less than +24, not less than +28, not less than +32, not less than +36, not less than +40, not less than +42, not less than +44, not less than +46, or not less than +48, and particularly preferably not less than +50. However, the preferred chromaticity b* varies depending on application and is therefore not limited to the above-mentioned specific ranges of values.

When the glass according to the present invention has a sheet-like shape, the average surface roughness Ra of the principal surface thereof is preferably not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the surface roughness Ra is too large, light incident on the glass surface from the outside is likely to be scattered, light is less likely to be emitted from the inside of the glass toward the outside, and, therefore, a glass having a desired high transmittance is difficult to obtain. In addition, the glass becomes susceptible to breakage. On the other hand, if the surface roughness Ra of the flat surface is too small, the glass surface is likely to be charged, which increases the attractive force between the glass and an object brought into contact with the glass surface and may make it difficult to obtain a desired mold releasability. In addition, because of the charged glass surface, a desired electrical responsiveness may be difficult to obtain. In view of the above circumstances, the surface roughness Ra of the flat surface of the glass according to the present invention is preferably not less than 0.0001 nm, not less than 0.001 nm, not less than 0.01 nm or not less than 0.1 nm.

When the glass according to the present invention has a sheet-like shape, the average surface roughness Ra of the end surface thereof is preferably not more than 100 nm, not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the surface roughness Ra of the end surface is too large, light is less likely to enter the inside of the glass through the end surface of the glass, light is less likely to be emitted from the inside of the glass toward the outside, and, therefore, a glass having a desired high transmittance is difficult to obtain. In addition, the glass becomes susceptible to breakage. On the other hand, if the surface roughness Ra of the end surface is too small, in physically holding the glass at the end surface thereof, the contact area between the glass and a holder becomes small and the frictional resistance becomes small, which may make it difficult to surely hold the glass. In view of the above circumstances, the surface roughness Ra of the end surface of the glass according to the present invention is preferably not less than 0.00001 nm, not less than 0.0001 nm, not less than 0.001 nm, not less than 0.01 nm, or not less than 0.1 nm.

The waviness of the glass according to the present invention is preferably not more than 10 μm, not more than 5 μm, not more than 4 μm, not more than 3 μm, not more than 2 μm, not more than 1 μm, not more than 0.8 μm, not more than 0.7 μm, not more than 0.6 μm, not more than 0.5 μm, not more than 0.4 μm, not more than 0.3 μm, not more than 0.2 μm, not more than 0.1 μm, not more than 0.08 μm, not more than 0.05 μm, not more than 0.03 μm, or not more than 0.02 μm, and particularly preferably not more than 0.01 μm. If the waviness is too large, a distribution of incident angles of light incident on the glass surface at a specific location is likely to be generated and the amount of light scattered on the glass surface becomes large on average, which makes it difficult to obtain a glass having a desired high transmittance. The lower limit of the waviness is not particularly limited, but is actually not less than 0.01 nm.

The surface roughnesses Ra of the principal surface and end surface of the glass can be measured by a method based on JIS B 0601:2001. The waviness can be measured with a stylus surface profile measurement device by a method based on SEMI STD D15-1296 "measurement method for surface waviness of FPD glass substrate". The thickness can be measured with a general device, such as a digital caliper or a point-contact roughness meter.

Generally, when phase separation due to spinodal decomposition (a mode of phase separation in which second and subsequent phases of composition are present intruding a first phase having the maximum volume fraction and are continuously mixed into the first phase) occurs, irregularities are easily formed on the glass surface because of differences in chemical durability and others from phase to phase. The inventors conducted intensive studies and, as a result, found out that when the glass according to the present invention is annealed at a temperature not lower than the glass transition point, it can be separated into two or more different phases and the state of the phase separation, in many cases, takes on binodal decomposition (a mode of phase separation in which second and subsequent phases of composition are scattered across a first phase having the maximum volume fraction and are mixed in spherical or like form into the first phase). In addition, the inventors found that when the glass composition, the annealing conditions, and so on are suitably controlled, phase separation via binodal decomposition can be developed facultatively and, thus, the glass can be finished to have a surface having a desired transmittance. In view of this situation, the glass according to the present invention may be composed only of a single glass phase or may be in a state containing two or more phases. For example, when desired to have a white or milky white appearance in an application as a cooker top plate, the glass according to the present invention is particularly preferably in a state containing two or more phases. In this case, by suitably controlling the annealing conditions or so on, a glass having a white or milky white appearance can be easily obtained. The second and subsequent phases may be in any of a glass state, a crystalized state, a gaseous state, and a liquid state. The second and subsequent phases may be composed of a metal oxide, a metal, an organic substance or others and the compositions of them are not limited. The shape of the second and subsequent phases is preferably a sheet-like, granular, spherical, circular, elliptical or linear shape and these shapes may appear singly or in combination of them. How phase separation occurs can be grasped by etching the glass with hydrofluoric acid or like liquid and then measuring its surface profiles with a SEM (scanning electron microscope), an AFM (atomic force microscope) or the like. Alternatively, by checking the state of chemical bonds in a sample using the FT-IR spectroscopy, the Raman spectroscopy or the like, information on phase separation can be acquired non-destructively. The state of phase separation described herein can be grasped in any way that can be easily imagined by the person skilled in the art.

The size of the second and subsequent phases is, in terms of each of their longest portions, preferably not more than 100 $\mu$m, not more than 50 $\mu$m, not more than 30 $\mu$m, not more than 10 $\mu$m, not more than 5 $\mu$m, not more than 4 $\mu$m, not more than 3 $\mu$m, not more than 2 $\mu$m, not more than 1 $\mu$m, not more than 0.5 $\mu$m, not more than 0.3 $\mu$m, or not more than 0.2 $\mu$m, and particularly preferably not more than 0.1 $\mu$m. If the longest portion of each of the second and subsequent phases is too long, the surface roughness of the glass becomes large, which makes it difficult to obtain a glass having a desired high transmittance. The lower limit of the size of the longest portion of each of the second and subsequent phases is not particularly limited, but is actually not less than 0.01 nm.

When the second and subsequent phases are in a crystallized state, the crystal system of crystals is preferably one of the hexagonal system, the trigonal system, the cubic system, the tetragonal system, the orthorhombic system, and the monoclinic system. Alternatively, the crystal system can be the triclinic system, in which case birefringence is likely to occur in the crystals and, as a result, light is likely to scatter in the crystals. Therefore, a glass having a desired high transmittance is difficult to obtain. In the case of the triclinic system, the composition of the first phase needs to be designed to make the refractive index difference of the crystals from the first phase small.

When the glass according to the present invention is in a state containing two or more phases, a large refractive index difference of the second and subsequent phases from the first phase causes light to scatter at the boundary between the phases and, therefore, makes it difficult to obtain a glass having a desired high transmittance. The difference in refractive index between the phases is, at each of nd (587.6 nm), nC (656.3 nm), nF (486.1 nm), ne (546.1 nm), ng (435.8 nm), nh (404.7 nm), ni (365.0 nm), nF' (480.0 nm), n785 (785 nm), n1310 (1310 nm), and n1550 (1550 nm) as representative wavelengths for measurement of refractive index, preferably within 1.5, within 1.3, within 1.1, within 0.9, within 0.7, within 0.5, within 0.3, within 0.1, within 0.09, within 0.07, within 0.05, within 0.03, within 0.01, within 0.008, within 0.006, within 0.004, within 0.002, within 0.0009, within 00.0007, within 0.0005, within 0.0003, or within 0.0002, and particularly preferably within 0.0001. The refractive indices of the phases can be measured with a precision refractometer (KPR-2000 manufactured by Shimadzu Corporation) or so on.

The refractive index nd (587.6 nm) of the glass according to the present invention is preferably not more than 2.50, not more than 2.40, not more than 2.20, not more than 2.00, not more than 1.80, not more than 1.70, not more than 1.60, not more than 1.58, not more than 1.55, or not more than 1.54, and particularly preferably not more than 1.53. Furthermore, the refractive index nd is preferably not less than 1.20, not less than 1.25, not less than 1.30, not less than 1.35, not less than 1.38, not less than 1.40, or not less than 1.42, and particularly preferably not less than 1.43. If the refractive index is too high, light scatters at the surface and the end surface and, thus, a glass having a desired high transmittance may be difficult to obtain. On the other hand, if the refractive index is too low, the refractive index difference between the glass according to the present invention and the air becomes small, which makes it difficult to visually recognize the glass according to the present invention and, therefore, may make it difficult to handle the glass during production.

The glass according to the present invention preferably has a unpolished surface. The theoretical strength of glass is originally very high, but glass is often broken even under a much lower stress than the theoretical strength. The reason for this is that nanoscopic defects called Griffth flaws are produced in the glass surface in processes after the forming of glass into shape, such as a polishing process or the like. Therefore, when the surface of the glass according to the present invention is unpolished, the original mechanical strength is less likely to be impaired and, thus, the glass becomes less likely to be broken. In addition, since the polishing process can be omitted, the production cost can be reduced. For example, when the glass according to the present invention has a sheet-like shape and, in this case, the entire effective surfaces of both the principal surfaces of the glass are unpolished, the glass according to the present invention becomes even less likely to be broken. In order to make the entire effective surfaces into unpolished surfaces, it is effective to make, at the time of forming into shape, surface portions corresponding to the effective surfaces into free surfaces. Furthermore, even if the surface portions corresponding to the effective surfaces make contact with a solid member or the like at the time of forming into shape, the portions having made contact with the solid member or the like only have to be heated again at a temperature of the glass transition point or higher after the forming into shape. Thus, smooth surfaces similar to free surfaces can be formed.

The thickness of the glass according to the present invention is preferably not more than 10 mm, not more than 9 mm, not more than 8 mm, not more than 7 mm, not more than 6 mm, or not more than 5 mm, and particularly preferably not more than 4 mm. If the thickness of a sample is too large, the attenuation rate of light in the inside of the glass becomes large, which makes it difficult to obtain a glass having a desired high transmittance. Furthermore, with use of the glass according to the present invention as a display, the thickness is preferably not more than 1000 $\mu$m, 500 $\mu$m, not more than 200 $\mu$m, not more than 100 $\mu$m, not more than 70 $\mu$m, not more than 50 $\mu$m, not more than 30 $\mu$m, or 1 to 20 $\mu$m, and particularly preferably 5 to 10 $\mu$m.

The difference between the maximum thickness and the minimum thickness of the glass according to the present invention is preferably not more than 50 $\mu$m, not more than 25 $\mu$m, not more than 10 $\mu$m, not more than 5 $\mu$m, not more than 1 $\mu$m, not more than 500 nm, not more than 300 nm, not more than 100 nm, not more than 50 nm, not more than 25 nm, not more than 15 nm, not more than 10 nm, not more than 9 nm, not more than 8 nm, not more than 7 nm, not more than 6 nm, not more than 5 nm, not more than 4 nm, not more than 3 nm, or not more than 2 nm, and particularly preferably not more than 1 nm. If the difference between the maximum thickness and the minimum thickness is too large, the incident angle of light having entered the glass from a direction of one of the front and back surfaces thereof becomes different from the exit angle of light when exiting from the other surface, which causes the light to scatter undesirably and makes it likely that the surface appearance looks dazzling.

The glass according to the present invention is preferably high in water resistance which is a representative chemical durability. Specifically, when the amount of alkali eluted is measured by a method based on JIS R 3502 (1995), each of the amounts of $Li_2O$, $Na_2O$, and $K_2O$ eluted is preferably not more than 2 mg, not more than 1.8 mg, not more than 1.6 mg, not more than 1.4 mg, not more than 1.2 mg, not more than 1.0 mg, not more than 0.8 mg, not more than 0.6 mg, not more than 0.4 mg, not more than 0.2 mg, not more than 0.1 mg, or not more than 0.005 mg, and particularly preferably not more than 0.003 mg. If the water resistance is low, ion exchange between alkali metals and protons on the glass surface is likely to progress and, thus, portions of the glass surface where ion exchange has progressed are likely to alter and become susceptible to breakage or the like.

The glass according to the present invention may be subjected to chemical strengthening or other treatments. Regarding the conditions for chemical strengthening treatment, the treatment time and the treatment temperature are sufficient to be appropriately selected in consideration of the glass composition, the volume fraction of each phase, the type of molten salt, and so on. For example, for the purpose of facilitating chemical strengthening, a glass composition containing much $Na_2O$, which is likely to be contained in the remaining glass phase, may be selected. Furthermore, as to the molten salt, monovalent cations of Li, Na, K, and so on or divalent cations of Mg, Ca, Sr, Ba, Zn, and so on may be contained singly or in combination. Moreover, aside from an ordinary single-step strengthening process, a multistep chemical strengthening process may be selected. The molten salt that can be used is a nitrate (such as potassium nitrate, sodium nitrate or lithium nitrate), a carbonate (such as potassium carbonate, sodium carbonate or lithium carbonate), a sulfate (such as potassium sulfate, sodium sulfate or lithium sulfate), a chloride salt (such as potassium chloride, sodium chloride or lithium chloride) or any combination of them. Among them, a nitrate or so on having a low melting point is preferably used as the molten salt and sodium nitrate is particularly preferably used. The temperature for ion exchange is preferably 330 to 550°C, more preferably 350 to 500°C, and particularly preferably 390 to 450°C, and the time for ion exchange is preferably 30 minutes to 12 hours and more preferably 45 minutes to 10 hours. The above-described conditions for strengthening may be arbitrarily changed depending on the application or strength required and the preferred conditions are not necessarily limited to the above.

In giving a compressive stress to the glass according to the present invention by chemical strengthening or other treatments, the compressive stress value (CS) is preferably not less than 50 MPa, not less than 100 MPa, not less than 150 MPa, not less than 200 MPa, not less than 230 MPa, or not less than 260 MPa, and particularly preferably not less than 300 MPa. If the compressive stress value is too small, the Vickers hardness and the bending strength may be low.

In giving a compressive stress to the glass according to the present invention by chemical strengthening or other treatments, the depth of compressive stress (DOC) is preferably not less than 10 $\mu$m, not less than 50 $\mu$m, not less than 100 $\mu$m, or not less than 110 $\mu$m, and particularly preferably not less than 120 $\mu$m. If the depth of compressive stress is too small, the fracture strength may be low. The compressive stress value (CS) and the depth of compressive stress (DOC) can be measured with a scattered light photoelastic stress meter SLP-1000 (manufactured by Orihara Industrial Co., Ltd.) and a surface stress meter FSM-6000 (manufactured by Orihara Industrial Co., Ltd.).

In the glass according to the present invention, the abraded four-point bending strength is preferably not less than 150 MPa, more preferably not less than 200 MPa, even more preferably not less than 235 MPa, still even more preferably not less than 245 MPa, and particularly preferably not less than 250 MPa. If the abraded four-point bending strength is too low, the glass is susceptible to breakage upon dropping when used as a smartphone cover glass or the like. The upper limit of the abraded four-point bending strength is not particularly limited, but is actually not more than 1500 MPa. The abraded four-point bending strength can be measured in the following manner. First, in a state that a glass sheet processed to a size of 50 mm × 50 mm and a thickness of 0.6 mm is erected, 1.5 mm thick SUS sheets are applied to the principal surface and opposite surface of the glass sheet to immobilize the glass sheet. The tip of a pendulum arm is allowed to hit the glass sheet through a P180 sand paper, thus abrading the glass sheet. The arm tip is formed of a 5 mm diameter iron cylinder and the weight of the arm is 550 g. The height from which the arm is swung down is set at 5 mm above the hitting point. The abraded glass sheet is measured in terms of four-point bending strength.

Also when the glass according to the present invention is a crystallized glass, it preferably has the same characteristics as described above.

The shape of the glass according to the present invention is normally a sheet-like shape (particularly, a flat sheet-like shape), but is not limited to this, and can be appropriately selected according to application.

Next, a description will be given of a method for producing a glass according to the present invention.

The method for producing a glass according to the present invention includes the steps of: melting a glass raw material to obtain molten glass; and forming the molten glass into shape.

Specifically, first, a batch of raw materials (a glass raw material) prepared to provide a glass having the above-described composition is loaded into a glass melting furnace, melted at 1200 to 1800°C to obtain molten glass, and the molten glass is then formed into shape. In melting the glass, one or a combination of two or more of a flame melting process using a burner or the like, an electric melting process by electrical heating, a melting process using laser irradiation, a melting process using plasma, a solution phase synthesis, and a gas phase synthesis may be used.

The forming process is preferably at least one selected from among an overflow process, a float process, a down-draw process, a slot down process, a redraw process, a containerless process, a blow process, a press forming process, a roll process, a bushing process, and a tube draw process. Furthermore, after the forming into shape, the glass may be reheated at a temperature of the glass transition point or higher. By doing so, a glass according to the present invention having a good surface quality can be produced.

In forming the glass into shape by an overflow process, the glass viscosity at the bottom end of a trough-shaped refractory is preferably $10^{3.5}$ to $10^{5.0}$ dPa·s. If any force is not applied to the bottom end of the trough-shaped structure, the glass falls down while contracting by surface tension. To avoid this, it is necessary to nip both sides of the glass dough with rollers to draw out the glass dough in a widthwise direction against contraction. In forming the glass according to the present invention into shape, because of a small quantity of heat of the glass itself, the cooling rate of the glass increases rapidly from the moment the glass leaves the trough-shaped refractory. Therefore, the glass viscosity at the bottom end of the trough-shaped refractory is preferably not more than $10^{5.0}$ dPa·s, not more than $10^{4.8}$ dPa·s, not more than $10^{4.6}$ dPa·s, not more than $10^{4.4}$ dPa·s, or not more than $10^{4.2}$ dPa·s, and particularly preferably not more than $10^{4.0}$ dPa·s. By doing so, when given a tensile stress in the widthwise direction, the glass can be increased in sheet width while being prevented from breakage and can be stably drawn out downward.

Next, the obtained glass is annealed. The purpose of annealing is mainly to remove strain and remaining stress. In this case, the glass is preferably subjected to heat treatment by allowing it to stay in a temperature range from room temperature to the strain point (approximately equal to a temperature 5 to 20°C lower than the glass transition point) for at least one minute, more preferably for not less than 3 minutes, even more preferably for not less than 16 minutes, and most preferably for more than 30 minutes. By doing so, a glass composed only of a single glass phase can be easily obtained. As a result, the chemical durability of the glass can be increased, the glass surface can be controlled arbitrarily, and a glass having a desired high transmittance can be easily obtained. Alternatively, by the annealing, it is possible to not only remove strain and remaining stress, but also form phase separation in the glass. In this case, the glass is preferably subjected to heat treatment by allowing it to stay in a temperature range higher than the strain point for at least one minute, more preferably for not less than 3 minutes, even more preferably for not less than 16 minutes, and most preferably for more than 30 minutes. By doing so, the glass can be separated into phases and the state of phase separation takes on, in many cases, binodal decomposition. When the glass according to the present invention is separated in phases, it is separated into a first phase containing a high proportion of $SiO_2$ and second and subsequent phases and the chemical durability of the second and subsequent phases is, in many cases, lower than that of the first phase. In these cases, irregularities are easily formed on the glass surface because of differences in chemical durability and so on from phase to phase. However, by designing the above-described preferred glass composition, the degree of irregularities can be reduced to the extent that a desired transmittance can be obtained. Furthermore, when given fine irregularities, the glass according to the present invention can be increased in releasability from an object in contact with the glass according to the present invention. In addition, the surface area of the glass becomes larger than that of glass with a free surface and, thus, the frictional force and the physical and chemical adsorbability can be increased, resulting in an increased functionality of the glass according to the present invention. The annealing may be conducted with application of sonic waves or electromagnetic waves.

As described previously, when desired to have a white or milky white appearance in an application as a cooker top plate or so on, the glass according to the present invention is preferably separated into two or more phases. In order to obtain such a glass having a white or milky white appearance, the glass according to the present invention after being formed into shape is preferably subjected to heat treatment by allowing it to stay in a temperature range higher than the strain point for at least one minute. Specifically, the temperature for the heat treatment is preferably not lower than 700°C, more preferably not lower than 800°C, even more preferably not lower than 850°C, particularly preferably not lower than 900°C, preferably not higher than 1500°C, more preferably not higher than 1200°C, and even more preferably not higher than 1100°C. If the temperature for the heat treatment is too high, the glass is transformed from a solid state to a melt state, which makes it difficult to obtain a desired shape. On the other hand, if the temperature for the heat treatment is too low, this makes it difficult to efficiently progress phase separation, resulting in increased production cost. The time for the heat treatment is preferably not less than 1 minute, not less than 1 hour, not less than 5 hours, not less than 10 hours, or not less than 20 hours, particularly preferably not less than 24 hours, preferably not more than 1000 hours, not more than 500 hours, not more than 100 hours, or not more than 50 hours. If the time for the heat treatment is out of the above range, a glass having desired characteristics is difficult to obtain.

The cooling rate during cooling of the glass according to the present invention in a high-temperature state may have a specific temperature gradient or two or more levels of temperature gradients. In the case where the glass is desired to obtain a sufficient thermal shock resistance, it is desirable to control the cooling rate to sufficiently structurally relax the remaining glass phase. In this case, the average cooling rate from the maximum temperature of annealing to 25°C is, in an innermost portion of the glass according to the present invention farthest from the surface thereof, preferably 3000°C/min, not higher than 1000°C/min, not higher than 500°C/min, not higher than 400°C/min, not higher than 300°C/min, not higher than 200°C/min, not higher than 100°C/min, not higher than 50°C/min, not higher than 25°C/min, or not higher than 10°C/min, and particularly preferably not higher than 5°C/min. In the case where the glass is desired to obtain dimensional stability over a long period, the above average cooling rate is preferably not higher than 2.5°C/min, not higher than 1°C/min, not higher than 0.5°C/min, not higher than 0.1°C/min, or not higher than 0.05°C/min, and particularly preferably not higher than 0.01°C/min. Except for the case where physical strengthening treatment by air cooing, water cooling or the like is performed, the cooling rate of the glass at the glass surface and the cooling rate thereof in the innermost portion of the glass thickness farthest from the glass surface preferably approximate to each other. The value of the cooling rate in the innermost portion farthest from the surface divided by the cooling rate at the surface is preferably 0.0001 to 1, 0.001 to 1, 0.01 to 1, 0.1 to 1, 0.5 to 1, 0.8 to 1, or 0.9 to 1, and particularly preferably 1. As the above value is closer to 1, residual strain is less likely to occur in all locations of the glass according to the present invention and long-term dimensional stability is more likely to be obtained. The cooling rate at the surface can be estimated by contact thermometry or with a radiation thermometer. The temperature of the inner portions of the glass can be estimated by immersing the glass in a high-temperature state into a cooling medium, measuring the heat quantity and rate of heat quantity change of the cooling medium, and making an estimate from the numeric data obtained by the measurement, the respective specific heats and the thermal conductivity, and so on of the glass and the cooling medium.

The obtained glass according to the present invention may be cut. For example, in cutting with a wire saw, cutting is preferably performed along with the supply of a slurry containing polishing grains to the wire saw.

The method for producing a glass according to the present invention may further include the step of subjecting a glass obtained in the step of forming the molten glass into shape to heat treatment to crystallize the glass.

Specifically, a crystallized glass can be obtained by subjecting the glass after being annealed to heat treatment to crystallize it. The conditions of crystallization are as follows. First, nucleation is performed at 700°C to 1200°C (preferably 750 to 900°C) for 0.1 to 60 hours (preferably 0.25 to 50 hours and more preferably 1 to 40 hours) and crystal growth is then performed at 800 to 1300°C (preferably 850 to 1100°C) for 0.1 to 50 hours (preferably 0.2 to 10 hours and more preferably 0.25 to 5 hours). The heat treatment in each of the nucleation process and crystal growth process may be performed at a specific temperature only, may be performed stepwise by holding the glass in two or more temperature levels or may be performed by the application of heat with a temperature gradient. Alternatively, without nucleation, only the heat treatment for the crystal growth may be performed. By doing so, for example, a crystallized glass in which crystals as described below precipitate can be obtained. Specifically, examples of the type of crystals include: $Al_2SiO_5$ (aluminum silicate), zirconia, zirconia titanate, a tin-containing zirconia-based oxide, titania, aluminotitanate, β-quartz solid solution, α-quartz, β-quartz, β-spodumene solid solution, spodumene, zircon, cordierite, enstatite, mica, nepheline, anorthite, lithium disilicate, lithium metasilicate, wollastonite, diopside, cristobalite, tridymite, feldspar, spinel-based crystals, and metal colloid. These types of crystals may be contained singly or in combination of two or more of them.

The crystals may be precipitated by annealing or the crystallization may be promoted by applying sonic waves or electromagnetic waves to the glass. The cooling rate during cooling of the crystallized glass according to the present invention in a high-temperature state may have a specific temperature gradient or two or more levels of temperature gradients. The cooling rate is preferably the same as the above-described cooling rate for the glass.

[Examples]

Next, the present invention will be described with reference to examples, but the present invention is not limited to the following examples. Tables 1 to 32 show the compositions and characteristic values of glasses (Sample Nos. 1 to 80) according to examples of the present invention.

[Table 1]

| | | No.1 | No.2 | No.3 | No.4 | No.5 |
|---|---|---|---|---|---|---|
| Compositon [% by mass] | $SiO_2$ | 59.2 | 59.6 | 64.5 | 49.8 | 52.3 |
| | $Al_2O_3$ | 19.4 | 22.7 | 23.5 | 21 | 22.2 |
| | $B_2O_3$ | 4.8 | 5 | 5.4 | 3.9 | 9 |
| | $Li_2O$ | 0 | 0 | 0.0001 | 0 | 0 |
| | $P_2O_5$ | 10.4 | 6.3 | 0.01 | 19.5 | 10.3 |
| | $TiO_2$ | 0.021 | 0.021 | 0.022 | 0.011 | 0.011 |
| | $Fe_2O_3$ | 0.007 | 0.008 | 0.007 | 0.008 | 0.009 |
| | $Na_2O$ | 0 | 0 | 0 | 0 | 0 |
| | $K_2O$ | 0.0001 | 0 | 0 | 0 | 0 |
| | $MgO$ | 5.9 | 6.03 | 6.3 | 5.5 | 5.9 |
| | $CaO$ | 0.04 | 0.05 | 0.04 | 0.05 | 0.06 |
| | $SrO$ | 0 | 0.011 | 0 | 0 | 0.007 |
| | $BaO$ | 0 | 0 | 0 | 0 | 0 |
| | $ZnO$ | 0 | 0 | 0 | 0 | 0 |
| | $SnO_2$ | 0.24 | 0.24 | 0.24 | 0.21 | 0.23 |
| | $ZrO_2$ | 0.001 | 0 | 0 | 0.001 | 0 |
| | $HfO_2$ | 0.001 | 0 | 0 | 0.001 | 0 |
| | $Y_2O_3$ | 0 | 0 | 0.01 | 0 | 0 |
| | Pt | 0.000001 | 0.000002 | 0.000001 | 0.000001 | 0.000001 |
| | Rh | 0.000001 | 0.000001 | 0.000001 | 0.000001 | 0.000001 |
| Composition [ppm] | $V_2O_5$ | 0 | 1 | 0 | 0 | 0 |
| | $Cr_2O_3$ | 1 | 0 | 1 | 0 | 1 |
| | $MoO_3$ | 0 | 1 | 0 | 0 | 0 |
| | $MnO_2$ | 0.02 | 0 | 0 | 0 | 0 |
| | $CoO$ | 0 | 0.02 | 0 | 0 | 0 |
| | $CuO$ | 0 | 0 | 0.02 | 0 | 0 |
| | $Nd_2O_3$ | 0 | 0 | 0 | 0.02 | 0 |
| | $WO_3$ | 0 | 0 | 0 | 0 | 0.02 |
| | $NiO$ | 1 | 0 | 0 | 0.0001 | 0 |
| | $Sb_2O_3$ | 0 | 0 | 0 | 1 | 0 |
| | $As_2O_3$ | 0 | 0 | 0 | 0 | 0 |
| | $SO_3$ | 1 | 1 | 1 | 1 | 1 |
| $P_2O_5 \times TiO_2$ | | 0.22 | 0.13 | 0.00022 | 0.21 | 0.11 |
| $(P_2O_5 \times TiO_2)/(P_2O_5 + Al_2O_3)$ | | 0.0073 | 0.0046 | 0.0000094 | 0.0053 | 0.0035 |
| $B_2O_3/P_2O_5$ | | 0.46 | 0.79 | 540 | 0.20 | 0.87 |
| Pt+Rh | | 0.000002 | 0.000003 | 0.000002 | 0.000002 | 0.000002 |
| $Li_2O + Na_2O + K_2O$ | | 0.0001 | 0 | 0.0001 | 0 | 0 |
| $MgO +CaO +SrO+BaO$ | | 5.94 | 6.091 | 6.34 | 5.55 | 5.967 |
| $(MgO+CaO+SrO+BaO)/P_2O_5$ | | 0.57 | 0.97 | 634 | 0.28 | 0.58 |

[Table 2]

| | No.1 | No.2 | No.3 | No.4 | No.5 |
|---|---|---|---|---|---|
| Density [g/cm$^3$] | 2.34 | 2.39 | 2.41 | 2.31 | 2.34 |
| $\beta$-0H [/mm] | unmeasured | unmeasured | unmeasured | unmeasured | unmeasured |
| CLTE 30-380°C [x 10$^{-7}$/°C] | 22 | 24.1 | 25.5 | 21.3 | 24.4 |
| CLTE 30-750°C [×10$^{-7}$/°C] | 26 | 27.6 | 28.9 | 25.3 | 32.5 |
| Glass transition point Tg | 740 | 761 | 778 | 725 | 724 |
| Deformation point Tf | 828 | 859 | 885 | 777 | 792 |
| 10$^4$ °C | 1370 | 1330 | 1337 | 1371 | 1275 |
| 10$^{3.5}$ °C | 1447 | 1401 | 1396 | 1447 | 1346 |
| 10$^3$ °C | 1535 | 1484 | 1470 | 1534 | 1428 |
| 10$^{2.5}$ °C | 1636 | 1583 | 1564 | 1634 | 1523 |
| 10$^2$ °C | 1753 | 1702 | 1687 | 1752 | 1637 |
| Liquidus temperature °C | 1319 | 1438 | 1480 or higher | 1518 or higher | 1274 |
| Liquidus viscosity °C | 4.6 | 3.3 | less than 2.9 | less than 3.1 | 4.0 |
| Transmittance @ 1200nm [%] | unmeasured | unmeasured | unmeasured | unmeasured | 87.7 |
| Transmittance @ 800nm [%] | unmeasured | unmeasured | unmeasured | unmeasured | 63.5 |
| Transmittance @ 555nm [%] | unmeasured | unmeasured | unmeasured | unmeasured | 55.4 |
| Transmittance @ 380nm [%] | unmeasured | unmeasured | unmeasured | unmeasured | 68.0 |
| Transmittance @ 300nm [%] | unmeasured | unmeasured | unmeasured | unmeasured | 14.4 |
| L* | unmeasured | unmeasured | unmeasured | unmeasured | 95.3 |
| a* | unmeasured | unmeasured | unm easured | unmeasured | -0.2 |
| b* | unmeasured | unmeasured | unmeasured | unmeasured | 0.3 |
| Surface roughness of principal surface Ra [nm ] | unmeasured | 0.01 | unmeasured | unmeasured | unmeasured |
| Surface roughness of end surface Ra [nm ] | unmeasured | 0.0001 | unmeasured | unmeasured | unmeasured |
| Waviness [μm] | unmeasured | 0.001 | unmeasured | unmeasured | unmeasured |
| Color appearance | clear and colorless | clear and colorless | clear and colorless | clear and colorless | clear and colorless |

[Table 3]

| | | No.6 | No.7 | No.8 | No.9 | No.10 |
|---|---|---|---|---|---|---|
| Compositon [% by mass] | $SiO_2$ | 53.2 | 55.0 | 57.0 | 56.7 | 56.4 |
| | $Al_2O_3$ | 20.7 | 21.4 | 22 | 22.1 | 21.9 |
| | $B_2O_3$ | 5.1 | 4.9 | 4.7 | 4.7 | 2.6 |
| | $Li_2O$ | 0 | 0 | 0 | 0 | 0 |
| | $P_2O_5$ | 9.64 | 9.9 | 10.2 | 10.3 | 10.2 |
| | $TiO_2$ | 0.034 | 0.018 | 0.02 | 0.012 | 2.8 |
| | $Fe_2O_3$ | 0.01 | 0.009 | 0.008 | 0.008 | 0.007 |
| | $Na_2O$ | 0 | 0 | 0 | 0.0001 | 0 |
| | $K_2O$ | 0.0001 | 0 | 0 | 0 | 0 |
| | $MgO$ | 2.8 | 4.3 | 5.8 | 5.9 | 5.8 |
| | $CaO$ | 0.03 | 0.03 | 0.05 | 0.04 | 0.04 |
| | $SrO$ | 0 | 0 | 0.008 | 0.001 | 0 |
| | $BaO$ | 0 | 0 | 0 | 0 | 0 |
| | $ZnO$ | 0 | 0 | 0 | 0 | 0 |
| | $SnO_2$ | 0.19 | 0.2 | 0.22 | 0.22 | 0.22 |
| | $ZrO_2$ | 8.3 | 4.2 | 0 | 0 | 0.001 |
| | $HfO_2$ | 0.001 | 0.001 | 0 | 0.001 | 0 |
| | $Y_2O_3$ | 0 | 0 | 0 | 0 | 0 |
| | Pt | 0.000001 | 0.000001 | 0.000002 | 0.000001 | 0.000001 |
| | Rh | 0.000001 | 0.000001 | 0.000001 | 0.000001 | 0.000001 |
| Compositon [ppm] | $V_2O_5$ | 1 | 0 | 0 | 0 | 0 |
| | $Cr_2O_3$ | 0 | 0 | 0 | 0 | 0 |
| | $MoO_3$ | 0 | 1 | 0 | 1 | 0 |
| | $MnO_2$ | 0 | 0 | 0 | 0 | 0 |
| | $CoO$ | 0 | 0 | 0 | 0 | 0.02 |
| | $CuO$ | 0 | 0 | 0 | 0.02 | 0 |
| | $Nd_2O_3$ | 0 | 0 | 0.02 | 0 | 0 |
| | $WO_3$ | 0 | 0.02 | 0 | 0 | 0 |
| | $NiO$ | 0 | 0 | 1 | 0 | 0 |
| | $Sb_2O_3$ | 0 | 0 | 0 | 0 | 1 |
| | $As_2O_3$ | 0 | 0 | 0 | 0 | 0 |
| | $SO_3$ | 1 | 1 | 1 | 1 | 1 |
| $P_2O_5 \times TiO_2$ | | 0.33 | 0.18 | 0.20 | 0.12 | 28.97 |
| $(P_2O_5 \times TiO_2)/(P_2O_5 + Al_2O_3)$ | | 0.0108 | 0.0057 | 0.0063 | 0.0038 | 0.9024 |
| $B_2O_3/P_2O_5$ | | 0.53 | 0.49 | 0.46 | 0.46 | 0.25 |
| Pt+Rh | | 0.000002 | 0.000002 | 0.000003 | 0.000002 | 0.000002 |
| $Li_2O + Na_2O + K_2O$ | | 0 | 0 | 0 | 0 | 0 |
| $MgO + CaO + SrO + BaO$ | | 2.83 | 4.330 | 5.858 | 5.941 | 5.84 |
| $(MgO + CaO + SrO + BaO)/P_2O_5$ | | 0.29 | 0.44 | 0.57 | 0.58 | 0.57 |

[Table 4]

| | No.6 | No.7 | No.8 | No.9 | No.10 |
|---|---|---|---|---|---|
| Density [g/cm$^3$] | 2.47 | 2.42 | 2.37 | 2.36 | 2.40 |
| B-0H [/mm] | unmeasured | unmeasured | unmeasured | unmeasured | 0.05 |
| CLTE 30-380°C [$\times 10^{-7}$/°C] | 22.3 | 22.4 | 22.9 | 23.1 | 22.9 |
| CLTE 30-750°C [$\times 10^{-7}$/°C] | 24.9 | 25.5 | 26.5 | 26.8 | 27.1 |
| Glass transition point Tg | 780 | 762 | 752 | 751 | 747 |
| Deformation point Tf | 897 | 882 | 827 | 851 | 900 or higher |
| $10^4$ °C | 1338 | 1340 | 1341 | 1343 | 1337 |
| $10^{3.5}$ °C | 1408 | 1412 | 1413 | 1416 | 1410 |
| $10^3$ °C | 1488 | 1494 | 1496 | 1500 | 1493 |
| $10^{2.5}$ °C | 1583 | 1589 | 1582 | 1598 | 1591 |
| $10^2$ °C | 1696 | 1702 | 1704 | 1714 | 1706 |
| Liquidus temperature °C | 1479 or higher | 1389 | 1346 | 1336 | 1350 |
| Liquidus viscosity °C | less than 3.1 | 3.7 | 4.0 | 4.1 | 3.9 |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |
| Color appearance | clear and colorless | clear and colorless | clear and colorless | clear and colorless | clear and colorless |

[Table 5]

| | | No.11 | No.12 | No.13 | No.14 | No.15 |
|---|---|---|---|---|---|---|
| Compositon [% by mass] | $SiO_2$ | 56.0 | 56.2 | 56.9 | 56.4 | 65.0 |
| | $Al_2O_3$ | 21.9 | 22.1 | 22.4 | 22.2 | 23.7 |
| | $B_2O_3$ | 0 | 0 | 0 | 5 | 4.7 |
| | $Li_2O$ | 0 | 0 | 0 | 0.0001 | 0 |
| | $P_2O_5$ | 10.3 | 10.3 | 10.4 | 10.2 | 0.01 |
| | $TiO_2$ | 5.7 | 4.6 | 2.3 | 0.014 | 0.018 |
| | $Fe_2O_3$ | 0.007 | 0.007 | 0.008 | 0.008 | 0.008 |
| | $Na_2O$ | 0.0001 | 0 | 0 | 0 | 0 |
| | $K_2O$ | 0 | 0 | 0 | 0 | 0.0001 |
| | $MgO$ | 5.8 | 6.5 | 7.7 | 5.9 | 6.3 |
| | $CaO$ | 0.04 | 0.04 | 0.05 | 0.05 | 0.05 |
| | $SrO$ | 0 | 0 | 0 | 0 | 0 |
| | $BaO$ | 0 | 0 | 0 | 0 | 0 |
| | $ZnO$ | 0 | 0 | 0 | 0 | 0 |
| | $SnO_2$ | 0.22 | 0.22 | 0.22 | 0.22 | 0.23 |
| | $ZrO_2$ | 0 | 0 | 0.001 | 0 | 0 |
| | $HfO_2$ | 0 | 0 | 0.001 | 0 | 0 |
| | $Y_2O_3$ | 0.01 | 0 | 0 | 0 | 0.01 |
| | Pt | 0.000001 | 0.000001 | 0.000001 | 0.000002 | 0.000001 |
| | Rh | 0.000001 | 0.000001 | 0.000001 | 0.000001 | 0.000001 |
| Composition [ppm] | $V_2O_5$ | 0 | 0 | 0 | 0 | 0 |
| | $Cr_2O_3$ | 0 | 1 | 0 | 0 | 0 |
| | $MoO_3$ | 1 | 0 | 0 | 1 | 0 |
| | $MnO_2$ | 0 | 0 | 0 | 0 | 0.02 |
| | $CoO$ | 0 | 0 | 0 | 0 | 0 |
| | $CuO$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | ND | 0 | 0 | 0 | 0 | 0 |
| | $Sb_2O_3$ | 0 | 0 | 0 | 0 | 0 |
| | $As_2O_3$ | 0 | 0 | 0 | 0 | 1 |
| | $SO_3$ | 0 | 0 | 0 | 1 | 1 |
| $P_2O_5 \times TiO_2$ | | 58.71 | 47.38 | 23.92 | 0.14 | 0 |
| $(P_2O_5 \times TiO_2)/(P_2O_5+Al_2O_3)$ | | 1.8233 | 1.4623 | 0.7293 | 0.0044 | 0.0000076 |
| $B_2O_3/P_2O_5$ | | 0 | 0 | 0 | 0.49 | 470 |
| Pt+Rh | | 0.000002 | 0.000002 | 0.000002 | 0.000003 | 0.000002 |
| $Li_2O+Na_2O+K_2O$ | | 0.0001 | 0 | 0 | 0.0001 | 0.0001 |
| $MgO+CaO+SrO+BaO$ | | 5.84 | 6.54 | 7.75 | 5.95 | 6.35 |
| $(MgO+CaO+SrO+BaO)/P_2O_5$ | | 0.57 | 0.63 | 0.75 | 0.58 | 635 |

[Table 6]

| | No.11 | No.12 | No.13 | No.14 | No.15 |
|---|---|---|---|---|---|
| Density [g/cm$^3$] | 2.44 | 2.44 | 2.44 | 2.36 | 2.41 |
| $\beta$B-OH [/mm] | unmeasured | unmeasured | unmeasured | unmeasured | unmeasured |
| CLTE 30-380°C [$\times 10^{-7}$/°C] | 23.3 | 23.7 | 25.3 | 23.1 | 25.0 |
| CLTE 30-750°C [$\times 10^{-7}$/°C] | 27.4 | 27.7 | 29.0 | 26.6 | 28.5 |
| Glass transition point Tg | 757 | 763 | 776 | 752 | 787 |
| Deformation point Tf | 900 or higher | 900 or higher | 871 | 843 | 896 |
| 10$^4$ °C | 1337 | 1338 | 1340 | 1336 | 1355 |
| 10$^{3.5}$ °C | 1409 | 1410 | 1412 | 1410 | 1410 |
| 10$^3$ °C | 1493 | 1493 | 1495 | 1496 | 1480 |
| 10$^{2.5}$ °C | 1590 | 1590 | 1592 | 1596 | 1575 |
| 10$^2$ °C | 1706 | 1703 | 1707 | 1713 | 1708 |
| Liquidus temperature °C | 1346 | 1438 | 1439 | 1359 | unmeasured |
| Liquidus viscosity °C | 3.9 | 3.3 | 3.3 | 3.8 | unmeasured |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |
| Color appearance | clear and colorless | clear and colorless | clear and colorless | clear and colorless | clear and colorless |

[Table 7]

| | | No.16 | No.17 | No.18 | No.19 | No.20 |
|---|---|---|---|---|---|---|
| Composition [% by mass] | $SiO_2$ | 58.1 | 55.6 | 75.6 | 56.8 | 51.5 |
| | $Al_2O_3$ | 21.9 | 28.4 | 12.3 | 18.2 | 20.2 |
| | $B_2O_3$ | 5.4 | 0 | 3.7 | 8.7 | 9.1 |
| | $Li_2O$ | 0 | 0 | 0 | 0 | 0 |
| | $P_2O_5$ | 12.7 | 15.4 | 0.01 | 13 | 18.8 |
| | $TiO_2$ | 0.002 | 0.002 | 0.002 | 0.002 | 0.003 |
| | $Fe_2O_3$ | 0.006 | 0.007 | 0.002 | 0.006 | 0.003 |
| | $Na_2O$ | 0 | 0 | 0.0001 | 0 | 0 |
| | $K_2O$ | 0 | 0 | 0 | 0 | 0 |
| | MgO | 1.5 | 0.01 | 1.2 | 0.63 | 0 |
| | CaO | 0.02 | 0.15 | 1.1 | 1.09 | 0 |
| | SrO | 0 | 0 | 3.5 | 0.91 | 0 |
| | BaO | 0 | 0 | 2.1 | 0 | 0 |
| | ZnO | 0 | 0 | 0 | 0 | 0 |
| | $SnO_2$ | 0.41 | 0.39 | 0.46 | 0.62 | 0.40 |
| | $ZrO_2$ | 0.001 | 0.001 | 0 | 0 | 0 |
| | $HfO_2$ | 0.001 | 0.001 | 0 | 0 | 0 |
| | $Y_2O_3$ | 0 | 0 | 0 | 0.01 | 0 |
| | Pt | 0.000001 | 0.000001 | 0.000001 | 0.000001 | 0.000001 |
| | Rh | 0.000001 | 0.000001 | 0.000001 | 0.000001 | 0.000001 |
| Composition [ppm] | $V_2O_5$ | 0 | 0 | 0 | 0 | 0 |
| | $Cr_2O_3$ | 0 | 1 | 1 | 0 | 0 |
| | $MoO_3$ | 1 | 0 | 0 | 0 | 1 |
| | $MnO_2$ | 0 | 0 | 0 | 0 | 0 |
| | CoO | 0.02 | 0 | 0 | 0 | 0 |
| | CuO | 0 | 0.02 | 0 | 0 | 0 |
| | $Nd_2O_3$ | 0 | 0 | 0.02 | 0 | 0 |
| | $WO_3$ | 0 | 0 | 0 | 0.02 | 0 |
| | NiO | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 1 | 1 | 1 | 1 | 1 |
| $P_2O_5 \times TiO_2$ | | 0.03 | 0.03 | 0.00 | 0.03 | 0.06 |
| $(P_2O_5 \times TiO_2)/(P_2O_5+Al_2O_3)$ | | 0.0007 | 0.0007 | 0.0000 | 0.0008 | 0.0014 |
| $B_2O_3/P_2O_5$ | | 0.43 | 0 | 370 | 0.67 | 0.48 |
| Pt+Rh | | 0.000002 | 0.000002 | 0.000002 | 0.000002 | 0.000002 |
| $Li_2O+Na_2O+K_2O$ | | 0 | 0 | 0.0001 | 0 | 0 |
| $M_2O+CaO+SrO+BaO$ | | 1.52 | 0.16 | 7.9 | 2.63 | 0 |
| $(MgO+CaO+SrO+BaO)/P_2O_5$ | | 0.12 | 0.01 | 790 | 0.20 | 0 |

[Table 8]

| | No.16 | No.17 | No.1 8 | No.19 | No.20 |
|---|---|---|---|---|---|
| Density [g/cm$^3$] | 2.29 | 2.30 | 2.37 | 2.26 | 2.20 |
| $\beta$-OH [/mm] | unmeasured | unmeasured | unmeasured | unmeasured | unmeasured |
| CLTE 30-380°C [$\times 10^{-7}$/°C] | 15.2 | 11.7 | 23.2 | 18.9 | unmeasured |
| CLTE 30-750°C [$\times 10^{-7}$/°C] | 16.7 | 14.0 | 24.2 | 22.0 | unmeasured |
| Glass transition point Tg | 779 | unmeasured | 801 | 722 | unmeasured |
| Deformation point Tf | 865 | unmeasured | 872 | 841 | unmeasured |
| $10^4$°C | 1459 | 1526 | 1555 | 1450 | unmeasured |
| $10^{3.5}$°C | 1537 | 1600 | 1647 | 1532 | unmeasured |
| $10^3$°C | 1625 | 1686 | 1763 | 1625 | unmeasured |
| $10^{2.5}$°C | 1727 | 1789 | 1916 | 1732 | unmeasured |
| $10^2$°C | 1846 | 1914 | 2124 | 1856 | unmeasured |
| Liquidus temperature °C | 1478 | 1525 or hgher | 1339 | 1502 or hgher | unmeasured |
| Liquidus viscosity °C | 3.9 | less than 4.0 | 5.8 | less than 3.7 | unmeasured |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555 nm [%] | unmeasured | unmeasured | unmeasured | unmeasured | unmeasured |
| Transmittance @ 380 nm [%] | unmeasured | unmeasured | unmeasured | unmeasured | unmeasured |
| Transmittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of principal surface Ra [nm ] | unmeasured | unmeasured | unmeasured | unmeasured | unmeasured |
| Surface roughness of end surface Ra [nm ] | unmeasured | unmeasured | unmeasured | unmeasured | unmeasured |
| Waviness [$\mu$m] | unmeasured | unmeasured | unmeasured | unmeasured | unmeasured |
| Color appearance | clear and colorless | clear and colorless | clear and colorless | clear and colorless | clear and colorless |

[Table 9]

| | | No.21 | No.22 | No.23 | No.24 | No.25 |
|---|---|---|---|---|---|---|
| Composition [% by mass] | $SiO_2$ | 65.0 | 56.8 | 56.2 | 56.9 | 52.3 |
| | $Al_2O_3$ | 22.4 | 21.4 | 21.3 | 21.4 | 17.4 |
| | $B_2O_3$ | 10.1 | 2.9 | 2.8 | 2.8 | 11.5 |
| | $Li_2O$ | 0 | 0.0001 | 0 | 0.0001 | 0 |
| | $P_2O_5$ | 2.1 | 12.4 | 12.3 | 12.4 | 12.3 |
| | $TiO_2$ | 0.003 | 6.04 | 6.01 | 6.05 | 6.09 |
| | $Fe_2O_3$ | 0.003 | 0.009 | 0.995 | 0.003 | 0.003 |
| | $Na_2O$ | 0 | 0 | 0 | 0 | 0 |
| | $K_2O$ | 0 | 0.0001 | 0 | 0 | 0 |
| | MgO | 0 | 0.03 | 0 | 0 | 0 |
| | CaO | 0 | 0.01 | 0 | 0 | 0 |
| | SrO | 0 | 0 | 0 | 0 | 0 |
| | BaO | 0 | 0 | 0 | 0 | 0 |
| | ZnO | 0 | 0 | 0 | 0 | 0 |
| | $SnO_2$ | 0.44 | 0.41 | 0.41 | 0.41 | 0.41 |
| | $ZrO_2$ | 0 | 0.001 | 0.001 | 0 | 0.001 |
| | $HfO_2$ | 0 | 0.001 | 0.001 | 0 | 0.001 |
| | $Y_2O_3$ | 0 | 0 | 0 | 0 | 0 |
| | Pt | 0.000001 | 0.000001 | 0.000001 | 0.000002 | 0.000001 |
| | Rh | 0.000001 | 0.000001 | 0.000001 | 0.000001 | 0.000001 |
| Composition [ppm ] | $V_2O_5$ | 0 | 0 | 0 | 1 | 0 |
| | $Cr_2O_3$ | 0 | 1 | 1 | 0 | 1 |
| | $MoO_3$ | 0 | 0 | 0 | 0 | 0 |
| | $MnO_2$ | 0 | 0 | 0 | 0 | 0 |
| | CoO | 0 | 0 | 0 | 0 | 0 |
| | CuO | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | NiO | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 1 | 1 | 1 | 0 | 0 |
| $P_2O_5 \times TiO_2$ | | 0.01 | 74.90 | 73.92 | 75.02 | 74.91 |
| $(P_2O_3 \times TiO_2)/ (P_2O_5+Al_2O_3)$ | | 0.0003 | 2.2159 | 2.2001 | 2.2195 | 2.5221 |
| $B_2O_3/P_2O_5$ | | 4.81 | 0.23 | 0.23 | 0.23 | 0.93 |
| Pt+Rh | | 0.000002 | 0.000002 | 0.000002 | 0.000003 | 0.000002 |
| $Li_2O+Na_2O+K_2O$ | | 0 | 0.0002 | 0 | 0.0001 | 0 |
| MgO+CaO+SrO+BaO | | 0 | 0.0400 | 0 | 0 | 0 |
| $(MgO+CaO+SrO+BaO)/P_2O_5$ | | 0 | 0.0032 | 0 | 0 | 0 |

[Table 10]

| | No.21 | No.22 | No.23 | No.24 | No.25 |
|---|---|---|---|---|---|
| Density [g/cm$^3$] | 2.31 | 2.32 | unmeasured | unmeasured | unmeasured |
| $\beta$-OH [/mm] | unmeasured | unmeasured | unmeasured | unmeasured | unmeasured |
| CLTE 30-380°C [×10$^{-7}$/°C] | unmeasured | 11.9 | 13.3 | unmeasured | unmeasured |
| CLTE 30-750°C [×10$^{-7}$/°C] | unmeasured | 13.7 | 15.2 | unmeasured | unmeasured |
| Glass transitbn point Tg | unmeasured | 781 | 753 | unmeasured | unmeasured |
| Deformation point Tf | unmeasured | 895 | 889 | unmeasured | unmeasured |
| 10$^4$°C | unmeasured | 1455 | 1441 | unmeasured | unmeasured |
| 10$^{3.5}$°C | unmeasured | 1533 | 1518 | unmeasured | unmeasured |
| 10$^3$°C | unmeasured | 1621 | 1605 | unmeasured | unmeasured |
| 10$^{2.5}$°C | unmeasured | 1721 | 1707 | unmeasured | unmeasured |
| 10$^2$°C | unmeasured | 1837 | 1825 | unmeasured | unmeasured |
| Liquidus temperature °C | unmeasured | 1505 | unmeasured | unmeasured | unmeasured |
| Liquidus viscosity °C | unmeasured | 3.7 | unmeasured | unmeasured | unmeasured |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm ] | unmeasured | unmeasured | unmeasured | unmeasured | unmeasured |
| Surface roughness of end surface Ra [nm ] | unmeasured | unmeasured | unmeasured | unmeasured | unmeasured |
| Waviness [μm] | unmeasured | unmeasured | unmeasured | unmeasured | unmeasured |
| Color appearance | clear and colorless | clear and colorless | black | clear and colorless | clear and colorless |

[Table 11]

| | | No.26 | No.27 | No.28 | No.29 | No.30 |
|---|---|---|---|---|---|---|
| Com position [% by mass] | $SiO_2$ | 54.2 | 53.8 | 58.2 | 58.0 | 57.9 |
| | $Al_2O_3$ | 17.4 | 20.0 | 21.8 | 21.8 | 21.8 |
| | $B_2O_3$ | 9.6 | 7.6 | 4.7 | 4.5 | 4.3 |
| | $Li_2O$ | 0 | 0 | 0.0001 | 0 | 0 |
| | $P_2O_5$ | 12.3 | 12.2 | 8.7 | 9.1 | 9.4 |
| | $TiO_2$ | 6.1 | 6.0 | 6.2 | 6.2 | 6.2 |
| | $Fe_2O_3$ | 0.003 | 0.003 | 0.001 | 0.003 | 0.003 |
| | $Na_2O$ | 0 | 0 | 0 | 0 | 0 |
| | $K_2O$ | 0 | 0 | 0 | 0 | 0 |
| | $MgO$ | 0 | 0 | 0 | 0 | 0 |
| | $CaO$ | 0 | 0 | 0 | 0 | 0 |
| | $SrO$ | 0 | 0 | 0.0001 | 0 | 0 |
| | $BaO$ | 0.0001 | 0 | 0 | 0 | 0 |
| | $ZnO$ | 0 | 0 | 0 | 0 | 0 |
| | $SnO_2$ | 0.41 | 0.41 | 0.42 | 0.42 | 0.42 |
| | $ZrO_2$ | 0.001 | 0 | 0.001 | 0 | 0 |
| | $HfO_2$ | 0.001 | 0 | 0.001 | 0 | 0 |
| | $Y_2O_3$ | 0 | 0 | 0 | 0 | 0 |
| | Pt | 0.000001 | 0.000001 | 0.000001 | 0.000001 | 0.000001 |
| | Rh | 0.000001 | 0.000001 | 0.000001 | 0.000001 | 0.000001 |
| Com position [ppm ] | $V_2O_5$ | 0 | 0 | 0 | 0 | 0 |
| | $Cr_2O_3$ | 0 | 0 | 0 | 0 | 0 |
| | $MoO_3$ | 1 | 0 | 0 | 0 | 0 |
| | $MnO_2$ | 0 | 1 | 0 | 0 | 0 |
| | $CoO$ | 0 | 0 | 1 | 0 | 0 |
| | $CuO$ | 0 | 0 | 0 | 1 | 0 |
| | $Nd_2O_3$ | 0 | 0 | 0 | 0 | 1 |
| | $WO_3$ | 0 | 0 | 0 | 0 | 0 |
| | ND | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 0 | 0 | 0 | 0 | 0 |
| $P_2O_5 \times TiO_2$ | | 75.03 | 73.20 | 53.94 | 56.42 | 58.28 |
| $(P_2O_3 \times TiO_2)/ (P_2O_5+Al_2O_3)$ | | 2.5 | 2.3 | 1.8 | 1.8 | 1.9 |
| $B_2O_3/P_2O_5$ | | 0.78 | 0.62 | 0.54 | 0.49 | 0.46 |
| Pt+Rh | | 0.000002 | 0.000002 | 0.000002 | 0.000002 | 0.000002 |
| $Li_2O+Na_2O+K_2O$ | | 0 | 0 | 0.0001 | 0 | 0 |
| $MgO+CaO+SrO+BaO$ | | 0.0001 | 0 | 0.0001 | 0 | 0 |
| $(MgO+CaO +SrO+BaO)/P_2O_5$ | | 0.000008 | 0 | 0.000011 | 0 | 0 |

[Table 12]

| | No.26 | No.27 | No.28 | No.29 | No.30 |
|---|---|---|---|---|---|
| Density [g/cm$^3$] | unmeasured | unmeasured | unmeasured | unmeasured | unmeasured |
| $\beta$-OH [/mm] | unmeasured | unmeasured | unmeasured | unmeasured | unmeasured |
| CLTE 30-380°C [×10$^{-7}$/°C] | unmeasured | unmeasured | unmeasured | unmeasured | unmeasured |
| CLTE 30-750°C [×10$^{-7}$/°C] | unmeasured | unmeasured | unmeasured | unmeasured | unmeasured |
| G lass transition point T g | unmeasured | unmeasured | unmeasured | unmeasured | unmeasured |
| Deform atbn point Tf | unmeasured | unmeasured | unmeasured | unmeasured | unmeasured |
| 10$^4$°C | unmeasured | unmeasured | unmeasured | unmeasured | unmeasured |
| 10$^{3.5}$°C | unmeasured | unmeasured | unmeasured | unmeasured | unmeasured |
| 10$^3$°C | unmeasured | unmeasured | unmeasured | unmeasured | unmeasured |
| 10$^{2.5}$°C | unmeasured | unmeasured | unmeasured | unmeasured | unmeasured |
| 10$^2$°C | unmeasured | unmeasured | unmeasured | unmeasured | unmeasured |
| Liquidus tem perature °C | unmeasured | unmeasured | unmeasured | unmeasured | unmeasured |
| Lqudus viscosity °C | unmeasured | unmeasured | unmeasured | unmeasured | unmeasured |
| Transm ittance @ 1200nm [%] | unmeasured | unmeasured | unmeasured | unmeasured | unmeasured |
| Transm ittance @ 800nm [%] | unmeasured | unmeasured | unmeasured | unmeasured | unmeasured |
| Transm ittance @ 555nm [%] | unmeasured | unmeasured | unmeasured | unmeasured | unmeasured |
| Transm ittance @ 380nm [%] | unmeasured | unmeasured | unmeasured | unmeasured | unmeasured |
| Transm ittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm ] | unmeasured | unmeasured | unmeasured | unmeasured | unmeasured |
| Surface roughness of end surface Ra [nm ] | unmeasured | unmeasured | unmeasured | unmeasured | unmeasured |
| Waviness [μm] | unmeasured | unmeasured | unmeasured | unmeasured | unmeasured |
| Cobr appearance | c bar and color less | clear and color less | c bar and color less | clear and color less | clear and color less |

[Table 13]

| | | No.31 | No.32 | No.33 | No.34 | No.35 |
|---|---|---|---|---|---|---|
| Composition [% by mass] | $SiO_2$ | 57.7 | 57.6 | 57.4 | 57.0 | 56.9 |
| | $Al_2O_3$ | 21.7 | 21.6 | 21.5 | 21.4 | 21.4 |
| | $B_2O_3$ | 4.0 | 3.8 | 3.3 | 2.9 | 2.4 |
| | $Li_2O$ | 0 | 0 | 0 | 0 | 0 |
| | $P_2O_5$ | 10.0 | 10.4 | 11.3 | 12.2 | 12.4 |
| | $TiO_2$ | 6.2 | 6.2 | 6.1 | 6.1 | 6.5 |
| | $Fe_2O_3$ | 0.003 | 0 | 0.003 | 0.003 | 0.003 |
| | $Na_2O$ | 0.0001 | 0 | 0 | 0 | 0 |
| | $K_2O$ | 0 | 0 | 0 | 0.0001 | 0 |
| | $MgO$ | 0 | 0 | 0 | 0 | 0 |
| | $CaO$ | 0 | 0 | 0 | 0.0001 | 0 |
| | $SrO$ | 0.0001 | 0 | 0 | 0 | 0 |
| | $BaO$ | 0 | 0 | 0 | 0 | 0 |
| | $ZnO$ | 0 | 0 | 0 | 0 | 0 |
| | $SnO_2$ | 0.42 | 0.42 | 0.41 | 0.41 | 0.41 |
| | $ZrO_2$ | 0 | 0.001 | 0 | 0 | 0 |
| | $HfO_2$ | 0 | 0.001 | 0 | 0 | 0 |
| | $Y_2O_3$ | 0 | 0 | 0 | 0 | 0 |
| | Pt | 0.000002 | 0.000001 | 0.000001 | 0.000001 | 0.000001 |
| | Rh | 0.000001 | 0.000001 | 0.000001 | 0.000001 | 0.000001 |
| Composition [ppm] | $V_2O_3$ | 0 | 0 | 0 | 0 | 0 |
| | $Cr_2O_3$ | 0 | 0 | 0 | 0 | 0 |
| | $MoO_3$ | 0 | 0 | 0 | 0 | 0 |
| | $MnO_2$ | 0 | 0 | 0 | 0 | 0 |
| | $CoO$ | 0 | 0 | 0 | 0 | 0 |
| | $CuO$ | 0 | 0 | 0 | 0 | 0 |
| | $Nd_2O_3$ | 0 | 0 | 0 | 0 | 0 |
| | $WO_3$ | 1 | 0 | 0 | 0 | 0 |
| | ND | 0 | 1 | 0 | 0 | 0 |
| | $Sb_2O_3$ | 0 | 0 | 1 | 0 | 0 |
| | $As_2O_3$ | 0 | 0 | 0 | 1 | 0 |
| | $SO_3$ | 0 | 0 | 0 | 0 | 1 |
| $P_2O_5 \times TiO_2$ | | 62.0 | 64.5 | 68.9 | 74.4 | 80.6 |
| $(P_2O_5 \times TiO_2)/(P_2O_5+Al_2O_3)$ | | 1.96 | 2.02 | 2.10 | 2.21 | 2.38 |
| $B_2O_3/P_2O_5$ | | 0.40 | 0.37 | 0.29 | 0.24 | 0.19 |
| Pt+Rh | | 0.000003 | 0.000002 | 0.000002 | 0.000002 | 0.000002 |
| $Li_2O+Na_2O+K_2O$ | | 0.0001 | 0 | 0 | 0.0001 | 0 |
| $MgO+CaO+SrO+BaO$ | | 0.0001 | 0 | 0 | 0.0001 | 0 |
| $(MgO+CaO+SrO+BaO)/P_2O_5$ | | 0.00001 | 0 | 0 | 0.000008 | 0 |

[Table 14]

| | No.31 | No.32 | No.33 | No.34 | No.35 |
|---|---|---|---|---|---|
| Density [g/cm$^3$] | unmeasured | unmeasured | unmeasured | unmeasured | unmeasured |
| $\beta$-OH [/mm] | unmeasured | unmeasured | unmeasured | unmeasured | unmeasured |
| CLTE 30-380°C [$\times$ 10$^{-7}$/°C] | unmeasured | unmeasured | unmeasured | unmeasured | unmeasured |
| CLTE 30-750°C [$\times$ 10$^{-7}$/°C] | unmeasured | unmeasured | unmeasured | unmeasured | unmeasured |
| Glass transition point T g | unmeasured | unmeasured | unmeasured | unmeasured | unmeasured |
| Deformation point Tf | unmeasured | unmeasured | unmeasured | unmeasured | unmeasured |
| 10$^4$°C | unmeasured | unmeasured | unmeasured | unmeasured | unmeasured |
| 10$^{3.5}$°C | unmeasured | unmeasured | unmeasured | unmeasured | unmeasured |
| 10$^3$°C | unmeasured | unmeasured | unmeasured | unmeasured | unmeasured |
| 10$^{2.5}$°C | unmeasured | unmeasured | unmeasured | unmeasured | unmeasured |
| 10$^2$°C | unmeasured | unmeasured | unmeasured | unmeasured | unmeasured |
| Liquidus temperature °C | unmeasured | unmeasured | unmeasured | unmeasured | unmeasured |
| Liquidus viscosity °C | unmeasured | unmeasured | unmeasured | unmeasured | unmeasured |
| Transm ittance @ 1200nm [%] | unmeasured | unmeasured | unmeasured | unmeasured | unmeasured |
| Transm ittance @ 800nm [%] | unmeasured | unmeasured | unmeasured | unmeasured | unmeasured |
| Transm ittance @ 555nm [%] | unmeasured | unmeasured | unmeasured | unmeasured | unmeasured |
| Transm ittance @ 380nm [%] | unmeasured | unmeasured | unmeasured | unmeasured | unmeasured |
| Transm ittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |
| Cobr appearance | clear and color less | c bar and color less | clear and color less | c bar and color less | clear and color less |

[Table 15]

| | | No.36 | No.37 | No.38 | No.39 | No.40 |
|---|---|---|---|---|---|---|
| Composition [% by mass] | $SiO_2$ | 56.8 | 56.8 | 56.7 | 56.8 | 56.8 |
| | $Al_2O_3$ | 21.4 | 21.4 | 21.4 | 21.3 | 21.3 |
| | $B_2O_3$ | 1.9 | 1.4 | 0.95 | 0.47 | 0.09 |
| | $Li_2O$ | 0 | 0 | 0 | 0 | 0 |
| | $P_2O_5$ | 12.4 | 12.4 | 12.4 | 12.3 | 12.3 |
| | $TiO_2$ | 7.1 | 7.6 | 8.1 | 8.7 | 9.1 |
| | $Fe_2O_3$ | 0.003 | 0.003 | 0.003 | 0.003 | 0.003 |
| | $Na_2O$ | 0 | 0 | 0 | 0 | 0.0001 |
| | $K_2O$ | 0 | 0 | 0 | 0 | 0 |
| | $MgO$ | 0.0001 | 0 | 0 | 0 | 0 |
| | $CaO$ | 0 | 0 | 0.0001 | 0 | 0 |
| | $SrO$ | 0 | 0 | 0 | 0 | 0.0001 |
| | $BaO$ | 0 | 0 | 0.0001 | 0 | 0 |
| | $ZnO$ | 0 | 0 | 0 | 0 | 0 |
| | $SnO_2$ | 0.41 | 0.41 | 0.41 | 0.41 | 0.41 |
| | $ZrO_2$ | 0.001 | 0 | 0 | 0.001 | 0.001 |
| | $HfO_2$ | 0.001 | 0 | 0 | 0.001 | 0.001 |
| | $Y_2O_3$ | 0 | 0 | 0 | 0 | 0 |
| | Pt | 0.000001 | 0.000001 | 0.000001 | 0.000002 | 0.000002 |
| | Rh | 0.000001 | 0.000001 | 0.000001 | 0.000001 | 0.000001 |
| Composition [ppm ] | $V_2O_5$ | 0 | 0 | 0 | 0 | 0 |
| | $Cr_2O_3$ | 0 | 0 | 0 | 0 | 0 |
| | $MoO_3$ | 0 | 0 | 0 | 0 | 0 |
| | $MnO_2$ | 0 | 0 | 0 | 0 | 0 |
| | $CoO$ | 0 | 0 | 0 | 0 | 0 |
| | $CuO$ | 0 | 0 | 0 | 0 | 0 |
| | $Nd_2O_3$ | 0 | 0 | 0 | 0 | 1 |
| | $WO_3$ | 0 | 0 | 0 | 1 | 0 |
| | ND | 0 | 0 | 1 | 0 | 0 |
| | $Sb_2O_3$ | 0 | 1 | 0 | 0 | 0 |
| | $As_2O_3$ | 1 | 0 | 0 | 0 | 0 |
| | $SO_3$ | 0 | 0 | 0 | 0 | 0 |
| $P_2O_5 \times TiO_2$ | | 88.04 | 94.24 | 100.44 | 107.01 | 111.93 |
| $(P_2O_5 \times TiO_2)/ (P_2O_5+Al_2O_3)$ | | 2.6 | 2.8 | 3.0 | 3.2 | 3.3 |
| $B_2O_3/P_2O_5$ | | 0.15 | 0.11 | 0.08 | 0.04 | 0.01 |
| Pt+Rh | | 0.000002 | 0.000002 | 0.000002 | 0.000003 | 0.000003 |
| $Li_2O+Na_2O+K_2O$ | | 0 | 0 | 0 | 0 | 0.0001 |
| $MgO +CaO +SrO+BaO$ | | 0.0001 | 0 | 0.0002 | 0 | 0.0001 |
| $(MgO +CaO +SrO+BaO)/P_2O_5$ | | 0.000008 | 0 | 0.000016 | 0 | 0.000008 |

[Table 16]

| | No.36 | No.37 | No.38 | No.39 | No.40 |
|---|---|---|---|---|---|
| Density [g/cm$^3$] | unmeasured | unmeasured | unmeasured | unmeasured | unmeasured |
| $\beta$-OH [/mm] | unmeasured | unmeasured | unmeasured | unmeasured | unmeasured |
| CLTE 30-380°C [$\times 10^{-7}$/°C] | unmeasured | unmeasured | unmeasured | unmeasured | unmeasured |
| CLTE 30-750°C [$\times 10^{-7}$/°C] | unmeasured | unmeasured | unmeasured | unmeasured | unmeasured |
| Glass transition point T g | unmeasured | unmeasured | unmeasured | unmeasured | unmeasured |
| Deform atbn point Tf | unmeasured | unmeasured | unmeasured | unmeasured | unmeasured |
| $10^4$°C | unmeasured | unmeasured | unmeasured | unmeasured | unmeasured |
| $10^{3.5}$°C | unmeasured | unmeasured | unmeasured | unmeasured | unmeasured |
| $10^3$°C | unmeasured | unmeasured | unmeasured | unmeasured | unmeasured |
| $10^{2.5}$°C | unmeasured | unmeasured | unmeasured | unmeasured | unmeasured |
| $10^2$°C | unmeasured | unmeasured | unmeasured | unmeasured | unmeasured |
| Liquidus tem perature °C | unmeasured | unmeasured | unmeasured | unmeasured | unmeasured |
| Liquidus viscosity °C | unmeasured | unmeasured | unmeasured | unmeasured | unmeasured |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm] | unmeasured | unmeasured | unmeasured | unmeasured | unmeasured |
| Surface rough-ness of end sur-face Ra [nm] | unmeasured | unmeasured | unmeasured | unmeasured | unmeasured |
| Waviness [$\mu$m] | unmeasured | unmeasured | unmeasured | unmeasured | unmeasured |
| Cobr appearance | c bar and color less | clear and color less | c bar and color less | clear and color less | clear and color less |

[Table 17]

| | | No.41 | No.42 | No.43 | No.44 | No.45 |
|---|---|---|---|---|---|---|
| Composition [% by mass] | $SiO_2$ | 56.8 | 56.4 | 53.4 | 54.1 | 54.7 |
| | $Al_2O_3$ | 21.3 | 19.8 | 20.9 | 21 | 21.1 |
| | $B_2O_3$ | 0 | 0 | 0 | 0 | 0 |
| | $Li_2O$ | 0 | 0 | 0.0001 | 0 | 0.0001 |
| | $P_2O_5$ | 12.3 | 14.2 | 12.1 | 12.1 | 12.2 |
| | $TiO_2$ | 9.2 | 9.2 | 9.02 | 9.1 | 9.1 |
| | $Fe_2O_3$ | 0.003 | 0.003 | 0.003 | 0.003 | 0.003 |
| | $Na_2O$ | 0 | 0.0001 | 0 | 0 | 0 |
| | $K_2O$ | 0 | 0 | 0 | 0 | 0 |
| | $MgO$ | 0 | 0 | 0 | 0 | 0 |
| | $CaO$ | 0 | 0 | 0 | 0 | 0 |
| | $SrO$ | 0 | 0 | 0 | 0 | 0.0001 |
| | $BaO$ | 0 | 0 | 0 | 0.0001 | 0 |
| | $ZnO$ | 0 | 0 | 0 | 0 | 0 |
| | $SnO_2$ | 0.41 | 0.41 | 0.4 | 0.4 | 0.4 |
| | $ZrO_2$ | 0.001 | 0.001 | 4.1 | 3.3 | 2.5 |
| | $HfO_2$ | 0.001 | 0.001 | 0.05 | 0.03 | 0.02 |
| | $Y_2O_3$ | 0 | 0 | 0 | 0 | 0 |
| | Pt | 0.000001 | 0.000001 | 0.000001 | 0.000001 | 0.000001 |
| | Rh | 0.000001 | 0.000001 | 0.000001 | 0.000001 | 0.000001 |
| Composition [ppm] | $V_2O_5$ | 0 | 0 | 0 | 0 | 0 |
| | $Cr_2O_3$ | 0 | 0 | 0 | 0 | 1 |
| | $MoO_3$ | 0 | 0 | 0 | 1 | 0 |
| | $MnO_2$ | 0 | 0 | 1 | 0 | 0 |
| | $CoO$ | 0 | 1 | 0 | 0 | 0 |
| | $CuO$ | 1 | 0 | 0 | 0 | 0 |
| | $Nd_2O_3$ | 0 | 0 | 0 | 0 | 0 |
| | $WO_3$ | 0 | 0 | 0 | 0 | 0 |
| | ND | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 0 | 0 | 0 | 0 | 0 |
| $P_2O_5 \times TiO_2$ | | 113.2 | 130.6 | 109.1 | 110.1 | 111.0 |
| $(P_2O_5 \times TiO_2)/(P_2O_5+Al_2O_3)$ | | 3.4 | 3.8 | 3.3 | 3.3 | 3.3 |
| $B_2O_3/P_2O_5$ | | 0 | 0 | 0 | 0 | 0 |
| Pt+Rh | | 0.000002 | 0.000002 | 0.000002 | 0.000002 | 0.000002 |
| $Li_2O+Na_2O+K_2O$ | | 0 | 0.0001 | 0.0001 | 0 | 0.0001 |
| $MgO+CaO+SrO+BaO$ | | 0 | 0 | 0 | 0.0001 | 0.0001 |
| $(MgO+CaO+SrO+BaO)/P_2O_5$ | | 0 | 0 | 0 | 0.000008 | 0.000008 |

[Table 18]

| | No.41 | No.42 | No.43 | No.44 | No.45 |
|---|---|---|---|---|---|
| Density [g/cm$^3$] | unmeasured | unmeasured | unmeasured | unmeasured | unmeasured |
| $\beta$-OH [/mm] | unmeasured | unmeasured | unmeasured | unmeasured | unmeasured |
| CLTE 30-380°C [× 10$^{-7}$/°C] | unmeasured | unmeasured | unmeasured | unmeasured | unmeasured |
| CLTE 30-750°C [×10$^{-7}$/°C] | unmeasured | unmeasured | unmeasured | unmeasured | unmeasured |
| Glass transition point T g | unmeasured | unmeasured | unmeasured | unmeasured | unmeasured |
| Deform atbn point Tf | unmeasured | unmeasured | unmeasured | unmeasured | unmeasured |
| 10$^4$°C | unmeasured | unmeasured | unmeasured | unmeasured | unmeasured |
| 10$^{3.5}$°C | unmeasured | unmeasured | unmeasured | unmeasured | unmeasured |
| 10$^3$°C | unmeasured | unmeasured | unmeasured | unmeasured | unmeasured |
| 10$^{2.5}$°C | unmeasured | unmeasured | unmeasured | unmeasured | unmeasured |
| 10$^2$°C | unmeasured | unmeasured | unmeasured | unmeasured | unmeasured |
| Liquidus tem perature °C | unmeasured | unmeasured | unmeasured | unmeasured | unmeasured |
| L qudus viscosity °C | unmeasured | unmeasured | unmeasured | unmeasured | unmeasured |
| T ransm ittance @ 1200nm [%] | unmeasured | unmeasured | unmeasured | unmeasured | unmeasured |
| T ransm ittance @ 800nm [%] | unmeasured | unmeasured | unmeasured | unmeasured | unmeasured |
| T ransm ittance @ 555nm [%] | unmeasured | unmeasured | unmeasured | unmeasured | unmeasured |
| T ransm ittance @ 380nm [%] | unmeasured | unmeasured | unmeasured | unmeasured | unmeasured |
| T ransm ittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm] | unmeasured | unmeasured | unmeasured | unmeasured | unmeasured |
| Surface rough-ness of end sur-face Ra [nm] | unmeasured | unmeasured | unmeasured | unmeasured | unmeasured |
| Waviness [μm] | unmeasured | unmeasured | unmeasured | unmeasured | unmeasured |
| Cobr appearance | c bar and color less | clear and color less | c bar and color less | clear and color less | clear and color less |

[Table 19]

| | | No.46 | No.47 | No.48 | No.49 | No.50 |
|---|---|---|---|---|---|---|
| Com position [% by mass] | $SiO_2$ | 54.9 | 56.1 | 54.7 | 54.0 | 53.4 |
| | $Al_2O_3$ | 21.1 | 21.2 | 21.1 | 20.9 | 20.8 |
| | $B_2O_3$ | 0 | 0 | 0 | 0 | 0 |
| | $Li_2O$ | 0 | 0.0001 | 0 | 0 | 0 |
| | $P_2O_5$ | 12.2 | 12.3 | 12.2 | 12.1 | 12 |
| | $TiO_2$ | 9.7 | 9.2 | 9.1 | 9.04 | 9 |
| | $Fe_2O_3$ | 0.003 | 0.003 | 0.003 | 1.1 | 1.1 |
| | $Na_2O$ | 0.0001 | 0 | 0 | 0 | 0 |
| | $K_2O$ | 0 | 0 | 0.0001 | 0 | 0 |
| | $MgO$ | 0 | 0 | 0 | 0 | 0 |
| | $CaO$ | 0.0001 | 0 | 0 | 0 | 0 |
| | $SrO$ | 0 | 0 | 0 | 0.0001 | 0 |
| | $BaO$ | 0 | 0 | 0 | 0 | 0.0001 |
| | $ZnO$ | 0 | 0 | 0 | 0 | 0 |
| | $SnO_2$ | 0.41 | 0.41 | 0.4 | 0.4 | 0.4 |
| | $ZrO_2$ | 1.7 | 0.83 | 2.5 | 2.5 | 3.3 |
| | $HfO_2$ | 0.005 | 0.001 | 0.02 | 0.005 | 0.001 |
| | $Y_2O_3$ | 0 | 0 | 0 | 0 | 0 |
| | Pt | 0.000001 | 0.000001 | 0.000001 | 0.000001 | 0.000001 |
| | Rh | 0.000001 | 0.000001 | 0.000001 | 0.000001 | 0.000001 |
| Composition [ppm] | $V_2O_5$ | 1 | 0 | 0 | 0 | 0 |
| | $Cr_2O_3$ | 0 | 0 | 0 | 0 | 0 |
| | $MoO_3$ | 0 | 0 | 0 | 0 | 0 |
| | $MnO_2$ | 0 | 0 | 0 | 0 | 0 |
| | $CoO$ | 0 | 0 | 0 | 0 | 0 |
| | $CuO$ | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | ND | 0 | 0 | 0 | 0 | 1 |
| | $Sb_2O_3$ | 0 | 0 | 0 | 1 | 0 |
| | $As_2O_3$ | 0 | 0 | 1 | 0 | 0 |
| | $SO_3$ | 0 | 1 | 0 | 0 | 0 |
| $P_2O_5 \times TiO_2$ | | 118.3 | 113.2 | 111.0 | 109.4 | 108.0 |
| $(P_2O_5 \times TiO_2)/(P_2O_5+Al_2O_3)$ | | 3.6 | 3.4 | 3.3 | 3.3 | 3.3 |
| $B_2O_3/P_2O_5$ | | 0 | 0 | 0 | 0 | 0 |
| Pt+Rh | | 0.000002 | 0.000002 | 0.000002 | 0.000002 | 0.000002 |
| $Li_2O+Na_2O+K_2O$ | | 0.0001 | 0.0001 | 0.0001 | 0 | 0 |
| $MgO +CaO+SrO+BaO$ | | 0.0001 | 0 | 0 | 0.0001 | 0.0001 |
| $(MgO +CaO+SrO+BaO)/P_2O_5$ | | 0.000008 | 0 | 0 | 0.000008 | 0.000008 |

[Table 20]

| | No.46 | No.47 | No.48 | No.49 | No.50 |
|---|---|---|---|---|---|
| Density [g/cm$^3$] | unmeasured | unmeasured | unmeasured | unmeasured | unmeasured |
| $\beta$-OH [/mm] | unmeasured | unmeasured | unmeasured | unmeasured | unmeasured |
| CLTE 30-380°C [$\times$ 10$^{-7}$/°C] | unmeasured | unmeasured | unmeasured | unmeasured | unmeasured |
| CLTE 30-750°C [$\times$10$^{-7}$/°C] | unmeasured | unmeasured | unmeasured | unmeasured | unmeasured |
| Glass transition point T g | unmeasured | unmeasured | unmeasured | unmeasured | unmeasured |
| Deform atbn point Tf | unmeasured | unmeasured | unmeasured | unmeasured | unmeasured |
| 10$^4$°C | unmeasured | unmeasured | unmeasured | unmeasured | unmeasured |
| 10$^{3.5}$°C | unmeasured | unmeasured | unmeasured | unmeasured | unmeasured |
| 10$^3$°C | unmeasured | unmeasured | unmeasured | unmeasured | unmeasured |
| 10$^{2.5}$°C | unmeasured | unmeasured | unmeasured | unmeasured | unmeasured |
| 10$^2$°C | unmeasured | unmeasured | unmeasured | unmeasured | unmeasured |
| Liquidus tem perature °C | unmeasured | unmeasured | unmeasured | unmeasured | unmeasured |
| Liquidus viscosity °C | unmeasured | unmeasured | unmeasured | unmeasured | unmeasured |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |
| Cobr appearance | c bar and color less | clear and color less | c bar and color less | black | b bck |

[Table 21]

| | | No.51 | No.52 | No.53 | No.54 | No.55 |
|---|---|---|---|---|---|---|
| Composition [% by mass] | $SiO_2$ | 52.3 | 51.5 | 51.3 | 56.5 | 57.3 |
| | $Al_2O_3$ | 21.3 | 21.1 | 20.9 | 21.5 | 16.1 |
| | $B_2O_3$ | 4.6 | 4.4 | 3.9 | 6.2 | 6.4 |
| | $Li_2O$ | 0 | 0.0001 | 0 | 0 | 0 |
| | $P_2O_5$ | 10.6 | 10.5 | 10.4 | 12.5 | 12.6 |
| | $TiO_2$ | 10.8 | 8.8 | 8.7 | 0.003 | 0.005 |
| | $Fe_2O_3$ | 0 | 0 | 1.06 | 0.007 | 0.007 |
| | $Na_2O$ | 0.0001 | 0 | 0 | 0 | 0 |
| | $K_2O$ | 0 | 0 | 0.0001 | 0.003 | 0.003 |
| | $MgO$ | 0 | 0 | 0 | 0 | 0.01 |
| | $CaO$ | 0 | 0 | 0 | 0.01 | 0 |
| | $SrO$ | 0 | 0 | 0.0001 | 0 | 0 |
| | $BaO$ | 0 | 0 | 0 | 0 | 0 |
| | $ZnO$ | 0 | 0 | 0 | 2.83 | 7.2 |
| | $SnO_2$ | 0.41 | 0.4 | 0.4 | 0.4 | 0.39 |
| | $ZrO_2$ | 0.001 | 3.3 | 3.3 | 0 | 0 |
| | $HfO_2$ | 0.001 | 0.001 | 0.001 | 0 | 0 |
| | $Y_2O_3$ | 0 | 0 | 0 | 0 | 0 |
| | Pt | 0.000002 | 0.000001 | 0.000001 | 0.000002 | 0.000001 |
| | Rh | 0.000001 | 0.000001 | 0.000001 | 0.000001 | 0.000001 |
| Composition [ppm] | $V_2O_5$ | 0 | 0 | 0 | 1 | 0 |
| | $Cr_2O_3$ | 0 | 0 | 0 | 0 | 1 |
| | $MoO_3$ | 0 | 0 | 0 | 0 | 0 |
| | $MnO_2$ | 0 | 0 | 0 | 0 | 0 |
| | $CoO$ | 0 | 0 | 0 | 0 | 0 |
| | $CuO$ | 0 | 0 | 1 | 0 | 0 |
| | $Nd_2O_3$ | 0 | 1 | 0 | 0 | 0 |
| | $WO_3$ | 1 | 0 | 0 | 0 | 0 |
| | ND | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 0 | 0 | 1 | 0 | 0 |
| $P_2O_5 \times TiO_2$ | | 114.48 | 92.40 | 90.48 | 0.04 | 0.06 |
| $(P_2O_5 \times TiO_2)/(P_2O_5+Al_2O_3)$ | | 3.59 | 2.92 | 2.89 | 0.0011 | 0.0022 |
| $B_2O_3/P_2O_5$ | | 0.43 | 0.42 | 0.38 | 0.50 | 0.51 |
| Pt+Rh | | 0.000003 | 0.000002 | 0.000002 | 0.000003 | 0.000002 |
| $Li_2O+Na_2O+K_2O$ | | 0.0001 | 0.0001 | 0.0001 | 0.003 | 0.003 |
| $MgO+CaO+SrO+BaO$ | | 0 | 0 | 0.0001 | 0.01 | 0.01 |
| $(MgO+CaO+SrO+BaO)/P_2O_5$ | | 0 | 0 | 0.00001 | 0.0008 | 0.00079 |

[Table 22]

| | No.51 | No.52 | No.53 | No.54 | No.55 |
|---|---|---|---|---|---|
| Density [g/cm$^3$] | unmeasured | unmeasured | unmeasured | 2.32 | 2.34 |
| $\beta$-OH [/mm] | unmeasured | unmeasured | unmeasured | unmeasured | unmeasured |
| CLTE 30-380°C [$\times 10^{-7}$/°C] | unmeasured | unmeasured | unmeasured | 14.9 | unmeasured |
| CLTE 30-750°C [$\times 10^{-7}$/°C] | unmeasured | unmeasured | unmeasured | 15.2 | unmeasured |
| Glass transitbn point Tg | unmeasured | unmeasured | unmeasured | 755 | 814 |
| Deformation point Tf | unmeasured | unmeasured | unmeasured | 886 | 856 |
| 10$^4$°C | unmeasured | unmeasured | unmeasured | 1441 | 1444 |
| 10$^{3.5}$°C | unmeasured | unmeasured | unmeasured | 1520 | 1527 |
| 10$^3$°C | unmeasured | unmeasured | unmeasured | 1609 | 1622 |
| 10$^{2.5}$°C | unmeasured | unmeasured | unmeasured | 1711 | 1732 |
| 10$^2$°C | unmeasured | unmeasured | unmeasured | 1829 | 1858 |
| Liquidus tem perature °C | unmeasured | unmeasured | unmeasured | 1490 | unmeasured |
| Liquidus viscosity °C | unmeasured | unmeasured | unmeasured | unmeasured | unmeasured |
| Transmittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555 nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L$_*$ | unmeasured | unmeasured | unmeasured | unmeasured | unmeasured |
| a* | unmeasured | unmeasured | unmeasured | unmeasured | unmeasured |
| b$_*$ | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |
| Cobr appearance | c bar and color less | clear and color less | b bck | slightly brow n | slightly brow n |

[Table 23]

| | | No.56 | No.57 | No.58 | No.59 | No.60 |
|---|---|---|---|---|---|---|
| | SiO$_2$ | 56.6 | 56.8 | 56.0 | 56.3 | 54.8 |
| | Al$_2$O$_3$ | 21.3 | 21.4 | 21.2 | 21.3 | 21.1 |
| | B$_2$O$_3$ | 0 | 2.9 | 0 | 2.6 | 0 |
| | Li$_2$O | 0 | 0 | 0 | 0 | 0 |
| | P$_2$O$_5$ | 12.4 | 12.4 | 12.3 | 12.4 | 8.42 |
| | TiO$_2$ | 6.4 | 6.04 | 6.31 | 5.97 | 6.31 |

(continued)

|  |  | No.56 | No.57 | No.58 | No.59 | No.60 |
|---|---|---|---|---|---|---|
| Com positon [% by mass] | $Fe_2O_3$ | 0.007 | 0.009 | 1.01 | 1 | 0.008 |
|  | $Na_2O$ | 0 | 0 | 0 | 0 | 0 |
|  | $K_2O$ | 0.015 | 0.015 | 0.016 | 0.016 | 0 |
|  | MgO | 0.01 | 0.03 | 0.01 | 0.01 | 0.01 |
|  | CaO | 0.01 | 0.01 | 0 | 0.01 | 0 |
|  | SrO | 0 | 0 | 0 | 0 | 0 |
|  | BaO | 0 | 0 | 0 | 0 | 0 |
|  | ZnO | 2.81 | 0 | 2.78 | 0.01 | 2.81 |
|  | $SnO_2$ | 0.41 | 0.41 | 0.39 | 0.4 | 0.38 |
|  | $ZrO_2$ | 0 | 0 | 0 | 0 | 0 |
|  | $HfO_2$ | 0 | 0 | 0 | 0 | 0 |
|  | $Y_2O_3$ | 0 | 0 | 0 | 0 | 6.13 |
|  | Pt | 0.000001 | 0.000001 | 0.000001 | 0.000001 | 0.000001 |
|  | Rh | 0.000001 | 0.000001 | 0.000001 | 0.000001 | 0.000001 |
| Com positon [ppm ] | $V_2O_5$ | 0 | 0 | 0 | 0 | 0 |
|  | $Cr_2O_3$ | 0 | 0 | 0 | 0 | 0 |
|  | $MoO_3$ | 1 | 0 | 0 | 0 | 0 |
|  | $MnO_2$ | 0 | 1 | 0 | 0 | 0 |
|  | CoO | 0 | 0 | 1 | 0 | 0 |
|  | CuO | 0 | 0 | 0 | 1 | 0 |
|  | $Nd_2O_3$ | 0 | 0 | 0 | 0 | 1 |
|  | $WO_3$ | 0 | 0 | 0 | 0 | 0 |
|  | NiO | 0 | 0 | 0 | 0 | 0 |
|  | $Sb_2O_3$ | 0 | 0 | 0 | 0 | 0 |
|  | $As_2O_3$ | 0 | 0 | 0 | 0 | 0 |
|  | $SO_3$ | 0 | 0 | 0 | 0 | 0 |
| $P_2O_5 \times TiO_2$ | | 79.36 | 74.90 | 77.61 | 74.03 | 53.13 |
| $(P_2O_5 \times TiO_2)/(P_2O_5 + Al_2O_3)$ | | 2.35 | 2.22 | 2.32 | 2.20 | 1.80 |
| $B_2O_3/P_2O_5$ | | 0 | 0.23 | 0 | 0.21 | 0 |
| Pt+Rh | | 0.000002 | 0.000002 | 0.000002 | 0.000002 | 0.000002 |
| $Li_2O+Na_2O+K_2O$ | | 0.015 | 0.015 | 0.016 | 0.016 | 0 |
| MgO+CaO+SrO+BaO | | 0.02 | 0.04 | 0.01 | 0.02 | 0.01 |
| $(MgO+CaO+SrO+BaO)/P_2O_5$ | | 0.0016 | 0.0032 | 0.0008 | 0.0016 | 0.0012 |

[Table 24]

|  | No.56 | No.57 | No.58 | No.59 | No.60 |
|---|---|---|---|---|---|
| Density [g/cm$^3$] | 2.39 | 2.32 | unmeasured | unmeasured | unmeasured |
| $\beta$-OH [/mm] | unmeasured | unmeasured | unmeasured | unmeasured | unmeasured |
| CLTE 30-380°C [$\times 10^{-7}$/°C] | 12.9 | 12.4 | 14.1 | 13.3 | 21.1 |

(continued)

|  | No.56 | No.57 | No.58 | No.59 | No.60 |
|---|---|---|---|---|---|
| CLTE 30-750°C [$\times 10^{-7}$/°C] | 13.6 | 12.9 | 14.8 | 13.7 | 21.9 |
| Glass transition point Tg | 768 | 781 | 734 | 753 | 772 |
| Deformation point Tf | 868 | 895 | 791 | 889 | 949 |
| $10^4$°C | 1455 | 1455 | 1436 | 1441 | 1363 |
| $10^{3.5}$°c | 1532 | 1533 | 1512 | 1518 | 1432 |
| $10^3$°C | 1620 | 1621 | 1604 | 1605 | 1513 |
| $10^{2.5}$°C | 1722 | 1721 | 1715 | 1707 | 1608 |
| $10^2$°C | 1842 | 1837 | 1852 | 1825 | 1723 |
| Liquidus tem perature °C | 1458 | 1505 | unmeasured | unmeasured | unmeasured |
| L qudus viscosity °C | unmeasured | unmeasured | unmeasured | unmeasured | unmeasured |
| T ransm ittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |
| Cobr appearance | slightly brown | slightly brown | black | black | slightly brown |

[Table 25]

| | | | No.61 | No.62 | No.63 | No.64 | No.65 |
|---|---|---|---|---|---|---|---|
| | | $SiO_2$ | 57.3 | 59.4 | 57.1 | 55.0 | 53.0 |
| | | $Al_2O_3$ | 21.8 | 22.3 | 21.3 | 21.1 | 20.7 |
| | | $B_2O_3$ | 0 | 0 | 0 | 2.4 | 0 |
| | | $Li_2O$ | 0 | 1.27 | 0 | 0 | 0 |
| | | $P_2O_5$ | 6.8 | 6.9 | 8.6 | 11.1 | 9.7 |
| | | $TiO_2$ | 9.8 | 6.7 | 6.4 | 3.2 | 5.4 |
| | | $Fe_2O_3$ | 0.008 | 0.007 | 0.007 | 0.007 | 0.006 |
| | | $Na_2O$ | 0 | 0 | 0 | 0 | 0 |
| | | $K_2O$ | 0.024 | 0.018 | 0.016 | 0.009 | 0.013 |
| Compositon [% by mass] | | MgO | 0 | 0 | 0 | 0 | 0 |
| | | CaO | 0 | 0.01 | 0.01 | 0.01 | 0 |
| | | SrO | 0 | 0 | 0 | 0.002 | 0 |
| | | $BaO$ | 0 | 0 | 0 | 0 | 0 |

(continued)

|  |  | No.61 | No.62 | No.63 | No.64 | No.65 |
|---|---|---|---|---|---|---|
|  | ZnO | 3.9 | 3 | 2.9 | 6.9 | 11 |
|  | $SnO_2$ | 0.4 | 0.41 | 0.39 | 0.29 | 0.19 |
|  | $ZrO_2$ | 0 | 0 | 3.3 | 0 | 0 |
|  | $HfO_2$ | 0 | 0 | 0 | 0 | 0 |
|  | $Y_2O_3$ | 0 | 0 | 0 | 0 | 0 |
|  | Pt | 0.000001 | 0.000002 | 0.000002 | 0.000001 | 0.000001 |
|  | Rh | 0.000001 | 0.000001 | 0.000001 | 0.000001 | 0.000001 |
|  | $V_2O_5$ | 0 | 0 | 0 | 0 | 0 |
|  | $Cr_2O_3$ | 0 | 0 | 0 | 0 | 0 |
|  | $MoO_3$ | 0 | 0 | 0 | 0 | 0 |
|  | $MnO_2$ | 0 | 0 | 0 | 0 | 0 |
|  | CoO | 0 | 0 | 0 | 0 | 0 |
| Compositon [ppm] | CuO | 0 | 0 | 0 | 0 | 0 |
|  | $Nd_2O_3$ | 0 | 0 | 0 | 0 | 0 |
|  | $WO_3$ | 1 | 0 | 0 | 0 | 0 |
|  | ND | 0 | 1 | 0 | 0 | 0 |
|  | $Sb_2O_3$ | 0 | 0 | 1 | 0 | 0 |
|  | $As_2O_3$ | 0 | 0 | 0 | 1 | 0 |
|  | $SO_3$ | 0 | 0 | 0 | 0 | 1 |
| $P_2O_5 \times TiO_2$ | | 66.64 | 46.23 | 55.04 | 35.52 | 52.38 |
| $P_2O_5 \times TiO_2)/(P_2O_5+Al_2O_3)$ | | 2.33 | 1.58 | 1.84 | 1.10 | 1.72 |
| $B_2O_3/P_2O_5$ | | 0 | 0 | 0 | 0.2162 | 0 |
| Pt+Rh | | 0.000002 | 0.000003 | 0.000003 | 0.000002 | 0.000002 |
| $Li_2O+Na_2O+K_2O$ | | 0.024 | 1.288 | 0.016 | 0.009 | 0.013 |
| MgO+CaO+SrO+BaO | | 0 | 0.01 | 0.01 | 0.012 | 0 |
| (MgO+CaO+SrO+BaO)/$P_2O_5$ | | 0 | 0.0014 | 0.0012 | 0.0011 | 0 |

[Table 26]

|  | No.61 | No.62 | No.63 | No.64 | No.65 |
|---|---|---|---|---|---|
| Density [g/cm$^3$] | 2.48 | 2.46 | 2.48 | 2.43 | 2.56 |
| $\beta$-OH [/mm] | unmeasured | unmeasured | unmeasured | unmeasured | unmeasured |
| CLTE 30-380°C [$\times 10^{-7}$/°C] | 19.0 | 25.3 | 17.4 | 16.3 | 19.4 |
| CLTE 30-750°C [$\times 10^{-7}$/°C] | 19.8 | 26.1 | 18.2 | 17.0 | 20.4 |
| Glass transition point Tg | undetectab b | 709 | 782 | 719 | 702 |
| Deformation point Tf | 770 | 767 | 824 | undetectable | 780 |
| $10^4$°C | 1378 | 1349 | 1399 | 1377 | 1314 |
| $10^{3.5}$°C | 1442 | 1424 | 1465 | 1454 | 1389 |
| $10^3$°C | 1520 | 1512 | 1546 | 1541 | 1474 |
| $10^{2.5}$°C | 1620 | 1619 | 1650 | 1642 | 1572 |

(continued)

|  | No.61 | No.62 | No.63 | No.64 | No.65 |
|---|---|---|---|---|---|
| $10^2$°C | 1749 | 1749 | 1788 | 1759 | 1688 |
| Liquidus tem perature °C | undetectab b | undetectable | 1484 | 1370 | 1378 |
| L qudus viscosity °C | unmeasured | unmeasured | unmeasured | unmeasured | unmeasured |
| T ransm ittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| Transmittance @ 555nm [%] | unmeasured | unmeasured | unmeasured | unmeasured | unmeasured |
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [μm] | unmeasured | unmeasured | unmeasured | unmeasured | unmeasured |
| Cobr appearance | slightly brown | slightly brown | slightly brown | slightly brow n | slightly brow n |

[Table 27]

| | | No.66 | No.67 | No.68 | No.69 | No.70 |
|---|---|---|---|---|---|---|
| Composition [% by mass] | $SiO_2$ | 53.1 | 52.5 | 54.8 | 55.4 | 55.4 |
| | $Al_2O_3$ | 20.7 | 20.3 | 21 | 18.5 | 18.4 |
| | $B_2O_3$ | 0 | 0 | 0 | 4.5 | 2.3 |
| | $Li_2O$ | 0 | 0 | 0 | 0 | 0 |
| | $P_2O_5$ | 9.71 | 9.55 | 11.1 | 11.1 | 11.1 |
| | $TiO_2$ | 8.1 | 5.3 | 5.9 | 3.2 | 5.4 |
| | $Fe_2O_3$ | 0.006 | 0.009 | 0.006 | 0.009 | 0.007 |
| | $Na_2O$ | 0 | 0 | 0 | 0 | 0 |
| | $K_2O$ | 0.019 | 0.013 | 0.014 | 0.01 | 0.017 |
| | MgO | 0 | 0 | 0 | 0 | 0 |
| | CaO | 0 | 0.01 | 0 | 0.02 | 0.01 |
| | SrO | 0 | 0 | 0.001 | 0 | 0 |
| | BaO | 0 | 0 | 0 | 0 | 0 |
| | ZnO | 8.2 | 8.1 | 6.9 | 7 | 7.03 |
| | $SnO_2$ | 0.2 | 0.19 | 0.29 | 0.29 | 0.3 |
| | $ZrO_2$ | 0 | 4 | 0 | 0 | 0 |
| | $HfO_2$ | 0 | 0 | 0 | 0 | 0 |
| | $Y_2O_3$ | 0 | 0 | 0 | 0 | 0 |
| | Pt | 0.000001 | 0.000002 | 0.000001 | 0.000001 | 0.000001 |

(continued)

| | | No.66 | No.67 | No.68 | No.69 | No.70 |
|---|---|---|---|---|---|---|
| | Rh | 0.000001 | 0.000001 | 0.000001 | 0.000001 | 0.000001 |
| Compositon [ppm] | $V_2O_5$ | 1 | 0 | 0 | 0 | 0 |
| | $Cr_2O_3$ | 0 | 1 | 0 | 0 | 0 |
| | $MoO_3$ | 0 | 0 | 1 | 0 | 0 |
| | $MnO_2$ | 0 | 0 | 0 | 1 | 0 |
| | CoO | 0 | 0 | 0 | 0 | 1 |
| | CuO | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | ND | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 0 | 0 | 0 | 0 | 0 |
| $P_2O_5 \times TiO_2$ | | 78.7 | 50.6 | 65.5 | 35.5 | 59.9 |
| $(P_2O_5 \times TiO_2)/(P_2O_5+Al_2O_3)$ | | 2.6 | 1.7 | 2.0 | 1.2 | 2.0 |
| $B_2O_3/P_2O_5$ | | 0 | 0 | 0 | 0.41 | 0.21 |
| Pt+Rh | | 0.000002 | 0.000003 | 0.000002 | 0.000002 | 0.000002 |
| $Li_2O+Na_2O+K_2O$ | | 0.019 | 0.013 | 0.014 | 0.01 | 0.017 |
| MgO+CaO+SrO+BaO | | 0 | 0.01 | 0.001 | 0.02 | 0.01 |
| (MgO+CaO+SrO+BaO)/$P_2O_5$ | | 0 | 0.001 | 0.0001 | 0.0018 | 0.0009 |

[Table 28]

| | No.66 | No.67 | No.68 | No.69 | No.70 |
|---|---|---|---|---|---|
| Density [g/cm$^3$] | 2.56 | 2.59 | 2.47 | 2.40 | 2.43 |
| $\beta$-OH [/mm] | unmeasured | unmeasured | unmeasured | unmeasured | unmeasured |
| CLTE 30-380°C [$\times 10^{-7}$/°C] | 23.1 | 20.3 | 16.3 | 16.3 | 16.2 |
| CLTE 30-750°C [$\times 10^{-7}$/°C] | 23.8 | 21.3 | 17.1 | 16.7 | 16.8 |
| Glass transition point Tg | undetectable | 741 | 724 | undetectab b | 683 |
| Deformation point Tf | 768 | 795 | 799 | undetectab b | 740 |
| $10^4$°C | 1322 | 1321 | 1381 | 1378 | 1377 |
| $10^{3.5}$°C | 1396 | 1394 | 1457 | 1458 | 1457 |
| $10^3$°C | 1481 | 1477 | 1544 | 1549 | 1548 |
| $10^{2.5}$°C | 1580 | 1573 | 1644 | 1653 | 1651 |
| $10^2$°C | 1697 | 1687 | 1759 | 1774 | 1768 |
| Lqu dus temperature °C | 1387 | 1371 | 1393 | 1357 | 1339 |
| Liquidus viscosity °C | unmeasured | unmeasured | unmeasured | unmeasured | unmeasured |
| T ransm ittance @ 1200nm [%] | unmeasured | unmeasured | unmeasured | unmeasured | unmeasured |
| Transmittance @ 800nm [%] | unmeasured | unmeasured | unmeasured | unmeasured | unmeasured |
| T ransm ittance @ 555nm [%] | unmeasured | unmeasured | unmeasured | unmeasured | unmeasured |

(continued)

|  | No.66 | No.67 | No.68 | No.69 | No.70 |
|---|---|---|---|---|---|
| Transmittance @ 380nm [%] | unmeasured | unmeasured | unmeasured | unmeasured | unmeasured |
| Transmittance @ 300nm [%] | unmeasured | unmeasured | unmeasured | unmeasured | unmeasured |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of principal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [μm] | unmeasured | unmeasured | unmeasured | unmeasured | unmeasured |
| Cobr appearance | slightly brown | slightly brown | slightly brown | slightly brown | slightly brow n |

[Table 29]

| | | No.71 | No.72 | No.73 | No.74 | No.75 |
|---|---|---|---|---|---|---|
| Compositon [% by mass] | $SiO_2$ | 55.2 | 53.1 | 53.4 | 54.5 | 54.4 |
| | $Al_2O_3$ | 18.5 | 20.8 | 20.8 | 19.5 | 20.8 |
| | $B_2O_3$ | 2.4 | 5.1 | 2.5 | 2.6 | 1.5 |
| | $Li_2O$ | 0 | 0 | 0 | 0 | 0 |
| | $P_2O_5$ | 11.1 | 9.7 | 10.9 | 11 | 10.9 |
| | $TiO_2$ | 3.2 | 0 | 3.2 | 3.2 | 3.2 |
| | $Fe_2O_3$ | 0.011 | 0.007 | 2.1 | 2.1 | 2.1 |
| | $Na_2O$ | 0 | 0 | 0 | 0 | 0 |
| | $K_2O$ | 0.009 | 0.002 | 0.012 | 0.01 | 0.009 |
| | MgO | 0 | 0 | 0.01 | 0.01 | 0.01 |
| | CaO | 0 | 0 | 0 | 0 | 0 |
| | SrO | 0 | 0.002 | 0 | 0 | 0 |
| | BaO | 0 | 0 | 0 | 0 | 0 |
| | ZnO | 9.3 | 11.1 | 6.8 | 6.8 | 6.8 |
| | $SnO_2$ | 0.29 | 0.19 | 0.27 | 0.29 | 0.3 |
| | $ZrO_2$ | 0 | 0 | 0 | 0 | 0 |
| | $HfO_2$ | 0 | 0 | 0 | 0 | 0 |
| | $Y_2O_3$ | 0 | 0 | 0 | 0 | 0 |
| | Pt | 0.000002 | 0.000001 | 0.000001 | 0.000002 | 0.000001 |
| | Rh | 0.000001 | 0.000001 | 0.000001 | 0.000001 | 0.000001 |
| | $V_2O_5$ | 0 | 0 | 0 | 0 | 0 |
| | $Cr_2O_3$ | 0 | 0 | 0 | 0 | 0 |
| | $MoO_3$ | 0 | 0 | 0 | 0 | 0 |
| | $MnO_2$ | 0 | 0 | 0 | 0 | 0 |
| | CoO | 0 | 0 | 0 | 0 | 0 |
| | CuO | 1 | 0 | 0 | 0 | 0 |

(continued)

| Compositon [ppm] | | No.71 | No.72 | No.73 | No.74 | No.75 |
|---|---|---|---|---|---|---|
| Compositon [ppm] | $Nd_2O_3$ | 0 | 1 | 0 | 0 | 0 |
| | $WO_3$ | 0 | 0 | 1 | 0 | 0 |
| | ND | 0 | 0 | 0 | 1 | 0 |
| | $Sb_2O_3$ | 0 | 0 | 0 | 0 | 1 |
| | $As_2O_3$ | 0 | 0 | 0 | 0 | 0 |
| | $SO_3$ | 0 | 0 | 0 | 0 | 0 |
| $P_2O_5 \times TiO_2$ | | 35.5 | 0 | 34.9 | 35.2 | 34.9 |
| $(P_2O_5 \times TiO_2)/(P_2O_5 + Al_2O_3)$ | | 1.2 | 0 | 1.1 | 1.2 | 1.1 |
| $B_2O_3/P_2O_5$ | | 0.22 | 0.53 | 0.23 | 0.24 | 0.14 |
| Pt+Rh | | 0.000003 | 0.000002 | 0.000002 | 0.000003 | 0.000002 |
| $Li_2O + Na_2O + K_2O$ | | 0.009 | 0.002 | 0.012 | 0.01 | 0.009 |
| $MgO + CaO + SrO + BaO$ | | 0 | 0 | 0.01 | 0.01 | 0.01 |
| $(MgO + CaO + SrO + BaO)/P_2O_5$ | | 0 | 0 | 0.00092 | 0.00091 | 0.00092 |

[Table 30]

| | No.71 | No.72 | No.73 | No.74 | No.75 |
|---|---|---|---|---|---|
| Density [g/cm$^3$] | 2.46 | unmeasured | 2.47 | 2.46 | 2.48 |
| $\beta$-OH [/mm] | unmeasured | unmeasured | unmeasured | unmeasured | unmeasured |
| CLTE 30-380°C [$\times 10^{-7}$/°C] | 16.9 | unmeasured | 18.1 | 17.4 | 17.6 |
| CLTE 30-750°C [$\times 10^{-7}$/°C] | 17.5 | unmeasured | 18.8 | 18.1 | 18.4 |
| Glass transition point Tg | undetectable | unmeasured | 696 | 684 | 698 |
| Deformation point Tf | undetectable | unmeasured | undetectable | 882 | undetectable |
| $10^4$°C | 1372 | unmeasured | 1348 | 1361 | unmeasured |
| $10^{3.5}$°C | 1452 | unmeasured | 1424 | 1437 | unmeasured |
| $10^3$°C | 1542 | unmeasured | 1511 | 1526 | unmeasured |
| $10^{2.5}$°C | 1646 | unmeasured | 1613 | 1628 | unmeasured |
| $10^2$°C | 1766 | unmeasured | 1734 | 1749 | unmeasured |
| Liquidus temperature °C | 1370 | unmeasured | unmeasured | unmeasured | unmeasured |
| Liquidus viscosity °C | unmeasured | unmeasured | unmeasured | unmeasured | unmeasured |
| T ransm ittance @ 1200rm [%] | unmeasured | unmeasured | 1.0 | 0.9 | 0.9 |
| Transmittance @ 800nm [%] | unmeasured | unmeasured | 8.4 | 7.5 | 8.1 |
| Transmittance @ 555rm [%] | unmeasured | unmeasured | 2.3 | 1.6 | 2.5 |
| Transmittance @ 380nm [%] | unmeasured | unmeasured | 0.0 | 0.0 | 0.0 |
| Transmittance @ 300nm [%] | unmeasured | unmeasured | 0.0 | 0.0 | 0.0 |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of pricipal surface Ra [nm] | unmeasured | unmeasured | unmeasured | unmeasured | unmeasured |

(continued)

| | No.71 | No.72 | No.73 | No.74 | No.75 |
|---|---|---|---|---|---|
| Surface roughness of end surface Ra [nm] | unmeasured | unmeasured | unmeasured | unmeasured | unmeasured |
| Waviness [μm] | unmeasured | unmeasured | unmeasured | unmeasured | unmeasured |
| Cobr appearance | slightly brow n | slightly brow n | black | black | b bck |

[Table 31]

| | | No.76 | No.77 | No.78 | No.79 | No.80 |
|---|---|---|---|---|---|---|
| Compositon [% by mass] | $SiO_2$ | 54.9 | 53.8 | 53.4 | 53.1 | 53.0 |
| | $Al_2O_3$ | 21 | 21 | 20.9 | 20.8 | 20.8 |
| | $B_2O_3$ | 2.6 | 4.1 | 3.7 | 0 | 0 |
| | $Li_2O$ | 0 | 0 | 0 | 0 | 0 |
| | $P_2O_5$ | 9.1 | 10 | 10.1 | 10.0 | 10.0 |
| | $TiO_2$ | 3.2 | 0.8 | 0.82 | 0.81 | 0.003 |
| | $Fe_2O_3$ | 2.1 | 0 | 0.008 | 0.007 | 0.008 |
| | $Na_2O$ | 0 | 0 | 0 | 0 | 0 |
| | $K_2O$ | 0.01 | 0.001 | 0.01 | 0.004 | 0.002 |
| | MgO | 0.01 | 0 | 0 | 0 | 0 |
| | CaO | 0 | 0 | 0.01 | 0.01 | 0.01 |
| | SrO | 0 | 0 | 0 | 0 | 0 |
| | BaO | 0 | 0 | 0 | 0 | 0 |
| | ZnO | 6.8 | 10.1 | 10.8 | 15.1 | 16.0 |
| | $SnO_2$ | 0.29 | 0.2 | 0.21 | 0.21 | 0.21 |
| | $ZrO_2$ | 0 | 0 | 0 | 0 | 0 |
| | $HfO_2$ | 0 | 0 | 0 | 0 | 0 |
| | $Y_2O_3$ | 0 | 0 | 0 | 0 | 0 |
| | Pt | 0.000001 | 0.000001 | 0.000001 | 0.000001 | 0.000001 |
| | Rh | 0.000001 | 0.000001 | 0.000001 | 0.000001 | 0.000001 |
| Compositon [ppm] | $V_2O_5$ | 0 | 0 | 0 | 0 | 0 |
| | $Cr_2O_3$ | 0 | 0 | 0 | 0 | 0 |
| | $MoO_3$ | 1 | 1 | 1 | 1 | 1 |
| | $MnO_2$ | 0 | 0 | 0 | 0 | 0 |
| | CoO | 0 | 0 | 0 | 0 | 0 |
| | CuO | 0 | 0 | 0 | 0 | 0 |
| | $Nd_2O_3$ | 0 | 0 | 0 | 0 | 0 |
| | $WO_3$ | 0 | 0 | 0 | 0 | 0 |
| | ND | 0 | 0 | 0 | 0 | 0 |
| | $Sb_2O_3$ | 0 | 0 | 0 | 0 | 0 |
| | $As_2O_3$ | 0 | 0 | 0 | 0 | 0 |
| | $SO_3$ | 0 | 0 | 0 | 0 | 0 |
| $P_2O_5 \times TiO_2$ | | 29.1 | 8.0 | 8.3 | 8.1 | 0.03 |

(continued)

|  | No.76 | No.77 | No.78 | No.79 | No.80 |
|---|---|---|---|---|---|
| $(P_2O_5 \times TiO_2)/(P_2O_5+Al_2O_3)$ | 0.97 | 0.26 | 0.27 | 0.26 | 0.001 |
| $B_2O_3/P_2O_5$ | 0.29 | 0.41 | 0.37 | 0 | 0 |
| Pt+Rh | 0.000002 | 0.000002 | 0.000002 | 0.000002 | 0.000002 |
| $Li_2O+Na_2O+K_2O$ | 0.01 | 0 | 0.01 | 0.004 | 0.002 |
| $Mg0+Ca0+Sr0+Ba0$ | 0.01 | 0 | 0.01 | 0.01 | 0.01 |
| $(MgO+CaO+SrO+BaO)/P_2O_5$ | 0.0011 | 0 | 0.001 | 0.001 | 0.001 |

[Table 32]

|  | No.76 | No.77 | No.78 | No.79 | No.80 |
|---|---|---|---|---|---|
| Density [g/cm$^3$] | 2.49 | unmeasured | 2.48 | 2.60 | 2.61 |
| $\beta$-OH [/mm] | unmeasured | unmeasured | unmeasured | unmeasured | unmeasured |
| CLTE 30-380°C [$\times 10^{-7}$/°C] | 18.9 | 18.6 | 18.1 | 20.3 | 20.6 |
| CLTE 30-750°C [$\times 10^{-7}$/°C] | 19.6 | 19.3 | 24.7 | 26.7 | 26.0 |
| Glass transition point Tg | 703 | unmeasured | 703 | 714 | unmeasured |
| Deformation point Tf | undetectable | unmeasured | 792 | 775 | unmeasured |
| $10^4$°C | 1338 | 1337 | 1335 | 1327 | 1327 |
| $10^{3.5}$°C | 1413 | 1413 | 1412 | 1403 | 1402 |
| $10^3$°C | 1499 | 1499 | 1501 | 1491 | 1490 |
| $10^{2.5}$°C | 1598 | 1599 | 1601 | 1591 | 1590 |
| $10^2$°C | 1715 | 1714 | 1712 | 1704 | 1705 |
| Liquidus temperature °C | 1394 | 1348 | 1343 | 1436 | 1456 |
| Liquidus viscosity °C | unmeasured | 3.9 | 3.9 | 3.3 | 3.2 |
| T ransm ittance @ 1200rm [%] | 0.9 | unmeasured | unmeasured | unmeasured | unmeasured |
| Transmittance @ 800nm [%] | 8.4 | unmeasured | unmeasured | unmeasured | unmeasured |
| **Transm**ittance @ 555rm [%] | 2.5 | unmeasured | unmeasured | unmeasured | unmeasured |
| Transmittance @ 380nm [%] | 0.0 | unmeasured | unmeasured | unmeasured | unmeasured |
| Transmittance @ 300nm [%] | 0.0 | unmeasured | unmeasured | unmeasured | unmeasured |
| L* | unmeasured | unmeasured | unmeasured | unmeasured | unmeasured |
| a* | unmeasured | unmeasured | unmeasured | unmeasured | unmeasured |
| b* | unmeasured | unmeasured | unmeasured | unmeasured | unmeasured |
| Surface roughness of pricipal surface Ra [nm] | unmeasured | unmeasured | unmeasured | unmeasured | unmeasured |
| Surface roughness of end surface Ra [nm] | unmeasured | unmeasured | unmeasured | unmeasured | unmeasured |
| Waviness [$\mu$m] | unmeasured | unmeasured | unmeasured | unmeasured | unmeasured |

(continued)

|  | No.76 | No.77 | No.78 | No.79 | No.80 |
|---|---|---|---|---|---|
| Cobr appearance | black | c bar and colorless | clear and colorless | clear and colorless | clear and colorless |

First, raw materials were formulated in the form of an oxide, a hydroxide, a carbonate or a nitrate or other forms to provide each of glasses having respective compositions shown in the tables, thus obtaining a raw material batch (where the compositions shown in Table 1 are analysis values of actually produced glasses, and the analysis was performed with a scanning X-ray fluorescence spectrometer ZSX series manufactured by Rigaku Corporation). The obtained glass batch was melted at 1200 to 1800°C for 0.5 to 400 hours and the obtained molten glass was drawn by a roll process while being cooled, thus forming it into shape to have a width of 100 mm and a thickness of 5 mm. Thereafter, the glass was subjected to heat treatment at a temperature 150 to 50°C lower than the glass transition point for 30 minutes using a annealing furnace and the annealing furnace was then cooled to room temperature at - 100°C/h, thus obtaining each of the glasses Nos. 1 to 80.

The produced glass samples were processed by physical polishing, chemical polishing, chemical etching, fire blasting or other types of processing to produce samples for use in evaluations for $\beta$-OH value, viscosity, liquidus temperature, liquidus viscosity, density, coefficient of linear thermal expansion (CLTE), Young's modulus, modulus of rigidity, Poisson's ratio, and so on, and the evaluations were made on these samples for evaluations. Furthermore, the obtained molten glasses were each formed into shape to have a lengthwise dimension of 400 mm by an overflow process and then subjected to heat treatment at a temperature 150 to 50°C lower than the glass transition point for 30 minutes using a slow cooling furnace, and the slow cooling furnace was then cooled to room temperature at -100°C/h, thus obtaining glass sheets. The obtained glass sheets were measured in terms of surface roughness Ra of their principal surfaces, surface roughness Ra of their end surfaces, and waviness.

The respective contents of Pt and Rh in the produced samples were analyzed with an ICP-MS instrument (Agilent 8800 manufactured by Agilent Technologies, Inc.) in the following manner. First, the produced glass samples were each ground and wetted with pure water and, then, perchloric acid, nitric acid, sulfuric acid, hydrofluoric acid or the like was added to the glass sample to dissolve the glass sample with the acid. Thereafter, the respective contents of Pt and Rh in the sample were measured with ICP-MS (inductively coupled plasma mass spectrometry). Based on calibration curves made using prepared Pt and Rh solutions the concentrations of which had been known, the respective contents of Pt and Rh in each measurement sample were determined. The measurement modes were a He gas/HMI (low mode) for Pt and a HEHe gas/HMI (middle mode) for Rh. The mass numbers were 198 for Pt and 103 for Rh. Furthermore, the contents of $Li_2O$ in the produced samples were analyzed with an atomic absorption spectrometer (contrAA 600 manufactured by Analytik Jena). The manner of the analysis for this component was fundamentally the same as the analysis for Pt and Rh, such as the procedure of dissolving the glass sample and the use of the calibration curve. The other components were measured, like Pt, Rh, and $Li_2O$, by ICP-MS or atomic absorption spectrometry. Otherwise, a calibration curve was made with an XRF (X-ray fluorescence) analyzer (ZSX Primus IV manufactured by Rigaku Corporation) using, as a sample for determining the calibration curve, a glass sample the concentration of which had been known by previously examining it with an ICP-MS or atomic absorption spectrometer, and the actual content of the component was determined from an XRF analysis value of the measurement sample based on the calibration curve. In doing XRF analysis, the tube voltage, the tube current, the exposure time, and so on were adjusted according to the analytical component as needed.

The density was evaluated by the Archimedes' method.

The $\beta$-OH value was determined by measuring the transmittance of the glass with an infrared spectrophotometer (FT-IR Frontier manufactured by PerkinElmer Inc.) and using the following equation. The scan speed was 100 $\mu$m/min, the sampling pitch was 1 cm$^{-1}$, and the scan times were ten per measurement.

$$\beta\text{-OH value} = (1/X)\log(T_1/T_2)$$

X: glass thickness
T1: transmittance at a reference wavenumber of 3846 cm$^{-1}$
T2: minimum transmittance at a hydroxyl group absorption wavenumber of around 3600 cm$^{-1}$

The coefficient of linear thermal expansion was evaluated, using a sample processed to a length of 20 mm and a diameter of 3.8 mm, from its average coefficients of linear thermal expansion measured in a temperature range of 30 to 380°C and a temperature range of 30 to 750°C. A dilatometer manufactured by NETZSCH was used for the measurement. Furthermore, each glass sample was evaluated in terms of glass transition point and deformation point by measuring the thermal expansion curve in a temperature range of 30 to 750°C of the glass sample with the same measurement instrument and calculating the inflection points of the curve.

The high-temperature viscosity was evaluated in the following manner by the platinum ball pulling-up method. A mass of glass sample was crushed to an appropriate size and loaded into an alumina-made crucible. Subsequently, the alumina crucible was heated to turn the sample into a melt, the measured values of the glass viscosity at a plurality of temperatures were determined, the constant of the Vogel-Fulcher equation was calculated, a viscosity curve was created, and the temperature at each of viscosities ($10^4$ dPa·s, $10^{3.5}$ dPa·s, $10^3$ dPa·s, $10^{2.5}$ dPa·s, and $10^2$ dPa·s,) was calculated from the viscosity curve.

The liquidus temperature was evaluated in the following manner. First, glass powder sized between 300 micrometers and 500 micrometers was filled in a platinum boat with a size of approximately 120 × 20 × 10 mm, the boat was put into an electric furnace, and the glass powder was melted at 1400 to 1800°C for 30 minutes in the furnace. Thereafter, the platinum boat was moved into an electric furnace having a linear temperature gradient and held therein for 20 hours to allow the glass to precipitate devitrified matter. The measurement sample was air cooled to room temperature, the devitrified matter precipitating at the interface between the platinum boat and the glass was observed, and the temperature at the portion where the devitrified matter precipitated was calculated as a liquidus temperature from the temperature gradient graph of the electric furnace. Furthermore, the obtained liquidus temperature was interpolated into the high-temperature viscosity curve of the glass and the viscosity in the viscosity curve corresponding to the liquidus temperature was evaluated as a liquidus viscosity.

The transmittance, the lightness, and the chromaticity were evaluated with a spectro-photometer using a 4 mm thick sample having s surface roughness equivalent to an optically polished glass surface. A spectro-photometer V-670 manufactured by JASCO Corporation was used for the measurement. The spectro-photometer V-670 was fitted with an integrating sphere unit "ISN-723" and, therefore, the measured transmittance corresponds to the total transmittance. Furthermore, the measurement wavelength region was 200 to 2500 nm, the scan speed was 200 nm/min, the sampling pitch was 1 nm, and the band widths were 5 nm in a wavelength region of 200 to 800 nm and 20 nm in the other wavelength region. Prior to the measurement, a baseline correction (adjustment to 100%) and a dark measurement (adjustment to 0%) were performed. The dark measurement was conducted in a state where a barium sulfate plate attached to ISN-723 was removed. Using the measured transmittance, tristimulus values X, Y, and Z were calculated based on JIS Z 8781-4:2013 and its corresponding International Standard. The lightness and chromaticity were calculated from each stimulus value (light source C/10°).

The surface roughnesses Ra of the principal surface and end surface of the glass were measured by a method based on JIS B 0601:2001.

The waviness was a value measured in terms of WCA (filtered-wave center line waviness) described in JIS B 0601:2001 with a stylus surface profile measurement device. This measurement was conducted by a method based on SEMI STD D15-1296 "measurement method for surface waviness of FPD glass substrate". The cutoff value during measurement was 0.8 to 8 mm and measurement was made for a length of 300 mm in a direction perpendicular to the direction of drawing of the glass during forming into shape.

The color appearance was determined visually.

The glasses in Example Nos. 1 to 80 of the present invention were materials having a low coefficient of linear thermal expansion, high thermal resistance, and high thermal shock resistance. The glasses in Nos. 1 to 22, 24 to 48, 51 to 52, and 77 to 80 were clear and colorless. The glasses in Nos. 23, 49 to 50, and 53 to 76 were colored in black or slightly brown.

[Industrial Applicability]

The glass according to the present invention is preferably used for a cooker top plate, a fireproof window, a heat-resistant plate or utensil or a construction member. Specifically, the glass according to the present invention is suitable as a front window of an oil stove, a wood stove or the like, a substrate for high-technology products, such as a color filter substrate or an image sensor substrate, a setter for firing electronic components, a light diffuser plate, a furnace core tube for producing semiconductors, a mask for producing semiconductors, an optical lens, a dimension measurement member, a communication member, a construction member, a chemical reaction container, an electromagnetic cooker top plate, a heat-resistant plate or utensil, a heat-resistant cover, a window glass for fire door, a member for astrometric telescopes, a member for space optics, a coloring material, a light absorber, a temperature regulating material, a sound insulator, a dielectric member, a linear thermal expansion coefficient adjusting material, a battery member, a member for increasing the strength of resin or other materials, a display member, a member for chemical strengthening, and so on. Furthermore, when the glass according to the present invention is a crystallized glass, it is preferably used for a cooker top plate, a fireproof window, a heat-resistant plate or utensil or a construction member. However, the applications of the glass according to the present invention having a low coefficient of linear thermal expansion are not limited to the above. Furthermore, the glass according to the present invention may be used in only one of the above applications or in a combination of them. Examples of the combination include an electromagnetic cooker top plate having a display function and a smartphone with a display subjected to chemical strengthening treatment.

**Claims**

1. A glass containing, in terms of % by mass, 45 to 80% $SiO_2$, 10 to 30% $Al_2O_3$, 0 to 12% $B_2O_3$, and 0 to 5% $Li_2O$.

2. The glass according to claim 1, containing, in terms of % by mass, more than 0% $P_2O_5$.

3. The glass according to claim 1 or 2, containing, in terms of % by mass, more than 0% $TiO_2$.

4. The glass according to claim 3, containing, in terms of % by mass, over 0 to 8% $B_2O_3$, 0 to 3% $Li_2O$, and 6.5 to 20% $P_2O_5$.

5. The glass according to claim 1 or 2, containing, in terms of % by mass, more than 0% $Fe_2O_3$.

6. The glass according to claim 1 or 2, containing, in terms of % by mass, not more than 10% $HfO_2$.

7. The glass according to claim 1 or 2, containing, in terms of % by mass, not more than 0.05% Pt and not more than 0.05% Rh.

8. The glass according to claim 1 or 2, containing, in terms of % by mass, more than 0% $SnO_2$.

9. The glass according to claim 1 or 2, containing, in terms of % by mass, not more than 12.5% ZnO.

10. The glass according to claim 1 or 2, containing, in terms of % by mass, not more than 15% $Li_2O+Na_2O+K_2O$.

11. The glass according to claim 1 or 2, containing, in terms of % by mass, more than 0% $ZrO_2$.

12. The glass according to claim 1 or 2, wherein $(P_2O_5 \times TiO_2)/(Al_2O_3+P_2O_5)$ is, in terms of % by mass, not less than 0.01.

13. The glass according to claim 1 or 2, wherein $P_2O_5 \times TiO_2$ is, in terms of % by mass, not less than 0.22.

14. The glass according to claim 1 or 2, wherein in terms of % by mass, $MgO+CaO+SrO+BaO$ is not more than 5.9%, $Li_2O+Na_2O+K_2O$ is not more than 2.6%, and $P_2O_5 \times TiO_2$ is not less than 0.01.

15. The glass according to claim 1 or 2, wherein a coefficient of linear thermal expansion at 30 to 750°C is not more than 60 $\times 10^{-7}$/°C.

16. The glass according to claim 1 or 2, wherein a transmittance at a thickness of 4 mm and a wavelength of 555 nm is not less than 0.1%.

17. The glass according to claim 1 or 2, being used for a cooker top plate, a fireproof window, a heat-resistant plate or utensil or a construction member.

18. A glass containing, in terms of % by mass, 45 to 80% $SiO_2$, 10 to 30% $Al_2O_3$, 0 to 12% $B_2O_3$, over 0 to 20% $P_2O_5$, 0 to 5% $MgO+CaO+SrO+BaO$, and 0 to 5% $Li_2O+Na_2O+K_2O$, having a ratio $(P_2O_5 \times TiO_2)/(Al_2O_3+P_2O_5)$ of not less than 1.4, and having a coefficient of linear thermal expansion of not more than 40 $\times 10^{-7}$/°C at 30 to 750°C.

19. A glass containing, in terms of % by mass, 45 to 80% $SiO_2$, 10 to 30% $Al_2O_3$, 0 to 12% $B_2O_3$, over 0 to 20% $P_2O_5$, not more than 5% $Li_2O$, over 0 to 20% $ZrO_2$, 0 to 8% $MgO+CaO+SrO+BaO$, and 0 to 2.9% $Li_2O+Na_2O+K_2O$, having a ratio $(MgO+CaO+SrO+BaO)/P_2O_5$ of not more than 3.8, and having a coefficient of linear thermal expansion of not more than 40 $\times 10^{-7}$/°C at 30 to 750°C.

20. The glass according to claim 18 or 19, containing, in terms of % by mass, more than 0% $TiO_2$.

21. A cooker top plate having a coefficient of linear thermal expansion of $5 \times 10^{-7}$ to $40 \times 10^{-7}$/°C at 30 to 380°C and 30 to 750°C and a transmittance of not less than 0.1% at a thickness of 4mm and a wavelength of 555 nm.

**22.** A method for producing the glass according to claim 1 or 2,

the method comprising the steps of: melting a glass raw material to obtain a molten glass; and forming the molten glass into shape,

wherein a method for forming the molten glass into shape is at least one selected from among an overflow process, a float process, a down-draw process, a slot down process, a redraw process, a containerless process, a blow process, a press forming process, a roll process, a bushing process, and a tube draw process.

# EP 4 729 493 A1

## INTERNATIONAL SEARCH REPORT

| | International application No. |
|---|---|
| | **PCT/JP2024/019059** |

| | | |
|---|---|---|
| **A.** | **CLASSIFICATION OF SUBJECT MATTER** | |

*C03C 3/097*(2006.01)i; *C03C 3/083*(2006.01)i; *C03C 3/091*(2006.01)i; *F24C 15/10*(2006.01)i; *H05B 6/12*(2006.01)i
FI:  C03C3/097; C03C3/083; C03C3/091; F24C15/10 B; H05B6/12 305

According to International Patent Classification (IPC) or to both national classification and IPC

| | | |
|---|---|---|
| **B.** | **FIELDS SEARCHED** | |

Minimum documentation searched (classification system followed by classification symbols)

C03C1/00-C03C14/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

INTERGLAD

| | | |
|---|---|---|
| **C.** | **DOCUMENTS CONSIDERED TO BE RELEVANT** | |

| Category* | Citation of document, with indication, where appropriate, of the relevant passages | Relevant to claim No. |
|---|---|---|
| X | WO 2016/194693 A1 (NIPPON ELECTRIC GLASS CO., LTD.) 08 December 2016 (2016-12-08)<br>    paragraphs [0077]-[0094] | 1-11, 15-17, 21-22 |
| X | JP 2016-529197 A (CORNING INCORPORATED) 23 September 2016 (2016-09-23)<br>    paragraphs [0166]-[0178] | 1-7, 9-10, 12-13, 15-17, 21-22 |
| X | JP 2007-254279 A (SCHOTT AG) 04 October 2007 (2007-10-04)<br>    paragraphs [0065]-[0080] | 1-3, 5-7, 9-13, 15-17, 21-22 |
| X | CHENG, Kangguo, Carbon effects on crystallization kinetics of Li2O-Al2O3-SiO2 glasses, Journal of Non-Crystalline Solids, 1998, vol. 238, p. 152-157<br>    particularly, 3. Experimental procedures | 19-20 |
| A | JP 2001-305320 A (OSAKA TOKUSHU GLASS KK) 31 October 2001 (2001-10-31) | 1-22 |

| | |
|---|---|
| ✓ Further documents are listed in the continuation of Box C. | ✓ See patent family annex. |

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **19 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

56

**INTERNATIONAL SEARCH REPORT**

| International application No. |
|---|
| **PCT/JP2024/019059** |

**C. DOCUMENTS CONSIDERED TO BE RELEVANT**

| Category* | Citation of document, with indication, where appropriate, of the relevant passages | Relevant to claim No. |
|---|---|---|
| A | WO 2021/251246 A1 (AGC INC.) 16 December 2021 (2021-12-16) | 1-22 |

Form PCT/ISA/210 (second sheet) (July 2022)

**INTERNATIONAL SEARCH REPORT**
Information on patent family members

International application No.

**PCT/JP2024/019059**

| Patent document cited in search report | | | Publication date (day/month/year) | Patent family member(s) | | | Publication date (day/month/year) |
|---|---|---|---|---|---|---|---|
| WO | 2016/194693 | A1 | 08 December 2016 | US 2018/0148367 A1<br>paragraphs [0079]-[0092]<br>CN 107406303 A<br>KR 10-2018-0015611 A | | | |
| JP | 2016-529197 | A | 23 September 2016 | US 2015/0064474 A1<br>paragraphs [0157]-[0164]<br>WO 2015/031427 A2<br>KR 10-2016-0048973 A<br>CN 105899469 A | | | |
| JP | 2007-254279 | A | 04 October 2007 | US 2009/0018007 A1<br>paragraphs [0061]-[0092]<br>EP 1837312 A1<br>CN 101269910 A | | | |
| JP | 2001-305320 | A | 31 October 2001 | (Family: none) | | | |
| WO | 2021/251246 | A1 | 16 December 2021 | US 2023/0103501 A1<br><br>CN 115697929 A<br>KR 10-2023-0023643 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S3921049 B
- JP S4020182 B
- JP H01308845 A